# EUROPEAN PATENT APPLICATION

(11) **EP 4 622 282 A1**
(43) Date of publication of application: **24.09.2025**
(21) Application number: 23925004.6
(22) Date of filing: 21.11.2023
(51) Int. Cl.: H04N 23/63, H04N 23/57

(54) **SNAPSHOT METHOD, TERMINAL DEVICE, AND STORAGE MEDIUM**

(30) Priority: 27.02.2023 CN 202310216792
(71) Applicant: Honor Device Co., Ltd., Shenzhen, Guangdong 518040 (CN)
(72) Inventor: YI, Jie, Shenzhen, Guangdong 518040 (CN)
(74) Representative: Thun, Clemens
(86) International application number: PCT/CN2023/132996
(87) International publication number: WO 2024/179053

(57) **Abstract**

This application provides a capture method, a terminal device, and a storage medium. The method includes: displaying a photographing preview interface in a photographing mode of a camera, where the photographing preview interface displays a first icon, and the first icon is in a disabled state; saving, to a gallery in response to an operation performed by a user on a shooting button at a first moment, a first image frame captured at the first moment; enabling a first function in response to an operation performed by the user on the first icon, and switching the first icon from the disabled state to an enabled state; displaying, in the photographing preview interface, a second image frame captured in real time at a second moment; and saving the second image frame to the gallery in response to an operation performed by the user on the shooting button at a third moment, where the second moment is earlier than the third moment. Using a technical solution provided in an embodiment of this application can improve quality of a photo, thereby improving user experience of using a camera.

## Description

This application claims priority to Chinese patent application No. 202310216792.5, filed with the China National Intellectual Property Administration on February 27, 2023 and entitled "CAPTURE METHOD, TERMINAL DEVICE, AND STORAGE MEDIUM", which is incorporated herein by reference in its entirety.

### TECHNICAL FIELD

This application relates to the field of image processing, and in particular, to a capture method, a terminal device, and a storage medium.

### BACKGROUND

In daily life, when performing photographing by using an electronic device such as a mobile phone, a user taps a shooting button to complete the photographing. When a dynamic scene is encountered, for example, an object in a preview picture is moving, the user wants to shoot a magic moment of the moving object. However, when the user sees the magic moment and then taps the shooting button to cause a camera to perform photographing, the mobile phone cannot accurately capture the magic moment of the moving object due to a moving state of the object and a reaction delay and an action delay of the user. As a result, user experience is low.

### SUMMARY

In view of the foregoing description, this application provides a capture method, a terminal device, and a storage medium, so as to resolve a problem that a camera cannot record a magic moment of motion in a timely manner when a moving object is encountered, thereby improving photographing experience of a user.

Some implementations of this application provide a capture method, a terminal device, and a storage medium. The following describes this application from a plurality of aspects. For implementations and beneficial effects of the following plurality of aspects, references may be made to each other.

According to a first aspect, this application provides a capture method. The method includes: displaying a photographing preview interface in a photographing mode of a camera, where the photographing preview interface displays a first icon, and the first icon is in a disabled state; saving, to a gallery in response to an operation performed by a user on a shooting button at a first moment, a first image frame captured at the first moment; enabling a first function in response to an operation performed by the user on the first icon, and switching the first icon from the disabled state to an enabled state; displaying, in the photographing preview interface, a second image frame captured in real time at a second moment; and saving the second image frame to the gallery in response to an operation performed by the user on the shooting button at a third moment, where the second moment is earlier than the third moment.

In this embodiment of this application, the first function may be referred to as a capture function, and the first icon is an icon that indicates a state of the first function and that enables or disables the first function. The shooting button is a shooting icon, or may be referred to as a shutter. In a case in which the first function is disabled, the terminal device saves, to the gallery, an image frame (namely, a picture) captured at a moment at which the user performs an operation on the shooting button. In a case in which the first function is enabled, in response to an operation performed by the user on the shooting button, the terminal device may save an image frame before the operation to the gallery, that is, complete manual capture.

According to the capture method provided in this embodiment of this application, when the first icon in the photographing preview interface is disabled, the electronic device may save a corresponding image frame in real time in response to a photographing operation of the user. When the first icon is enabled, the electronic device may capture an image frame before (or after) the operation in response to the photographing operation of the user, so that the user quickly enables the capture function in a dynamic scene, and disables the capture function in a non-dynamic scene to obtain a better photographing effect, so as to adapt to different shooting scenes.

In some embodiments, the method further includes: saving a third image frame to the gallery in response to an operation performed by the user on the shooting button at a fourth moment, where a fifth moment at which the third image frame is captured is later than the fourth moment.

According to the capture method provided in this embodiment of this application, the terminal device may determine an optimal frame from pictures in time periods before and after an operation on the shooting icon. Therefore, in the solution of this application, regardless of whether a reaction moment during photographing is delayed or advanced, an optimal frame in a photographing process can be obtained through capture, and a best moment can be recorded, meeting a user requirement to the greatest extent.

In some embodiments, a first setting item of the camera is a disabled state.

In this embodiment of this application, the first setting item may be a setting item that enables an automatic capture function, that is, an automatic capture switching item. When the first setting item is the disabled state, the automatic capture function is disabled, and only manual capture is supported.

In some embodiments, when the first setting item of the camera is an enabled state, in a case of detecting that a real-time image frame displayed in the photographing preview interface undergoes a transition, a fourth image frame is automatically saved to the gallery, where a moment at which the fourth image frame is captured is earlier than a moment at which the transition occurs.

In this embodiment of this application, when the first setting item of the camera is the enabled state, the automatic capture function is enabled. In this case, the terminal device may support both automatic capture and manual capture.

When collecting an image frame, the terminal device may identify, based on the collected image frame, a scene to be shot by the camera. When it is determined that the shooting scene changes, that is, a transition occurs, for example, when the shooting scene changes from a scene 1 to a scene 2, the terminal device generates a photo based on an image frame with a highest comprehensive score in the scene 1, and stores the photo in the gallery to complete automatic capture.

According to the capture method provided in this embodiment of this application, the terminal device may support manual capture, and support simultaneous execution of automatic capture and manual capture. This meets a capture requirement of the user, and improves photographing experience of the user. In addition, a photo finally output by the terminal device is a frame of picture with a highest comprehensive score in an entire scene, that is, an optimal frame in the entire scene. Therefore, the user does not need to manually tap the shooting icon, so that a problem of a reaction lag is overcome, and a best moment, that is, a magic moment can be recorded, thereby improving photographing experience of the user.

In some embodiments, the second image frame is an image with a highest comprehensive score among a plurality of image frames in a first time period before the third moment and a plurality of image frames in a second time period after the third moment; and/or
the third image frame is an image with a highest comprehensive score among a plurality of image frames in a first time period before the fourth moment and a plurality of image frames in a second time period after the fourth moment.

The comprehensive score includes an image quality score, a portrait score, and an action score.

For example, the terminal device may preset weighting coefficients respectively corresponding to the image quality score, the portrait score, and the action score. The terminal device performs weighted averaging on an image quality score, a portrait score, and an action score of a frame of picture based on preset weighting coefficients, to obtain a comprehensive score of the frame of picture. In this embodiment of this application, the terminal device may alternatively determine the comprehensive score in another manner, which is not limited.

In some embodiments, a length of the first time period is 1 second, and a length of the second time period is 0.5 second.

In some embodiments, the photographing preview interface further includes a fourth icon, and the method further includes: when the fourth icon is in an enabled state and the first icon is in the disabled state, in response to the operation performed by the user on the first icon, switching the first icon from the disabled state to the enabled state and enabling the first function, and switching the fourth icon from the enabled state to a disabled state and disabling a second function; and in response to the operation performed by the user on the first icon, switching the first icon from the enabled state to the disabled state and disabling the first function, and switching the fourth icon from the disabled state to the enabled state and enabling the second function.

In some embodiments, the photographing preview interface further includes a fourth icon, and the method further includes: when the first icon is in the enabled state and the fourth icon is in a disabled state, in response to an operation performed by the user on the fourth icon, switching the fourth icon from the disabled state to an enabled state and enabling a second function, and switching the first icon from the enabled state to the disabled state and disabling the first function; and in response to the operation performed by the user on the fourth icon, switching the fourth icon from the enabled state to the disabled state and disabling the second function, and switching the first icon from the disabled state to the enabled state and enabling the first function.

In this embodiment of this application, the fourth icon may be an icon of an AI photography function. The terminal device may memorize a selection of the user, for example, before the first function is enabled, the user enables a selection of the second function, and before the second function is enabled, the user enables a selection of the first function, and may automatically enable a corresponding photographing function quickly based on the memorized selection of the user, thereby improving efficiency of switching the photographing function.

In some embodiments, the method further includes: The photographing preview interface further includes a fifth icon, and before the first function is enabled, the fifth icon is in a first state. The first state is any one of the following: A flash is enabled, the flash is disabled, the flash is automatic, or the flash is constantly on. The method further includes: in response to the operation performed by the user on the first icon, switching the first icon from the disabled state to the enabled state and enabling the first function, and displaying the fifth icon as an inoperable state and disabling the flash.

In some embodiments, the method further includes: in response to the operation performed by the user on the first icon, switching the first icon from the enabled state to the disabled state and disabling the first function, and restoring the fifth icon to the first state.

In this embodiment of this application, the flash and the first function are mutually exclusive, and enabling of the flash severely affects photographing quality of the first function. When the first function is enabled, the terminal device may display the fifth icon of the flash as an inoperable state, so as to disable the flash and prevent the user from enabling the flash by mistake.

In some embodiments, the method further includes: when the first icon is in the enabled state, if a shooting scene of the camera enters a scene of second ambient light luminance from first ambient light luminance, disabling the first function and switching the first icon from the enabled state to the disabled state, where the first ambient light luminance is greater than the second ambient light luminance.

In some embodiments, the method further includes: when ambient light luminance of the shooting scene of the camera is less than third ambient light luminance, and the first icon is in the disabled state, in response to the operation performed by the user on the first icon, enabling the first function, switching the first icon from the disabled state to the enabled state, and displaying sixth information in a pop-up box, where the sixth information is used to prompt that the current shooting scene is not suitable for enabling the first function.

In this embodiment of this application, scenes of the second ambient light luminance and the third ambient light luminance are scenes not suitable for the capture function, for example, scenes such as a night scene, a dark light environment, and a highly dynamic scene, that is, scenes in which the ambient luminance is less than or equal to a preset luminance threshold. The scene of the first ambient light luminance is a scene suitable for the capture function, that is, a scene in which the ambient luminance is greater than the preset luminance threshold, and may also be referred to as a normal light environment.

In a case in which the first function is enabled, if the shooting scene of the terminal device enters the scene of the second ambient light luminance from the first ambient light luminance, the first function is automatically disabled, and another photographing function such as an AI photography function is enabled. In addition, after the first function is automatically disabled, the terminal device may display fifth information in a pop-up box, where the fifth information is used to prompt that the first function has been automatically disabled. In a case in which the first function is enabled, if the terminal device is in a scene not suitable for the capture function for a long time, to improve photographing quality, the terminal device may output prompt information such as the sixth information, so that the user operates the terminal device to disable the first function.

The fifth information disappears after being displayed for specific duration (for example, 5 seconds). In a process dimension, within one lifecycle after the camera is started, the fifth information is displayed each time the scene is switched, for example, is changed from a scene suitable for the capture function to a scene not suitable for the capture function.

A rule for displaying the sixth information may be as follows: In the current scene not suitable for capture, the sixth information does not disappear until a picture scene displayed in the preview window is a scene suitable for capture. The rule for displaying the sixth information may alternatively be implemented in the following two manners:

Manner 1: For identification of the scene, a quantity of times of displaying the sixth information is less than a preset quantity of times, for example, five times. After the sixth information is displayed five times, the sixth information is no longer prompted, preventing repeated reminders from affecting user experience. Herein, in the process dimension, within one lifecycle after the camera is started, the terminal device may display the sixth information of specified duration at a specified time interval, and the sixth information is displayed for a maximum of five times.

Manner 2: For the scene not suitable for capture, the sixth information is displayed in a resident manner without limitation on the quantity of times, that is, the sixth information is displayed each time the shooting scene is switched to a scene not suitable for capture. This may improve a shooting effect.

In some embodiments, the method further includes: displaying a thumbnail of the fourth image frame in a gallery preview window in the photographing preview interface when the fourth image frame is automatically saved to the gallery, where the gallery preview window carries a first symbol.

In this embodiment of this application, the terminal device stores a generated photo in the gallery, and at the same time, displays a thumbnail of the photo in the gallery preview window. For a photo obtained through automatic capture, for example, the fourth image frame, when the thumbnail of the fourth image frame is displayed in the gallery preview window, the gallery preview window carries the first symbol (which may also be referred to as a specified symbol). For a photo obtained through manual capture, for example, the second image frame and the third image frame, or a photo obtained in another manner, for example, the first image frame, when a thumbnail of the first image frame, the second image frame, or the third image frame is displayed in the gallery preview window, the gallery preview window does not carry the first symbol. The first symbol is used to prompt that the user is currently in an automatic capture process, and help the user understand a state of the camera, thereby improving security of user privacy.

In some embodiments, the method further includes: displaying a first image interface in response to an operation performed by the user on the gallery preview window in the photographing preview interface, where the first image interface includes the fourth image frame and a third icon.

In this embodiment of this application, the terminal device may jump from the photographing preview interface to the first image interface (namely, a picture display interface) in response to the operation performed by the user on the gallery preview window. For a photo obtained through automatic capture, for example, the fourth image frame, when the fourth image frame is displayed in the picture display interface, the third icon is further displayed in the picture display interface to prompt that the photo is a photo obtained through automatic capture. For a photo obtained through manual capture, for example, the second image frame and the third image frame, or a photo obtained in another manner, for example, the first image frame, when the first image frame, the second image frame, or the third image frame is displayed in the picture display interface, the third icon is not displayed in the picture display interface. The third icon is used to distinguish the photo obtained through automatic capture from another photo, so that the user correctly processes the photo.

In some embodiments, the method further includes: displaying a third card in the first image interface in response to an operation performed by the user on the third icon.

In this embodiment of this application, the third card may be used to describe the automatic capture function. After the third card is displayed, if the user performs no operation, the third card does not disappear. When the user taps a blank area, the third card disappears.

In some embodiments, the method further includes: when the first icon is in the enabled state, if a shooting scene of the camera is a macro scene, enabling a third function; and in response to an operation performed by the user on the shooting icon at a sixth moment, saving a fifth image frame captured at the sixth moment to the gallery.

In this embodiment of this application, both the capture function and the AI photography function may support identification of a macro scene. In a current photographing mode in which the capture function or the AI photography function is enabled, macro shooting may be implemented, without requiring the user to manually switch the photographing mode. In a case in which the capture function and the AI photography function are enabled, the terminal device may enable a macro capability, but does not display an icon of the macro function, so as to simplify the photographing preview interface.

In some embodiments, when the first function is enabled and the first setting item of the camera is the enabled state, an execution priority of a function of manually saving an image frame is higher than an execution priority of a function of automatically saving an image frame, and the function of automatically saving an image frame is stopped during execution of the function of manually saving an image frame.

In this embodiment of this application, the function of manually saving an image frame is the manual capture function, and the function of automatically saving an image frame is the automatic capture function.

In some embodiments, the method further includes: when the first icon is in the disabled state and the camera is started for the first time, displaying a first card in the photographing preview interface, where the first card is used to describe the capture function (namely, the first function).

In this embodiment of this application, a rule for displaying the first card may be as follows: In a process dimension, within one lifecycle after the camera is started, the first card is prompted only once. If the user performs no operation, the first card does not disappear, that is, the terminal device does not disable the first card. If the user performs an operation, such as tapping a blank area, the terminal device exits the camera or switches a camera mode, and so on, and the first card disappears.

When the camera is started for the first time, the first icon is in the disabled state, that is, the capture function is disabled. The terminal device displays the first card in the photographing preview interface to describe the capture function, and prompt the user how to use the capture function, thereby improving photographing experience of the user. In addition, the first card is displayed only when the camera is used for the first time, thereby preventing repeated reminders from affecting user experience.

In some embodiments, the method further includes: after the first card is disabled, if the first icon is in the disabled state, displaying a first bubble, where the first bubble is used to prompt to enable the capture function.

In this embodiment of this application, after the first card is disabled, if the terminal device does not enable the capture function, that is, if the first icon remains in the disabled state, the terminal device displays the first bubble that is used to prompt to enable the capture function, thereby improving quality of a shot photo.

In some embodiments, the method further includes: in a case in which the capture function has not been enabled, displaying a photographing preview interface in the photographing mode of the camera in response to an operation performed by the user to enable the camera; and if the shooting scene of the camera is a scene suitable for the capture function, displaying a first bubble in the photographing preview interface, where the first bubble is used to prompt to enable the capture function.

In this embodiment of this application, a rule for displaying the first bubble may be as follows: In a process dimension, within one lifecycle after the camera is started, the first bubble is prompted only once. On a premise that the user does not clear a buffer of the terminal device, if the user never taps the icon of the capture function and the terminal device never enables the capture function, a quantity of times of prompting the first bubble is not limited, so as to prompt the user to use the capture function, thereby improving quality of a shot photo. If the user has previously tapped the icon of the capture function and the terminal device has previously enabled the capture function, the first bubble is no longer displayed, so as to reduce impact on the user's use of the camera.

After the first bubble is displayed, if the user performs no operation, the first bubble disappears after being displayed for specific duration (for example, 5 seconds), that is, the terminal device disables the first bubble. If the user performs an operation, the first bubble disappears immediately.

In this embodiment of this application, to further prevent repeated prompts from adversely affecting the user's use of the camera, the terminal device displays the first bubble in the photographing preview interface only when it is detected that duration after the last use of the camera reaches specified duration, for example, every other day, and the shooting scene is a scene suitable for the capture function. If the duration after the last use of the camera is less than the specified duration, the first bubble is not displayed.

In some embodiments, the method further includes: displaying a second icon in the photographing preview interface when the first icon is in the enabled state; and displaying a second card in the photographing preview interface in response to an operation performed by the user on the second icon, where the second card is used to describe the capture function.

In this embodiment of this application, a style of the second icon may be an icon with a letter "i" in a circle, or may be an icon with a letter "!" in a rectangle, or may be another style, which is not limited. In a case in which the capture function is enabled, the terminal device displays the second icon in the photographing preview interface. In a case in which the capture function is disabled, the terminal device does not display the second icon in the photographing preview interface.

In a case in which the capture function is enabled, in response to the operation performed by the user on the second icon, the terminal device displays the second card that is used to describe the capture function, so that the user understands the capture function anytime and accurately enables the capture function, thereby improving photographing quality. After the second card is displayed, if the user performs no operation, the second card does not disappear. If the user performs an operation, such as tapping a blank area, the first bubble disappears immediately.

In some embodiments, the method further includes: after the capture function is enabled in response to the operation performed by the user on the first icon, displaying first information in a pop-up box, where the first information is used to prompt that the capture function has been enabled, and after the capture function is disabled in response to the operation performed by the user on the first icon, displaying second information in a pop-up box, where the second information is used to prompt that the capture function has been disabled.

In this embodiment of this application, based on enabling and disabling of the photographing function (for example, the capture function), the terminal device displays prompt information of a state of the photographing function, for example, the first information and the second information, so that the user understands the state of the camera. The first information and the second information disappear after being displayed for specific duration (for example, 2 seconds).

In some embodiments, the method further includes: when the first icon is in the disabled state, in response to the operation performed by the user on the first icon, displaying third information in a pop-up box after expiration of specified duration, where the third information is used to prompt whether to enable an automatic capture function; and in response to an operation performed by the user to confirm enabling of the automatic capture function, enabling the automatic capture function, and switching the first icon from the disabled state to the enabled state.

In this embodiment of this application, after the user purchases a new terminal device or upgrades a system version, in a case in which the user does not perform a setting operation on a camera, the automatic capture function is disabled by default, thereby ensuring security of user privacy.

In a case in which the capture function is disabled, in response to the operation performed by the user on the first icon, the terminal device enables the capture function, and displays, after expiration of specified duration (for example, 2 seconds), the third information used to prompt whether to enable the automatic capture function. Based on the third information, the user confirms enabling of the automatic capture function, and in response to the operation confirmed by the user, the terminal device enables the automatic capture function. Otherwise, the terminal device keeps the automatic capture function disabled.

In this embodiment of this application, the third information is used to describe and enable the automatic capture function for the user, so that the terminal device can quickly enable the automatic capture function, thereby improving photographing quality. In addition, in this embodiment of this application, the third information may be displayed only when the capture function is enabled for the second time. If the terminal device has previously enabled the automatic capture function before the capture function is enabled for the second time, the third information is no longer displayed when the capture function is enabled for the second time and in a subsequent process. If the terminal device never enables the automatic capture function before the capture function is enabled for the second time, the third information is displayed when the capture function is enabled for the second time, but the third information is no longer displayed in the subsequent process, thereby preventing repeated reminders from affecting user experience.

In some embodiments, the method further includes: after the automatic capture function is enabled in response to the operation performed by the user to confirm enabling of the automatic capture function, displaying fourth information in a pop-up box, where the fourth information is used to prompt that the automatic capture function has been enabled.

In this embodiment of this application, based on enabling and disabling of the photographing function (for example, the automatic capture function), the terminal device displays prompt information of a state of the photographing function, for example, the fourth information, so that the user understands the state of the camera. The fourth information disappears after being displayed for specific duration (for example, 2 seconds).

In some embodiments, after the fourth image frame is stored in the gallery, the method further includes: displaying a second bubble in the photographing preview interface, where the second bubble is used to prompt to view the fourth image frame obtained through automatic capture.

In this embodiment of this application, a rule for displaying the second bubble may be as follows: In a process dimension, within one lifecycle after the camera is started, the second bubble is prompted only once. In addition, the second bubble is displayed after a photo is obtained through automatic capture for the first time, and the second bubble is no longer displayed in a subsequent process, so as to reduce impact on the user's use of the camera.

After the second bubble is displayed, if the user performs no operation, the second bubble disappears after being displayed for specific duration (for example, 5 seconds), that is, the terminal device disables the second bubble. If the user performs an operation, the second bubble disappears immediately.

In some embodiments, the photo obtained through automatic capture in the gallery carries a third icon. This helps distinguish the photo obtained through automatic capture from another photo.

According to a second aspect, this application provides a capture apparatus. The apparatus includes a unit configured to perform the method in the first aspect. The apparatus may correspondingly perform the method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, an image collection module or unit or a processing module or unit.

According to a third aspect, this application provides a terminal device, including:
a memory, configured to store instructions to be executed by one or more processors of the device; and
a processor, configured to perform the instructions, to enable the terminal device to perform any one of the methods provided in the first aspect.

According to a fourth aspect, this application provides a computer-readable storage medium. The computer-readable storage medium stores a computer program, and the computer program, when run on a terminal device, enables the terminal device to perform any one of the methods provided in the first aspect.

### BRIEF DESCRIPTION OF DRAWINGS

To describe the technical solutions in embodiments of this application more clearly, the following briefly describes the accompanying drawings that need to be used in the embodiments. Clearly, the accompanying drawings in the following descriptions show merely some embodiments of this application, and a person of ordinary skill in the art may still derive other drawings from these accompanying drawings without creative efforts.
FIG. 1A is a schematic diagram of a structure of a terminal device according to an embodiment of this application;
FIG. 1B is a schematic diagram of an architecture of a software system according to an embodiment of this application;
FIG. 2 is a schematic diagram of a solution for overcoming a problem of a reaction lag during image capture in a related technology;
FIG. 3A-FIG. 3E are schematic diagrams of an interface for setting an automatic capture function according to an embodiment of this application;
FIG. 4-1 is a schematic flowchart of manual capture when an automatic capture function is disabled according to an embodiment of this application;
FIG. 4-2 is a schematic diagram of an implementation of manual capture and automatic capture according to an embodiment of this application;
FIG. 4-3 is a schematic flowchart of manual capture and automatic capture when an automatic capture function is enabled according to an embodiment of this application;
FIG. 5A(1)-FIG. 5B(4) are schematic diagrams of an interface of a scene 1 according to an embodiment of this application;
FIG. 6 is a schematic diagram of a card 41 and a message box 42 according to an embodiment of this application;
FIG. 7A-FIG. 7F are schematic diagrams of an interface of a scene 2 according to an embodiment of this application;
FIG. 8 is a schematic diagram of a pop-up window 45 according to an embodiment of this application;
FIG. 9A-FIG. 9C are schematic diagrams of an interface of a scene 3 according to an embodiment of this application;
FIG. 10A-FIG. 10E are schematic diagrams of an interface of a scene 41 according to an embodiment of this application;
FIG. 11A-FIG. 11E are schematic diagrams of an interface of a scene 42 according to an embodiment of this application;
FIG. 12A-FIG. 12D are schematic diagrams of an interface of a scene 5 according to an embodiment of this application;
FIG. 13A-FIG. 13D are schematic diagrams of an interface of a scene 6 according to an embodiment of this application;
FIG. 14A-FIG. 14D are schematic diagrams of an interface of a scene 7 according to an embodiment of this application;
FIG. 15A-FIG. 15F are schematic diagrams of an interface of a scene 8 according to an embodiment of this application;
FIG. 16A-FIG. 16F are schematic diagrams of an interface of a scene 9 according to an embodiment of this application;
FIG. 17 is a schematic diagram of a pop-up window that describes a capture function according to an embodiment of this application;
FIG. 18A-FIG. 18C are schematic diagrams of an interface for a manner of enabling an automatic capture function according to an embodiment of this application; and
FIG. 19 is a schematic diagram of another structure of a terminal device according to an embodiment of this application.

### DESCRIPTION OF EMBODIMENTS

The following clearly and completely describes technical solutions in embodiments of this application with reference to the accompanying drawings in the embodiments of this application.

To clearly describe the technical solutions in the embodiments of this application, in the embodiments of this application, words such as "first" and "second" are used to distinguish between same items or similar items with basically the same functions and effects. For example, a first instruction and a second instruction are intended to distinguish between different user instructions, but not to limit a sequential order thereof. A person skilled in the art may understand that the words such as "first" and "second" do not limit a quantity or an execution sequence, and the words such as "first" and "second" do not define a definite difference.

It should be noted that in this application, words such as "example" or "for example" are used to indicate an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

To better understand the embodiments of this application, the following describes a structure of a terminal device in the embodiments of this application. In the embodiments of this application, the terminal device may also be referred to as an electronic device.

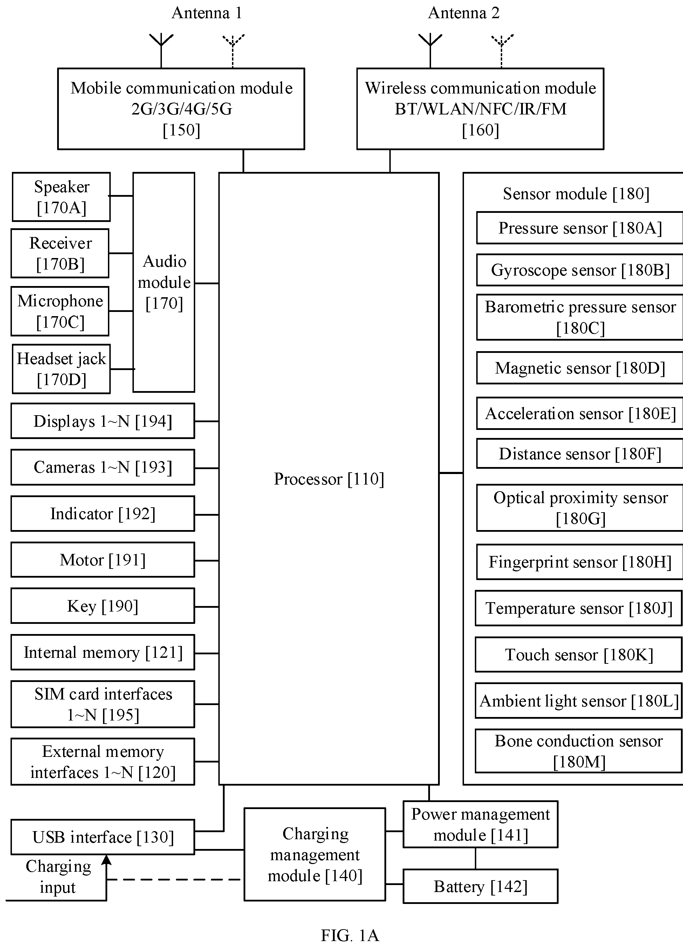

Reference is made to FIG. 1A. FIG. 1A is a schematic diagram of a structure of a terminal device according to an embodiment of this application. The terminal device shown in FIG. 1A may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (Subscriber Identity Module, SIM) card interface 195, and the like. The sensor module 180 may include a pressure sensor 180A, a gyroscope sensor 180B, a barometric pressure sensor 180C, a magnetic sensor 180D, an acceleration sensor 180E a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (Application Processor, AP), a modem processor (modem), a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be independent devices, or may be integrated into one or more processors.

The processor 110 may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data just used or cyclically used by the processor 110. If the processor 110 needs to use the instructions or the data again, the instructions or the data may be invoked directly from the memory, to avoid repeated access and reduce waiting time of the processor 110, thereby improving system efficiency.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, and a subscriber identity module (Subscriber Identity Module, SIM) interface.

The I2C interface is a bidirectional synchronous serial bus, including a serial data line (Serial Data Line, SDA) and a serial clock line (Derail Clock Line, SCL). In some embodiments, the processor 110 may include a plurality of groups of I2C interfaces. The processor 110 may be separately coupled to the touch sensor 180K, a charger, a flash, the camera 193, and the like by using different I2C interfaces. For example, the processor 110 may be coupled to the touch sensor 180K by using the I2C interface. This enables the processor 110 to communicate with the touch sensor 180K by using the I2C interface, to implement a touch function of the terminal device.

The I2S interface may be used for audio communication. In some embodiments, the processor 110 may include a plurality of groups of I2S interfaces. The processor 110 may be coupled to the audio module 170 by using the I2S interface, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 by using the PCM interface. The audio module 170 may transmit, by using the wireless communication module 160, obtained downlink audio stream data and obtained uplink audio stream data to a terminal device that is wirelessly connected to the terminal device.

In some embodiments, the audio module 170 may also transfer an audio signal to the wireless communication module 160 by using the PCM interface, to implement a function of answering a call by using a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transfer an audio signal to the wireless communication module 160 by using the UART interface, to implement a function of obtaining downlink audio stream data by using a terminal device connected through Bluetooth.

The MIPI interface may be configured to connect the processor 110 to peripheral devices such as the display 194 and the camera 193. The MIPI interface includes a camera serial interface (Camera Serial Interface, CSI), a display serial interface (Display Serial Interface, DSI), and the like. In some embodiments, the processor 110 communicates with the camera 193 by using the CSI interface, to implement a shooting function of the terminal device. The processor 110 communicates with the display 194 by using the DSI interface, to implement a display function of the terminal device.

It may be understood that the interface connection relationship between the modules shown in the embodiments of this application is merely an example for description and does not constitute a limitation on the structure of the terminal device. In some other embodiments of this application, the terminal device may alternatively use an interface connection manner different from that in the foregoing embodiments, or use a combination of a plurality of interface connection manners.

A wireless communication function of the terminal device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution for wireless communication that is applied to the terminal device and that includes 2G/3G/4G/5G and the like. In some embodiments, transmission of call data between two terminal devices may be implemented by using the mobile communication module 150. For example, when a terminal device is used as a called device, the terminal device may obtain downlink audio stream data from a calling device, and transmit uplink audio stream data to the calling device.

The wireless communication module 160 may provide a solution for wireless communication that is applied to the terminal device and that includes a wireless local area network (Wireless Local Area Networks, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (infrared, IR) technology, and the like.

In some embodiments, in the terminal device, the antenna 1 is coupled to the mobile communication module 150, and the antenna 2 is coupled to the wireless communication module 160, so that the terminal device can communicate with a network and another device by using a wireless communication technology. In an embodiment of this application, the terminal device may implement a local area network connection to another terminal device by using the wireless communication module 160. The wireless communication technology may include a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), time division-synchronous code division multiple access (Time-Division-Synchronous Code Division Multiple Access, TD-SCDMA), long term evolution (Long Term Evolution, LTE), BT, a GNSS, a WLAN, NFC, FM, an IR technology, and/or the like. The GNSS may include a global positioning system (Global Positioning System, GPS), a global navigation satellite system (Global Navigation Satellite System, GLONASS), a BeiDou navigation satellite system (Beidou Navigation Satellite System, BDS), a quasi-zenith satellite system (Quasi-Zenith Satellite System, QZSS), a satellite based augmentation system (Satellite Based Augmentation System, SBAS), and/or the like.

The display 194 is configured to display an image, a video, and the like. The display 194 includes a display panel. The display panel may be a liquid crystal display (Liquid Crystal Display, LCD), an organic light-emitting diode (Organic Light-Emitting Diode, OLED), an active-matrix organic light-emitting diode or active-matrix organic light-emitting diode (Active-Matrix Organic Light Emitting Diode, AMOLED), a flexible light-emitting diode (Flex Light-Emitting Diode, FLED), a MiniLED, a MicroLED, a Micro-OLED, a quantum dot light emitting diode (Quantum dot Light Emitting Diode, QLED), and the like. In some embodiments, the terminal device may include 1 or N displays 194, where N is a positive integer greater than 1.

The external memory interface 120 may be configured to connect to an external memory card, for example, a Micro secure digital (Secure Digital Memory, SD) card, to expand a storage capability of the terminal device. The external memory card communicates with the processor 110 by using the external memory interface 120, to implement a data storage function, for example, to store files such as music, a video, and a sound recording file in the external memory card. In some embodiments, the terminal device may include 1 or N external memory interfaces 120, where N is a positive integer greater than 1.

The internal memory 121 may be configured to store computer-executable program code, and the executable program code includes instructions. The internal memory 121 may include a program storage area and a data storage area. The program storage area may store an operating system, an application (for example, a sound playing function, an image playing function, and a sound recording function) required by at least one function, and the like. The data storage area may store data (for example, uplink audio data, downlink audio data, and a phone book) and the like created during use of the terminal device. In addition, the internal memory 121 may include a high-speed random access memory, and may further include a non-volatile memory, for example, at least one magnetic disk storage device, a flash memory device, or a universal flash storage (Universal Flash Storage, UFS). The processor 110 performs various function applications and data processing of the terminal device by running the instructions stored in the internal memory 121 and/or the instructions stored in the memory disposed in the processor 110.

The terminal device may implement a push message processing function and the like by using the audio module 170, the speaker 170A, the receiver 170B, the microphone 170C, the headset jack 170D, and the application processor. For example, the terminal device receives a target message that is pushed by a push server and a category of the target message, displays the target message when determining that the category of the target message is a category of immediate display, and when determining that the category of the target message is not the category of immediate display, displays the target message when the target message meets a display condition.

The audio module 170 is configured to convert digital audio information into an analog audio signal for output, and is also configured to convert an analog audio signal into a digital audio signal for input. The audio module 170 may be further configured to encode and decode an audio signal. In some embodiments, the audio module 170 may be disposed in the processor 110 or some functional modules of the audio module 170 may be disposed in the processor 110.

The receiver 170B, also referred to as an "earpiece", is configured to convert an audio electrical signal into a sound signal. When the terminal device answers a call or receives a voice message, the user may hear, by using the receiver 170B, voice transmitted by the calling device.

The microphone 170C, also referred to as a "mic" or "mike", is configured to convert a sound signal into an audio electrical signal. When making a call or sending a voice message, the user may make a sound by approaching the mouth to the microphone 170C, to input a sound signal to the microphone 170C, so as to collect uplink audio stream data.

The pressure sensor 180A is configured to sense a pressure signal, and may convert the pressure signal into an electrical signal. In some embodiments, the pressure sensor 180A may be disposed in the display 194. In some embodiments, when the user presses the answer key on the display 194, a manual call answer function may be implemented. When the user presses the hang-up key on the display 194, a manual call hang-up function may be implemented.

The touch sensor 180K is also referred to as a "touch control device". The touch sensor 180K may be disposed in the display 194. The touch sensor 180K and the display 194 form a touchscreen, also referred to as a "touch control screen". The touch sensor 180K is configured to detect a touch operation performed on or near the touch sensor. The touch sensor 180K may transfer the detected touch operation to the application processor, to determine a type of a touch event, and provide a visual output related to the touch operation by using the display 194. In some other embodiments, the touch sensor 180K may alternatively be disposed on a surface of the terminal device at a position different from a position of the display 194.

The key 190 includes a power on/off key, a volume key, and the like. The key 190 may be a mechanical key, or may be a touch key. The terminal device may receive a key input and generate a key signal input related to user settings and function control of the terminal device.

The motor 191 may generate a vibration prompt. The motor 191 may be configured to provide a vibration prompt for an incoming call, and may also be configured to provide vibration feedback for a touch. For example, after an incoming call signal is received, the motor 191 generates vibration to prompt the user that a call needs to be answered.

The SIM card interface 195 is configured to connect to a SIM card. The SIM card may be inserted into the SIM card interface 195 or removed from the SIM card interface 195, to connect the SIM card to or remove the SIM card from the terminal device. The terminal device may support 1 or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or may be of different types. The SIM card interface 195 may also be compatible with SIM cards of different types. The SIM card interface 195 may also be compatible with an external memory card. The terminal device may interact with the network by using the SIM card, to implement functions such as a call and data communication. In some embodiments, the terminal device uses an eSIM, namely, an embedded SIM card. The eSIM card may be embedded in the terminal device, and cannot be separated from the terminal device. In some embodiments, the terminal device may include 1 or N SIM card interfaces 195, where N is a positive integer greater than 1.

The following describes a software structure diagram of the terminal device.

A software system of the terminal device may use a layered architecture, an event-driven architecture, a microkernel architecture, a micro-service architecture, or a cloud architecture. In the embodiments of this application, an Android system with a layered architecture is used as an example to describe a software structure of the terminal device.

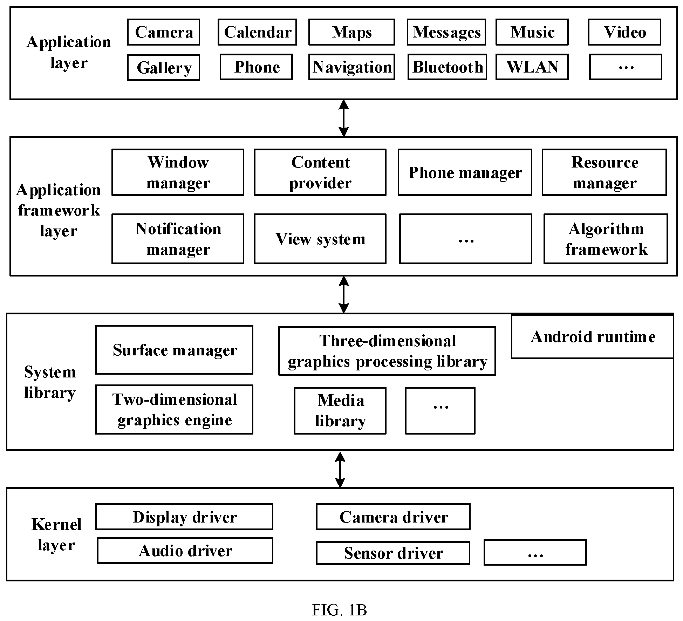

FIG. 1B is a block diagram of a software structure of a terminal device according to an embodiment of this application.

In a layered architecture, software is divided into several layers, and each layer has a clear role and task. The layers communicate with each other by using software interfaces. In some embodiments, the Android system is divided into four layers: an application layer, an application framework layer, an Android runtime (Android Runtime) and system library, and a kernel layer from top to bottom.

The application layer may include a series of application packages. As shown in FIG. 1B, the application packages may include applications such as Camera, Gallery, Calendar, Phone, Maps, Navigation, WLAN, Bluetooth, Music, Video, and Messages.

The application framework layer provides an application programming interface (Application Programming Interface, API) and a programming framework for applications at the application layer. The application framework layer includes some predefined functions. As shown in FIG. 1B, the application framework layer may include a window manager, a content provider, a view system, a phone manager, a resource manager, a notification manager, an algorithm framework, and the like.

The window manager is configured to manage a window program. The window manager may obtain a size of a display, determine whether a status bar exists, lock a screen, take a screenshot, and so on.

The content provider is configured to store and obtain data, and enable the data to be accessible to an application. The data may include a video, an image, audio, calls that are made and answered, a browsing history and a bookmark, a phone book, and the like.

The view system includes visual controls such as a text display control and a picture display control. The view system may be used to construct a display interface of an application. The display interface may include one or more views. For example, a display interface including an SMS message notification icon may include a view for displaying a text and a view for displaying a picture.

The phone manager is configured to provide a communication function of the terminal device, for example, call status management (including answering, hanging up, or the like).

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to notify download completion, provide a message notification, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert tone is produced, the electronic device vibrates, or an indicator light blinks.

The algorithm framework includes a framework used to implement an algorithm related to the capture method in the embodiments of this application, for example, an algorithm used to calculate a moving range of a target object in a preview image obtained by the electronic device, an algorithm used to determine whether the moving range of the target object in the preview image meets a preset condition, and an algorithm used to control the electronic device to complete automatic capture of the target object when the moving range of the target object meets the preset condition.

The Android Runtime includes a kernel library and a virtual machine. The Android runtime is responsible for scheduling and managing an Android system.

The kernel library includes two parts: One part is a functional function that needs to be invoked in a java language, and the other part is a kernel library of Android. The application layer and the application framework layer run on the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawings.

The kernel layer is a layer between hardware and software. The kernel layer includes at least a display driver, a camera driver, an audio driver, a sensor driver, and the like.

The following describes examples of working procedures of software and hardware of the terminal device with reference to a photographing scene.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch single-tap operation, and a control corresponding to the single-tap operation is a camera icon. A camera application invokes an interface of the application framework layer to start the camera application, so that the kernel layer is invoked to start the camera driver, and the camera 193 captures a still image or a video. The technical solution provided in this embodiment of this application mainly improves an algorithm framework of the application framework layer, and this algorithm framework is used to implement an algorithm related to the capture method.

Electronic devices such as mobile phones have a function of shooting photos and videos. When the user wants to "capture" a magic moment of a moving object by using a mobile phone, the user taps a shooting button on the mobile phone to trigger the mobile phone to take a photo. However, because a reaction lag phenomenon exists during "capture", the mobile phone cannot accurately capture the magic moment of the moving object, and a photo finally shot by the user may not be a desired photo at a specific moment. The reaction lag may be a reaction lag caused by the user (such as a reaction delay and an action delay), or may be a reaction lag caused by the mobile phone (such as a camera reaction delay). The shooting button is a shutter button.

Currently, a possible manner of obtaining a photo at a magic moment is as follows: The user chooses to shoot a video first, and then saves a specific frame of image as a photo from the video by performing a screenshot operation. In this case, the operation of obtaining the foregoing photo by the user is tedious, affecting user experience. In addition, picture quality of the photo obtained by capturing the image frame from the video is low, which also degrades user experience.

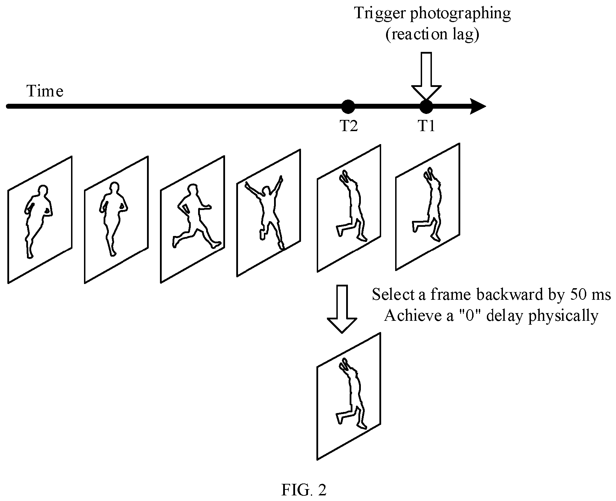

In a related technology, to resolve a problem that a magic moment is missed due to a reaction lag during capture, a corresponding solution is proposed. As shown in FIG. 2, photographing is triggered when the user taps the shooting button (denoted as T1), and the mobile phone collects an image frame at a specific moment (denoted as T2) before the moment T1, and uses the image frame as the captured photo. For example, a difference between the moment T2 and the moment T1 is a preset value, for example, 50 milliseconds (ms). In this way, the mobile phone selects a frame backward by 50 ms to obtain an image frame immediately before photographing, so as to achieve a "0" delay physically, thereby avoiding a problem of a reaction lag. However, the photo captured in this manner may have an unclear picture, or have a poor human face angle, or have an undesirable human face expression. Therefore, the captured photo may not be a desired photo at a specific moment, and cannot meet a user requirement.

In the photographing method in the related technology, a picture that the user wants to shoot cannot be accurately shot, or an operation is inconvenient. For example, the user needs to switch to a function of shooting a video, shoot a video, and then take a screenshot.

To resolve the foregoing technical problem, an embodiment of this application provides a photographing preview interface and a photographing method for a camera in a terminal device. In this embodiment of this application, a control that enables or disables a capture function is set in the photographing preview interface of the camera in the terminal device.

In a possible implementation, when the control of the capture function in the photographing preview interface is disabled, the terminal device detects a photographing operation 1 of the user, and in response to the photographing operation 1, the terminal device may capture a frame of image during operation of the photographing operation 1, and save the frame of image as a photographing result.

In another possible implementation, the terminal device enables the capture function in response to an operation of tapping the control of the capture function by the user, and in this case, the control of the capture function is enabled (for example, highlighted). When the control of the capture function is enabled, if a control of an automatic capture function in a setting interface of a camera application of the terminal device is disabled, the terminal device detects a photographing operation 2 of the user, and in response to the photographing operation 2, the terminal device may save a frame of picture within duration from a period of time before the photographing operation 2 to a period of time after the photographing operation 2 as the photographing result. In other words, manual capture is performed. When the terminal device does not detect the photographing operation 2 of the user, the terminal device does not automatically save a picture. In other words, automatic capture is not performed.

In another possible implementation, when the control of the capture function in the photographing preview interface is enabled, if the control of automatic capture in the setting interface of the camera application of the terminal device is enabled, the terminal device detects the photographing operation 2 of the user, and in response to the photographing operation 2, the terminal device may save a frame of picture within duration from a period of time before the photographing operation 2 to a period of time after the photographing operation 2 as the photographing result. The terminal device may further automatically analyze a preview picture. When a preset condition is met, the terminal device saves a frame of picture as the photographing result. In other words, manual capture is performed. The preset condition may include: A transition occurs on a preview stream, and a frame of picture between the current transition and the last transition is saved as a result of automatic capture. A comprehensive score of the frame of picture is high, and reference factors of the comprehensive score include sharpness, an action of the object, and the like. This is not specifically limited in this embodiment of this application.

In this embodiment of this application, the capture function is a shooting function supported by the camera. The capture function supports an intelligent high-speed shutter, and quick capture of a magic moment during capture of scenes such as smiling, jumping, and running people as well as cats and dogs. The magic moment may include but is not limited to a moment at which a scene subject performs a specified action in the scenes such as smiling, jumping, and running people as well as cats and dogs. For example, in the smiling people scene, the specified action is that corners of the people's mouth reach a highest point, and correspondingly, the magic moment is a moment at which the corners of the people's mouth reach the highest point. In the jumping people scene, the specified action is that the people's jumping reaches a highest point, and correspondingly, the magic moment is a moment at which the people's jumping reaches the highest point. In the cat scene, the specified action is that the cat sets its front legs down and raises its rear legs, and correspondingly, the magic moment is a moment at which the cat sets its front legs down and raises its rear legs. In different scenes, the specified action may further include another action, which is not limited.

In the capture method provided in this embodiment of this application, a control that enables or disables a capture function is set in the photographing preview interface of the terminal device. A switching item of an automatic capture function may be set in the camera setting interface of the terminal device. The terminal device enables or disables the automatic capture function in response to an operation performed by the user on the switching item of the automatic capture function. In this embodiment of this application, in a case in which the automatic capture function is enabled, if the capture function is disabled, the automatic capture function is automatically disabled. If the capture function is enabled again, disabling of the automatic capture function is automatically released, that is, the automatic capture function is enabled. Alternatively, in a case in which the automatic capture function is disabled, if the capture function is disabled and then the capture function is enabled again, the automatic capture function remains disabled.

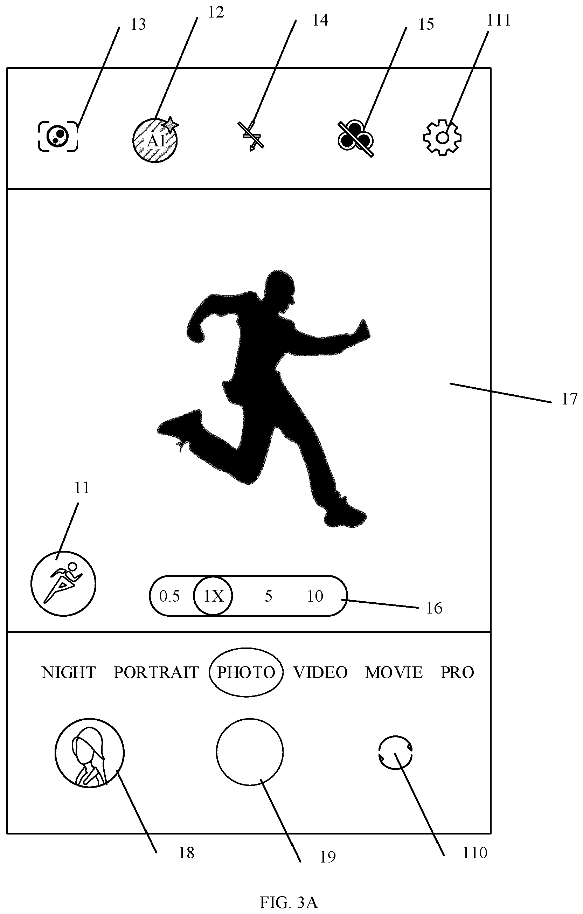

FIG. 3A shows an interface of a camera application. The interface may be a photographing preview interface. The interface includes: a preview window 17, an icon 11 of a capture function, an icon 12 of an AI photography function, an icon 13 of a live shooting mode, a flash icon 14, an icon 15 of a filter shooting mode, a focal length range 16, a gallery preview window 18, a shooting icon (shutter) 19, an icon 110 of front and rear lens switching, and a setting icon 111. The icon 11 of the capture function is the foregoing control of the capture function.

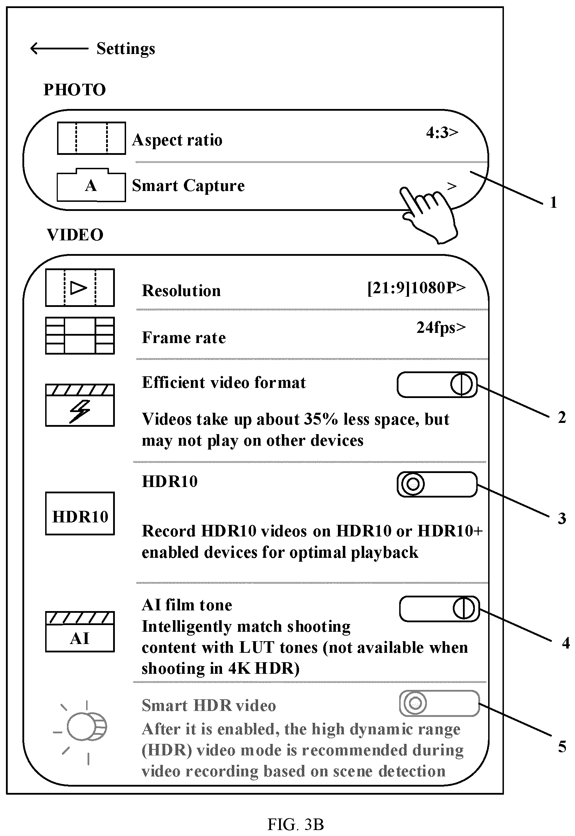

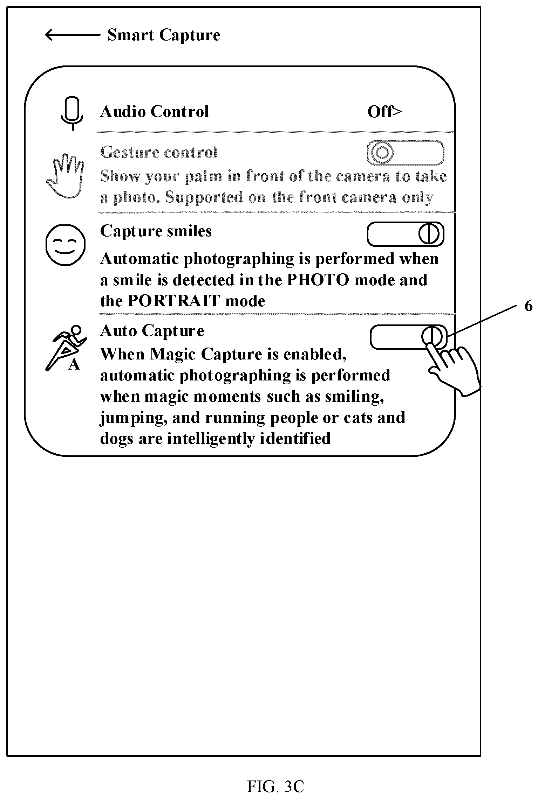

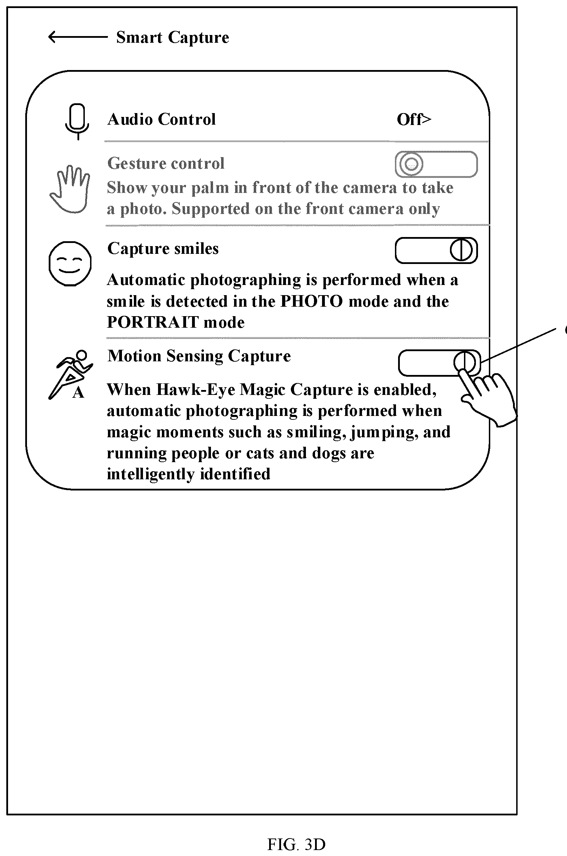

In some embodiments, a "Smart Capture" setting item is arranged in the camera setting interface of the terminal device, and a next-level setting item of Smart Capture may include a control of an automatic capture function. As shown in FIG. 3A, in response to that the user taps the setting control 111, the terminal device displays a camera setting interface shown in FIG. 3B. The camera setting interface includes a setting item 1, that is, the "Smart Capture" setting item. An "Auto Capture" switching item (namely, the foregoing control of the automatic capture function) is arranged in the "Smart Capture" setting interface, for example, a switching item 6 in the Smart Capture setting interface shown in FIG. 3C. The control of the automatic capture function is the switching item of the automatic capture function. A name and function description of the switching item of the automatic capture function may be set based on actual requirements. For example, the switching item of the automatic capture function may alternatively be named a "Motion Sensing Capture" switching item, for example, a switching item 6 in the Smart Capture setting interface shown in FIG. 3D. The Smart Capture setting interface shown in FIG. 3C is used as an example. In this embodiment of this application, the user taps the "Smart Capture" setting item 1 in the camera setting interface shown in FIG. 3B. The terminal device displays the Smart Capture setting interface shown in FIG. 3C in response to an operation of tapping the setting item 1 by the user.

The user taps the "Auto Capture" switching item 6 in the Smart Capture setting interface shown in FIG. 3C, and the terminal device enables or disables the automatic capture function in response to that the user taps the switching item 6. For example, the "Auto Capture" switching item 6 is in a disabled state. After the user taps the "Auto Capture" switching item 6, the terminal device enables the automatic capture function. The "Auto Capture" switching item 6 is in an enabled state. After the user taps the "Auto Capture" switching item 6, the terminal device disables the automatic capture function. In this embodiment of this application, the state of the "Auto Capture" switching item 6 is not affected by the capture function. For example, the state of the "Auto Capture" switching item 6 is the enabled state. In a case in which the terminal device does not detect that the user performs an operation on the "Auto Capture" switching item 6, the terminal device enables or disables the capture function, and the "Auto Capture" switching item 6 remains in the enabled state. The state of the "Auto Capture" switching item 6 is the disabled state. In a case in which the terminal device does not detect that the user performs an operation on the "Auto Capture" switching item 6, the terminal device enables or disables the capture function, and the "Auto Capture" switching item 6 remains in the disabled state.

In this embodiment of this application, the setting item is associated with a lower-level interface. As shown in FIG. 3B, the "Smart Capture" setting item 1 is associated with the Smart Capture setting interface. The Smart Capture setting interface is a lower-level interface associated with the setting item 1. A symbol ">" is used to indicate that there is an associated lower-level interface. In addition to the "Smart Capture" setting item and the "Auto Capture" switching item, one or more setting items and one or more switching items may be further arranged in the camera setting interface and the Smart Capture setting interface, for example, setting items such as "Aspect Ratio", "Resolution", "Frame Rate", and "Audio Control", and switching items such as "Efficient Video Format", "HDR10", "AI Film Tone", "Smart HDR Video", "Gesture Control", and "Capture Smiles", as shown in FIG. 3B and FIG. 3C. FIG. 3B is used as an example. For switching items in the enabled state, refer to a switching item 2 and a switching item 4 in FIG. 3B. For switching items in the disabled state, refer to a switching item 3 and a switching item 5 in FIG. 3B. The switching items in the enabled state and the switching items in the disabled state may alternatively be represented in another form, which is not limited.

To accurately set parameters of the setting items and the enabled or disabled switching items, each setting interface may display the set parameters of the setting items, and function descriptions of the switching items. As shown in FIG. 3B, the camera setting interface displays a parameter of the "Aspect Ratio" setting item as 4:3, that is, an aspect ratio of a photo is 4:3. The camera setting interface further displays a function description of the "Efficient Video Format" switching item, that is, "Videos take up about 35% less space, but may not play on other devices", and the like.

In addition, to avoid misoperation, after one switching item is enabled, the terminal device may set a switching item mutually exclusive with the enabled switching item to be disabled. As shown in FIG. 3B, the "AI Film Tone" switching item 4 and the "Smart HDR Video" switching item 5 are mutually exclusive. After the switching item 4 is enabled, the terminal device sets the switching item 5 to be gray, to disable the switching item 5. Further, as shown in FIG. 3C, the "Capture Smiles" switching item and the "Gesture Control" switching item are mutually exclusive. After the "Capture Smiles" switching item is enabled, the terminal device sets the "Gesture Control" switching item to be gray, to disable the "Gesture Control" switching item.

To facilitate understanding of the capture method provided in this embodiment of this application, the following separately describes the capture method in a scene in which the automatic capture function is enabled and in a scene in which the automatic capture function is disabled.

In this embodiment of this application, the photographing preview interface may display camera mode icons such as PHOTO, PORTRAIT, NIGHT, VIDEO, and MOVIE that are supported by the camera. In different camera modes, icons such as a shooting capability and a parameter, and a scene preview window, a gallery preview window, and the like that are supported by different camera modes are displayed.

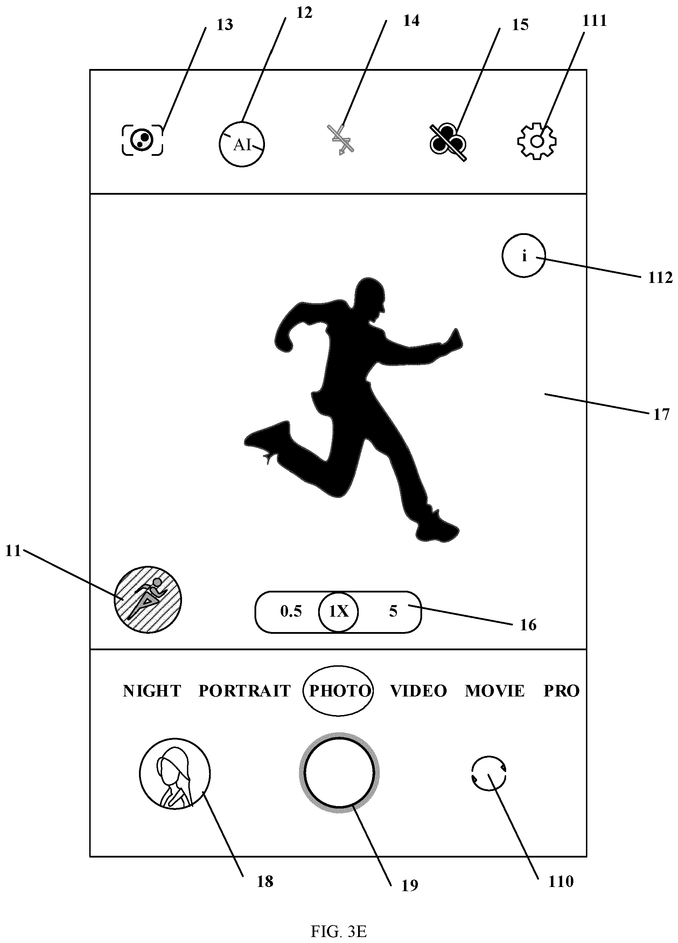

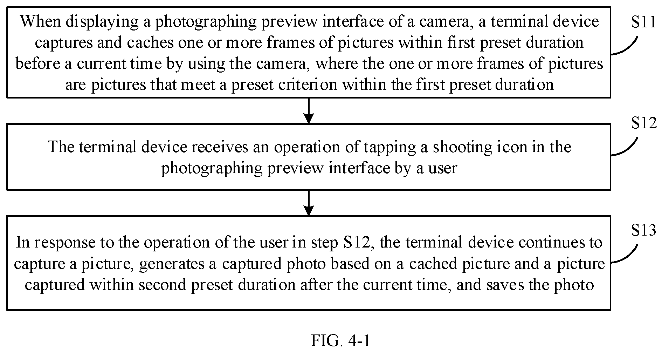

In the photographing preview interface shown in FIG. 3A and FIG. 3E, an icon 11 of a capture function, an icon 12 of an AI photography function, an icon 13 of a live shooting mode, a flash icon 14, an icon 15 of a filter shooting mode, a focal length range 16, a preview window 17, a gallery preview window 18, a shooting icon 19, an icon 110 of front and rear lens switching, a setting icon 111, a description icon 112, and the like are displayed in the "PHOTO" camera mode. An icon of an enabled photographing function is enabled (for example, highlighted), for example, an icon 12 in FIG. 3A and an icon 11 in FIG. 3E. An icon of a disabled photographing function is disabled, for example, an icon 11 in FIG. 3A and an icon 12 in FIG. 3E. Display forms of enabling and disabling different icons may be the same or different, which is not limited.
(1) In a scene in which the capture function is enabled and the automatic capture function is disabled, a capture flow is shown in FIG. 4-1.

The capture function being enabled means that the user taps the icon 11 in FIG. 3A, and the terminal device enables the capture function in response to an operation of tapping the icon 11 in FIG. 3A by the user. As shown in FIG. 3E, the icon 11 being highlighted indicates that the capture function is enabled. When the capture function is enabled, the user may tap the icon 19. In response to an operation of tapping the icon 19 by the user, the terminal device may save a frame of picture within duration from a first preset time point before the tap operation to a second preset time point after the tap operation.

The automatic capture function being disabled may mean that the "Auto Capture" switching item 6 shown in FIG. 3C is in a disabled state. When the terminal device does not detect the operation of tapping the icon 19 by the user, the terminal device does not automatically save a picture. In other words, automatic capture is not performed.

A specific process of the photographing method in this embodiment of this application includes:
Step S11: When displaying the photographing preview interface (the interface shown in FIG. 3E) of the camera, the terminal device captures and buffers one or more frames of pictures within first preset duration before the current time by using the camera. The one or more frames of pictures are pictures that meet a preset criterion within the first preset duration.

In this embodiment of this application, the first preset duration may be set based on actual requirements. For example, the first preset duration may be 0.5 second, 1 second, or 1.5 seconds.

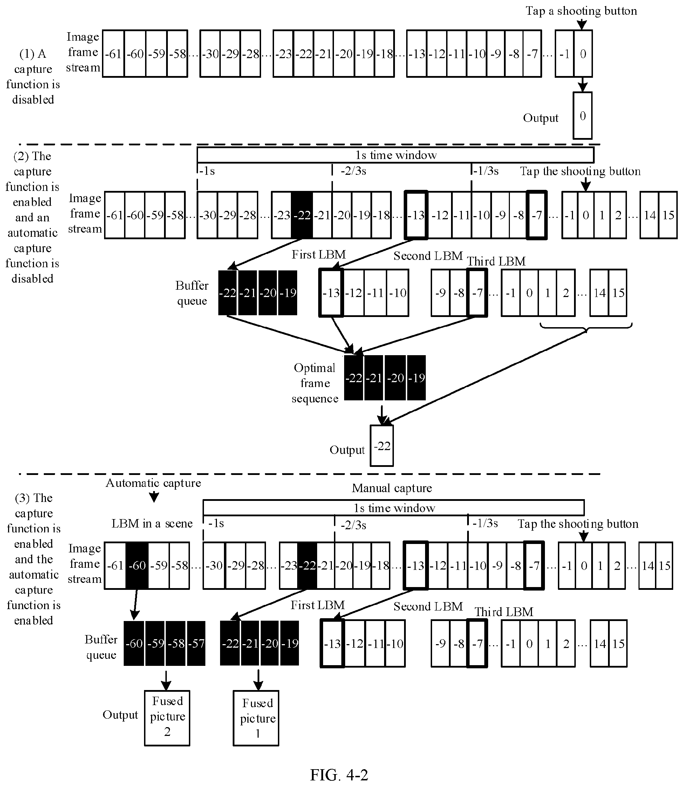

The user may tap the camera icon on a home screen of the terminal device, or input a voice instruction for starting the camera application to the terminal device, and so on, to enable the terminal device to start the camera, so that the terminal device can display the interface shown in FIG. 3A. In this case, the capture function is disabled, and the terminal device captures a picture in real time to obtain an image frame stream shown in (1) in FIG. 4-2. Herein, the terminal device does not buffer the captured picture. In a case in which the capture function is disabled, when the terminal device captures a picture 0, the user taps the shooting icon 19, and in response to an operation of tapping the shooting icon 19 by the user, the terminal device saves and outputs the picture 0 as the finally generated photo.

After the terminal device starts the camera, the user taps the icon 11 in FIG. 3A, and in response to an operation of tapping the icon 11 in FIG. 3A by the user, the terminal device enables the capture function and displays the interface shown in FIG. 3E. The terminal device captures a picture in real time, and stores, in a buffer queue, a local best moment (local best moment, LBM) and a specified quantity of latest frames of images within first preset duration before the current time. The local best moment is a frame of picture with a highest comprehensive score in a sub-time period.

In an example in which the first preset duration is 1 second, the terminal device may collect 30 frames of pictures within 1 second, a length of the sub-time period is 1/3 second, and a specified quantity is 10, description is provided with reference to FIG. 4-2. In a case in which the capture function is enabled and the automatic capture function is disabled, the terminal device may buffer a first LBM (namely, a picture -22), a second LBM (namely, a picture -13), and latest 10 frames of pictures (namely, a picture -9 to a picture 0). The first LBM is an LBM within duration from 1 second to 2/3 second before the current time, the second LBM is an LBM within duration from 2/3 second to 1/3 second before the current time, and the latest 10 frames of pictures are pictures within duration from 1/3 second before the current time to the current time. The current time (namely, the current moment) is a time of a picture captured in real time by the terminal device.

As time goes by, the latest collected 10 frames of pictures are constantly input into the buffer queue, so that storage content of the buffer queue is updated. According to a first in first out rule, the first LBM stored in the buffer queue last time is discarded, the second LBM stored in the buffer queue last time is updated into the first LBM, and the LBM (namely, the third LBM, for example, a picture -7 in FIG. 4-2) in the latest 10 frames of pictures stored in the buffer queue last time is updated into the second LBM.

In this embodiment of this application, to save storage space, when the foregoing LBM is stored, the terminal device may store only the LBM. To improve quality of generating a photo, the terminal device may alternatively store the LBM and a plurality of consecutive frames of pictures after the LBM. For example, in FIG. 4-2, the first LBM is a picture -22, the second LBM is a picture -13, the buffer queue stores a picture -22 and three frames of pictures -21, -20, and -19 after the picture -22, and stores a picture -13 and three frames of pictures -12, -11, and -10 after the picture -13. A quantity of the foregoing plurality of consecutive frames of pictures may be 1, 2, 3, 4, or the like, and is specifically set based on actual requirements.

Step S12: The terminal device receives an operation of tapping the shooting icon in the photographing preview interface by the user.

As shown in FIG. 3E, the user taps the shooting icon 19 in the photographing preview interface, and in response to the tapping operation of the user, the terminal device performs step S13 to obtain a manually captured photo.

Step S13: In response to the operation of the user in step S12, the terminal device continues to capture a picture, generates the captured photo based on a buffered picture and a picture captured within second preset duration after the current time, and saves the photo.

The second preset duration may be 0.5 second, 1 second, 1.5 seconds, or the like. The current time indicates a time at which the user taps the shooting icon.

FIG. 4-2 is still used as an example for description. For example, the first preset duration is 1 second, and the second preset duration is 0.5 second. When the terminal device captures a picture 0, the user taps the shooting icon 19. In a case in which the capture function is enabled and the automatic capture function is disabled, as shown in (2) in FIG. 4-2, in response to the operation of tapping the shooting icon 19 by the user, the terminal device may determine, based on a picture that is within 1 second before the current time and that is buffered in FIG. 4-2, a target LBM within 1 second before the current time. In the case shown in (2) in FIG. 4-2, a target LBM determined based on the first LBM, the second LBM, and the third LBM is a frame -22. Within 0.5 second after the current time, each time the terminal device captures one frame of picture (for example, a picture 1 to a picture 15), the terminal device compares the frame of picture with the target LBM to determine a new target LBM. Upon expiration of 0.5 second after the current time, the terminal device may determine a final target LBM, namely, an optimal frame, within duration from 1 second before the current time (namely, a moment at which the picture 0 is captured) to 0.5 second after the current time. In the case shown in (2) in FIG. 4-2, the determined optimal frame is the frame -22. The terminal device may save the optimal frame as a captured photo. For example, the frame -22 is directly output in (2) in FIG. 4-2. Alternatively, the optimal frame may be fused with a plurality of consecutive frames of pictures after the optimal frame to obtain the captured photo. For example, in (2) in FIG. 4-2, it is determined that the optimal frame is the picture -22, the pictures -22, -21, -20, and -19 are fused to obtain a fused picture 1, and the fused picture 1 is output and saved.

In some embodiments, if a time interval between the user's current tap of the shooting icon 19 and the user's last tap of the shooting icon 19 is greater than or equal to third preset duration, and the third preset duration is a sum of the first preset duration and the second preset duration, the terminal device may save the photo based on step S11-step S13.

In some embodiments, if the time interval between the user's current tap of the shooting icon 19 and the user's last tap of the shooting icon 19 is less than the third preset duration, but the time interval is greater than the second preset duration, the terminal device may generate the captured photo based on one or more frames of pictures within a time period in which the last capture ends before the current time and a picture captured within the second preset duration after the current time, and save the captured photo.

In some embodiments, if the time interval between the user's current tap of the shooting icon 19 and the user's last tap of the shooting icon 19 is less than the second preset duration, the terminal device may use the determined target LBM before the current time as a photo captured last time, and save the captured photo. In addition, the terminal device may generate a photo captured this time based on a picture captured within the second preset duration after the current time, and save the captured photo. For example, the first preset duration may be 1 second, and the second preset duration is 0.5 second. The user separately taps the shooting icon 19 at a moment t1 and a moment t2, and an interval between t1 and t2 is less than 0.5 second. The terminal device may determine a target LBM within a time from t1-1 seconds to t2 as a photo captured at the moment t1. The terminal device may compare pictures captured after t2 frame by frame, and determine an optimal frame within 0.5 second after t2 as a photo captured at the moment t2.

In this embodiment of this application, a scoring rule for a picture may be set based on actual requirements. For example, the scoring rule may be: obtaining a first score of sharpness of the picture, and a second score of an action performed by a scene subject in the picture relative to a specified action, and performing weighted summation on the first score and the second score to obtain a score of the picture. The scoring rule may alternatively be: obtaining a first score of sharpness of the picture, a second score of an action performed by a scene subject in the picture relative to a specified action, and a third score of a size of the scene subject in the picture, and performing weighted summation on the first score and the second score to obtain a score of the picture.

In this embodiment of this application, the terminal device buffers one or more frames of pictures within the first preset duration before the user taps the shooting icon. After the user taps the shooting icon, the terminal device determines a target LBM within the first preset duration based on the buffered one or more frames of pictures, compares the pictures within the second preset duration after tapping of the shooting icon with the target LBM frame by frame to obtain a new target LBM, and generates, based on the new LBM, a photo at a moment that the user wants to capture. Because the photo is generated by referring to a picture before the user taps the shooting icon and a picture after the user taps the shooting icon, the terminal device may also accurately capture a moment of a moving object and generate a photo of high quality even if a reaction lag phenomenon exists.

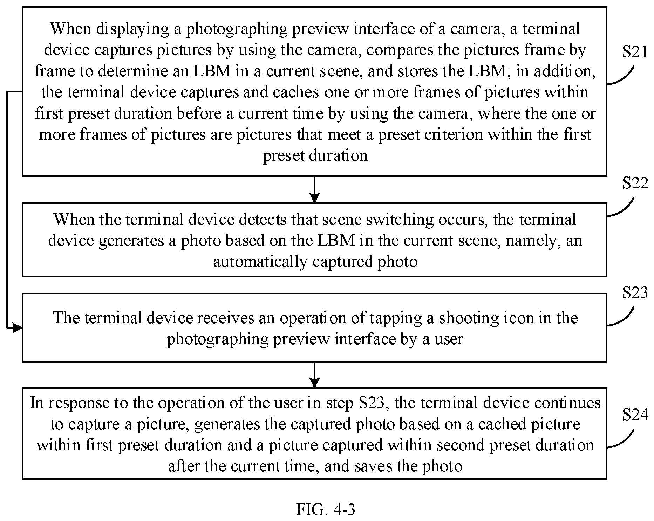

(2) In a scene in which the capture function is enabled and the automatic capture function is enabled, a capture flow is shown in FIG. 4-3.

The control of automatic capture being enabled may mean that the "Auto Capture" switching item 6 shown in FIG. 3C is in an enabled state. When the terminal device does not detect the operation of tapping the icon 19 by the user, the terminal device automatically saves a picture. In other words, automatic capture is performed. A specific process of the photographing method in this embodiment of this application includes:
Step S21: When displaying the photographing preview interface (the interface shown in FIG. 3E) of the camera, the terminal device captures pictures by using the camera, compares the pictures frame by frame to determine an LBM in the current scene, and stores the LBM. In addition, the terminal device captures and buffers one or more frames of pictures within first preset duration before the current time by using the camera. The one or more frames of pictures are pictures that meet a preset criterion within the first preset duration.

In this embodiment of this application, to improve quality of the photo, when buffering the LBM, the terminal device may buffer a plurality of consecutive frames of pictures after the LBM. For example, in (3) in FIG. 4-2, the buffer queue stores an LBM in a scene of automatic capture, namely, a picture -60, and three consecutive frames of pictures after the picture -60, namely, pictures -59, -58, and -57. In addition, the buffer queue further stores a plurality of frames of pictures that are used for manual capture.

Step S22: When the terminal device detects that scene switching (namely, a transition) occurs, the terminal device generates a photo based on an LBM in the current scene, namely, an automatically captured photo.

The terminal device may detect a scene of an image frame by using a related scene detection algorithm, and compare a scene of the current detection with a scene of the previous detection. If the scene changes, it is determined that scene switching occurs. If the scene does not change, it is determined that scene switching does not occur. The terminal device may perform scene detection frame by frame, or may periodically perform scene detection on an obtained image frame. This is not limited in this embodiment of this application. A manner of determining that the scene changes may be as follows: The terminal device compares one or more objects that are obtained during two times of detection to determine whether the one or more objects change. This is not specifically limited in this embodiment of this application.

Step S23: The terminal device receives an operation of tapping the shooting icon in the photographing preview interface by the user.

Step S24: In response to the operation of the user in step S23, the terminal device continues to capture a picture, generates the captured photo based on a buffered picture within first preset duration and a picture captured within second preset duration after the current time, and saves the photo.

In this embodiment of this application, in a scene in which the capture function is enabled and the automatic capture function is enabled, the terminal device supports automatic capture in step S21-step S22, and further supports manual capture. In other words, in an automatic capture process, the terminal device may generate a manually captured photo in response to an operation of tapping the shooting icon 19 in the photographing preview interface by the user. For example, as shown in (3) in FIG. 4-2, in a scene in which the capture function is enabled and the automatic capture function is enabled, the terminal device captures an image frame stream, stores the LBM in the buffer queue in an automatic capture manner, and stores, in the buffer queue in a manual capture manner, a plurality of frames of pictures within a time window of 1 second before the current time, so that the terminal device can support both automatic capture and manual capture. If the user does not tap the shooting icon, the terminal device may fuse an LBM in a scene stored in the buffer queue and a plurality of subsequent frames, for example, fuse pictures -60, -59, - 58, and -57, to obtain a fused picture 2, and output and maintain the fused picture 2. If the user taps the shooting icon, in response to an operation of tapping the shooting icon by the user, the terminal device may fuse an optimal frame within 1 second before tapping the shooting icon and 0.5 second after tapping the shooting icon in the buffer queue and a plurality of subsequent frames, for example, fuse pictures -22, -21, -20, and -19, to obtain a fused picture 1, and output and maintain the fused picture 1.

In some embodiments, in a scene in which the capture function is enabled and the automatic capture function is enabled, an execution sequence of automatic capture and manual capture is not limited, and is specifically determined based on actual use requirements. This is not limited in this embodiment of this application. For example, the terminal device may first perform automatic capture, and then perform manual capture. For another example, the terminal device may first perform manual capture, and then perform automatic capture.

In this embodiment of this application, the terminal device may alternatively set execution priorities of manual capture and automatic capture. For example, in a scene in which manual capture is triggered for execution, the execution priority of manual capture is higher than the execution priority of automatic capture, that is, manual capture is preferentially performed. In addition, automatic capture is prohibited during the execution of manual capture, and automatic capture is resumed after manual capture is completed. In this way, the execution of automatic capture does not affect or interfere with manual capture.

In this embodiment of this application, when performing automatic capture, the terminal device buffers one or more frames of pictures in an entire scene, and generates a photo based on the buffered pictures. The terminal device generates an automatically captured photo, and can automatically identify a magic moment of a scene without requiring the user to manually tap the shooting icon. In addition, the terminal device captures the scene to obtain a photo, thereby accurately capturing a magic moment of the scene and recording a magic moment of a motion in a timely manner. In addition, in a case in which the automatic capture function is enabled, the terminal device supports the user in manually capturing a photo, thereby further meeting a capture requirement of the user, and improving photographing experience of the user.

In a scene in which the capture function is enabled and the automatic capture function is enabled or disabled, in a process in which the terminal device captures a picture and generates a photo, to improve quality of photographing, improve security of user privacy, and improve user experience, the terminal device may output corresponding prompt information based on a user operation and scene switching. The following describes in detail, by using a specific scene, the capture method provided in this embodiment of this application and the prompt information output in the capture process.

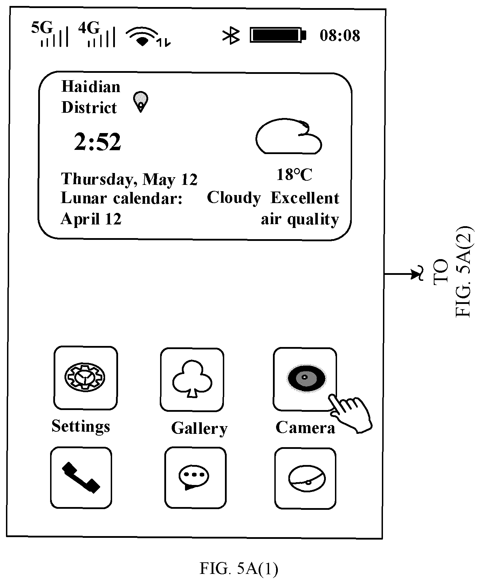

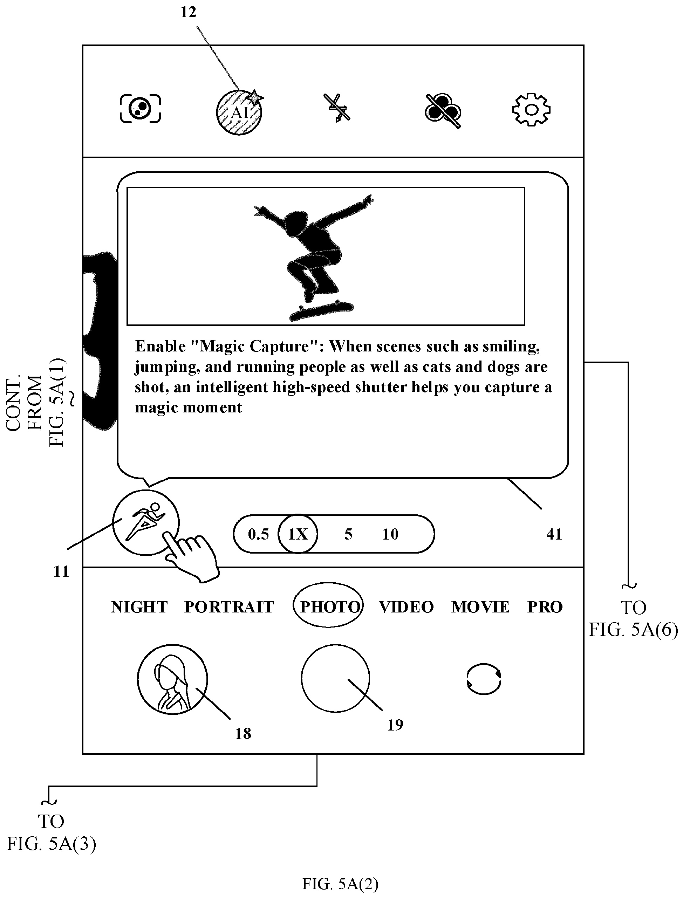

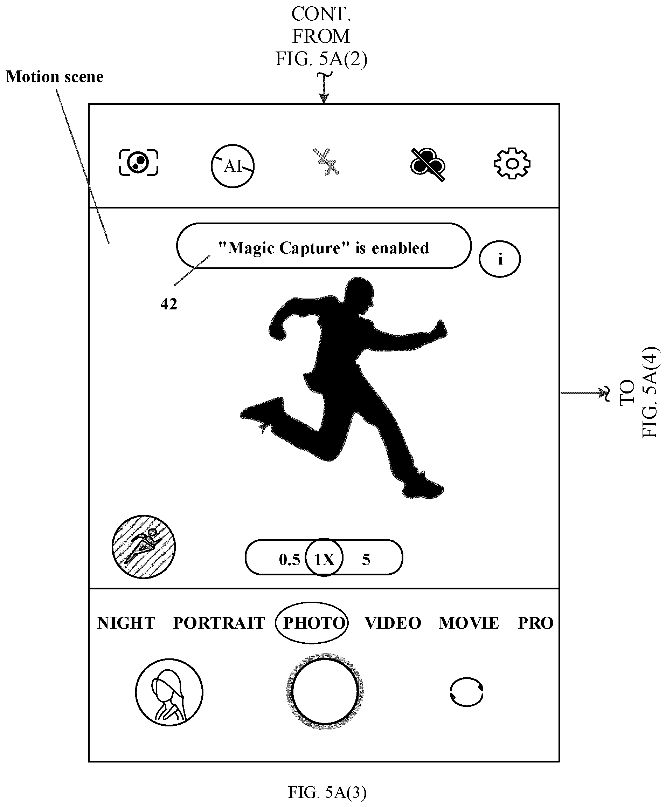

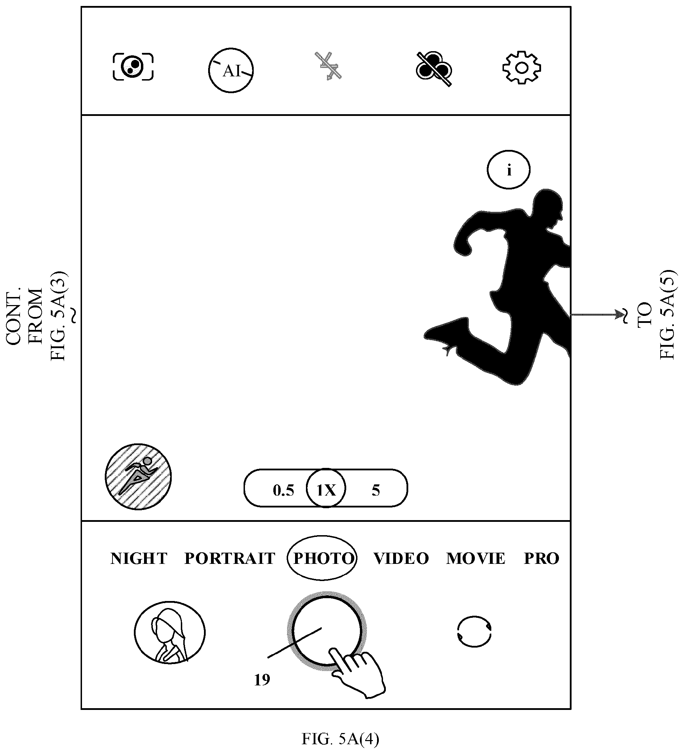

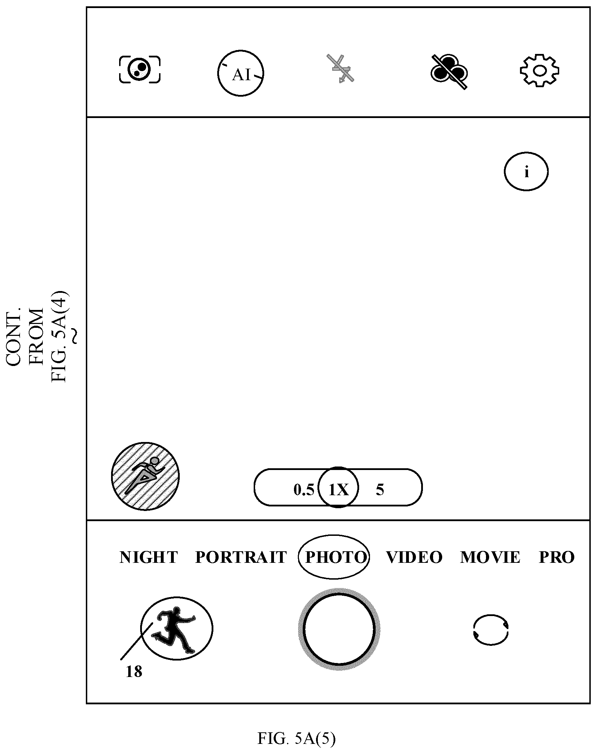

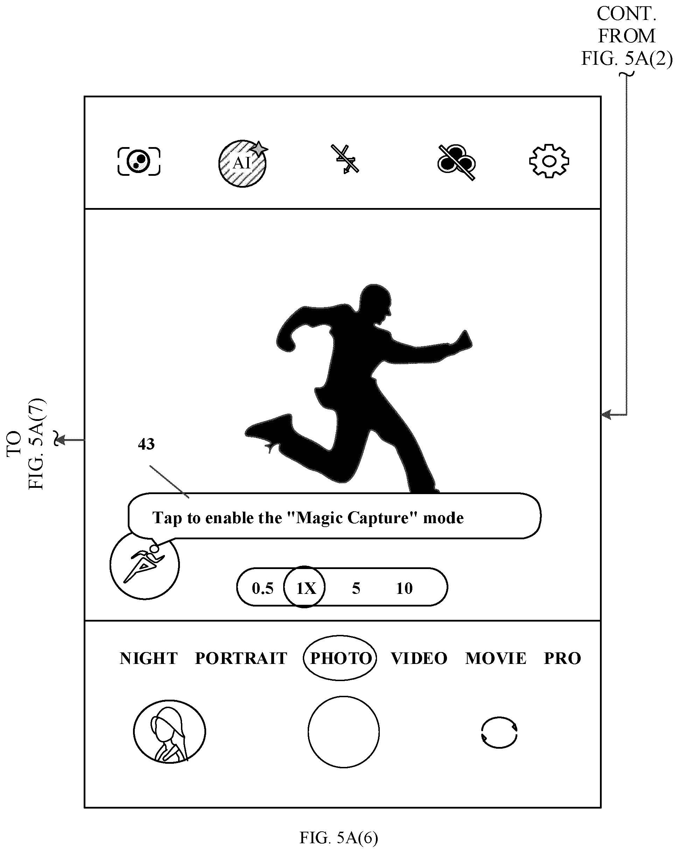

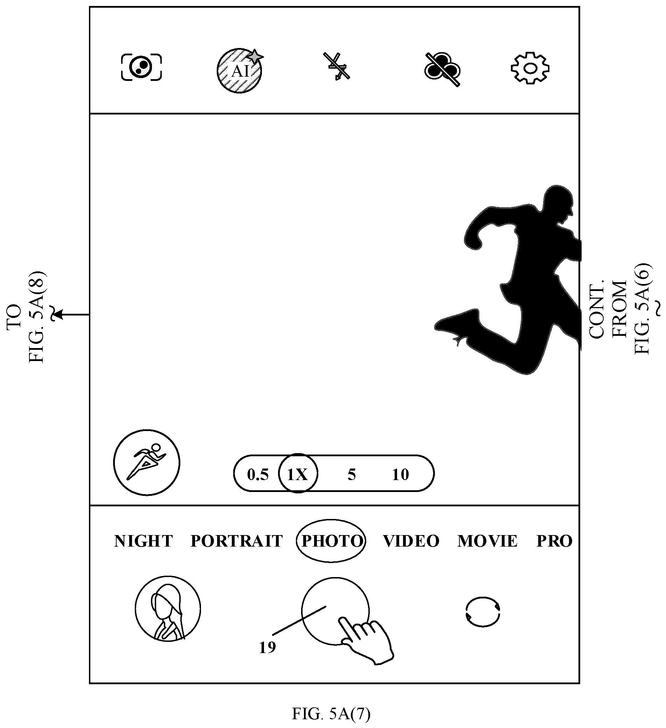

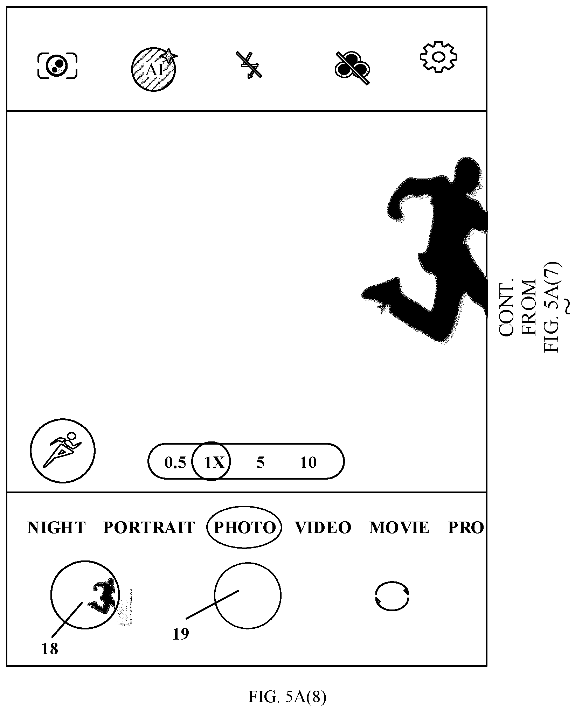

Scene 1: The user is directed to use the capture function for the first time.
1) A display of the terminal device displays the home screen, as shown in FIG. 5A(1). In response to an operation of tapping a camera icon on the home screen by the user, the terminal device starts the camera and displays a photographing preview interface of the camera.

In this embodiment of this application, use of the camera in the terminal device is classified into first use and non-first use. In this embodiment of this application, use of the camera may be referred to as first use of the camera if either of the following conditions is met:
a. The user purchases a new terminal device, and a camera is installed on the new terminal device. The camera includes the capture function in this embodiment of this application. In this case, the user first taps to start the camera.
b. The user upgrades a system version, the new system version includes the capture function in this embodiment of this application, and the user first taps to start the camera.

For the first use of the camera and the non-first use of the camera, when the user starts the camera, the photographing preview interface of the camera varies. Details are described later, and are not described herein.

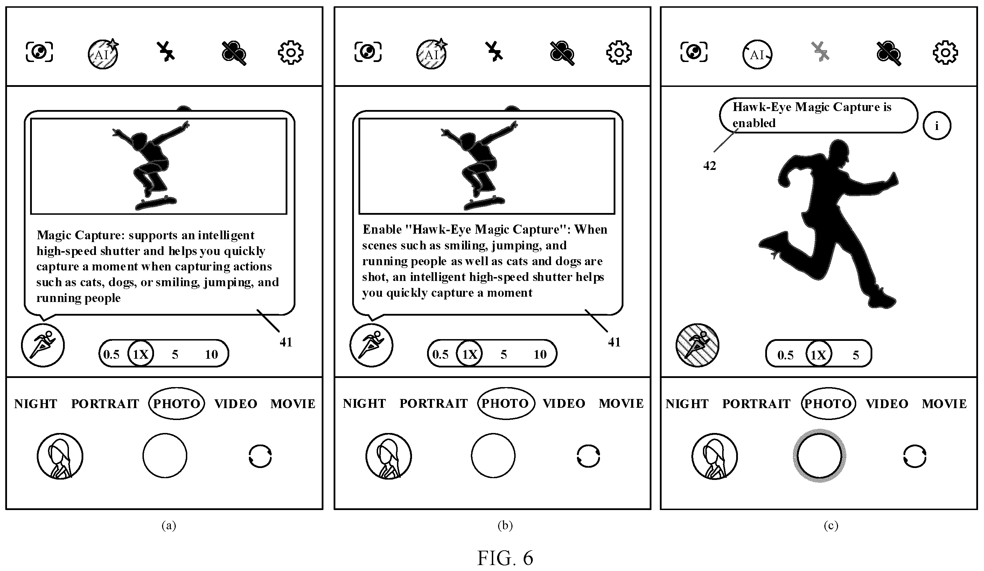

2) When the camera is used for the first time, the photographing preview interface is shown in FIG. 5A(2). The photographing preview interface displays a card 41, and the card 41 displays a description of the capture function. In this embodiment of this application, the card 41 may include a default photo and a text that describes the capture function, for example, the card 41 shown in FIG. 5A(2). The text that describes the capture function is "Enable 'Magic Capture'. When scenes such as smiling, jumping, and running people as well as cats and dogs are shot, an intelligent high-speed shutter helps you capture a moment". The text that describes the capture function in the card 41 may alternatively be other content, for example, "Magic Capture: supports an intelligent high-speed shutter, which helps you quickly capture a moment when actions such as cats, dogs, or smiling, jumping, and running people are captured" included in the card 41 shown in (a) in FIG. 6, and "Enable 'Hawk-Eye Magic Capture'. When scenes such as smiling, jumping, and running people as well as cats and dogs are shot, an intelligent high-speed shutter helps you quickly capture a moment" included in the card 41 shown in (b) in FIG. 6. This is not limited. In addition, the card 41 may point to the icon 11 of the capture function, so that the user learns the icon of the capture function and accurately enables the capture function.

In this embodiment of this application, in a process dimension, within one lifecycle after the camera is started, the card 41 is prompted only once. If the user performs no operation, the card 41 does not disappear. If the user performs an operation, such as tapping a blank area, exiting the camera, or switching the camera mode, the card 41 disappears. The card 41 is displayed only when the camera is used for the first time, thereby preventing repeated reminders from affecting user experience.

In an interface shown in FIG. 5A(2), the terminal device enables an AI photography function and displays a focal length range supported by the AI photography function, for example, a supported long focus of up to 10X shown in FIG. 5A(2). After the AI photography function is enabled, the flash is disabled, but the flash is available. In other words, in response to an operation of tapping the flash icon by the user, the terminal device may enable the flash.

3) In response to that the user taps the icon 11 of the capture function in the photographing preview interface shown in FIG. 5A(2) and the card 41 disappears, the terminal device enables the capture function. The icon 11 of the capture function is enabled (for example, highlighted), and the icon 12 of the AI photography function is disabled. In addition, the terminal device may display a toast prompt box in a preview window, for example, a message prompt box 42 that includes "'Magic Capture' is enabled", as shown in FIG. 5A(3). In this case, the terminal device may intelligently identify a scene subject and capture a picture, for example, running people shown in FIG. 5A(3).

In this embodiment of this application, the message prompt box 42 may disappear after being displayed for specified duration (for example, 3 seconds), or the message prompt box 42 may disappear after the user performs an operation. This is not limited. In addition, description information included in the message prompt box 42 may alternatively be adjusted based on actual requirements. As shown in (c) in FIG. 6, the message prompt box 42 may include description information such as "Hawk-Eye Magic Capture is enabled".

The capture function is mutually exclusive with the flash. After the capture function is enabled, the flash is disabled and the flash icon is set to be gray. In this case, the flash function is disabled. In addition, the focal length range is switched to a focal length range supported by the capture function, for example, a supported long focus of up to 5X shown in FIG. 5A(3).

To prompt the user that the terminal device is performing capture, after the terminal device enables the capture function, an optical ring is displayed on an outer side of the shooting icon, and the optical ring has a dynamic effect of color conversion.

4) The terminal device disables the automatic capture function by default. A scene in the photographing preview interface is a motion scene, and a state of a subject in the scene constantly changes. For example, a state of people shown in FIG. 5A(3) is changed to a state of people shown in FIG. 5A(4). In response to an operation of manually tapping the shooting icon in the photographing preview interface shown in FIG. 5A(4) by the user, when intelligently identifying a magic moment that needs to be shot, the terminal device captures the magic moment and generates a photo. For a specific process, refer to the foregoing process of manually tapping the shooting icon to perform manual capture, and refer to related descriptions of step S11-step S13 in FIG. 4-1. After the photo is generated, the terminal device displays a thumbnail of the photo in a gallery preview window 18 in the photographing preview interface, as shown in FIG. 5A(5). A time at which the gallery preview window displays the thumbnail of the photo is delayed by second preset duration relative to a time at which the user taps the shooting icon.

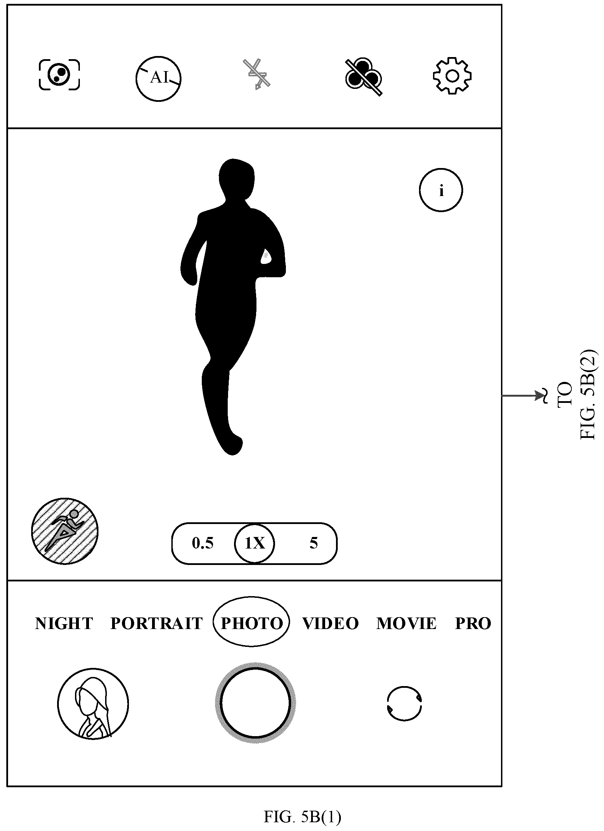

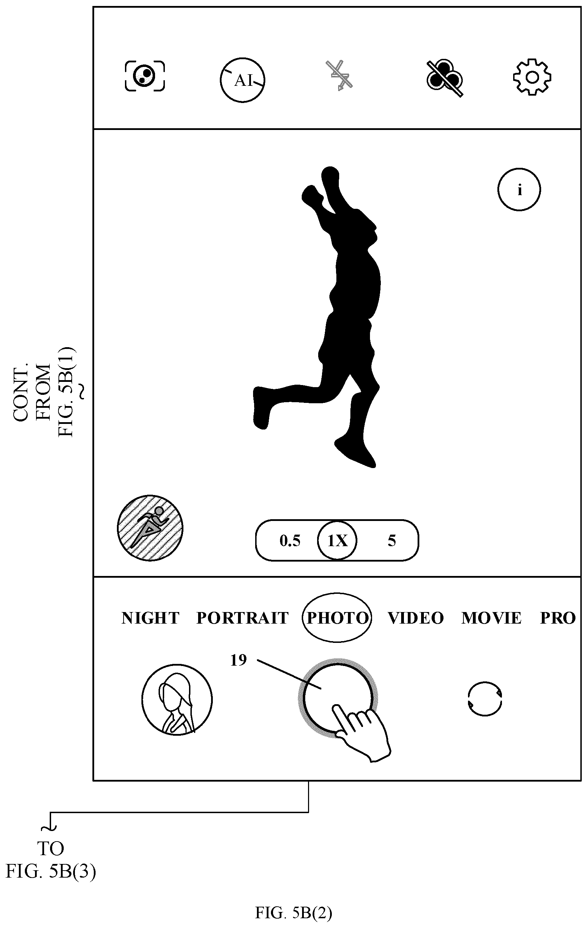

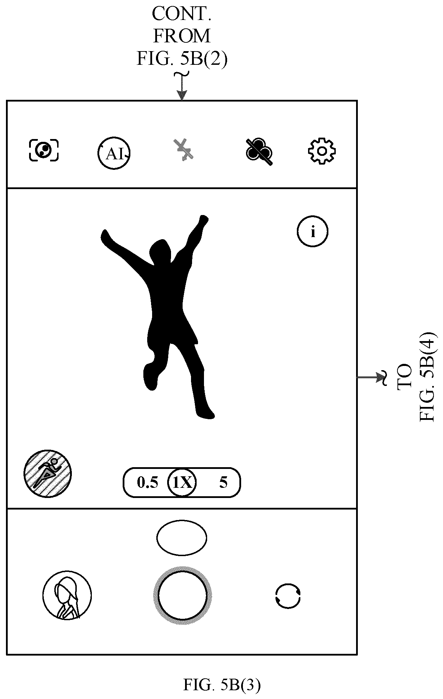

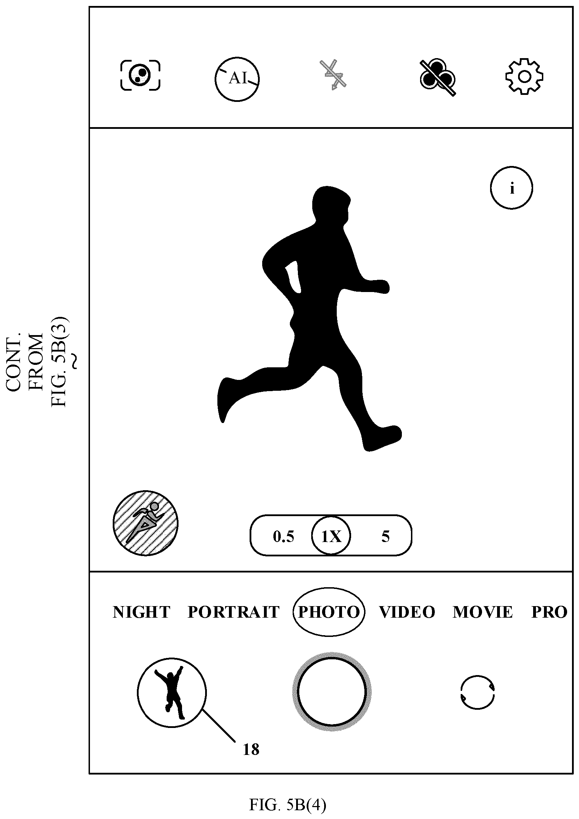

In this embodiment of this application, in response to an operation of tapping the shooting icon in the photographing preview interface by the user, a picture saved by the terminal device may be earlier than the moment at which the user taps the shooting icon, as shown in FIG. 5A(3), FIG. 5A(4), and FIG. 5A(5), or the picture saved by the terminal device may be later than the moment at which the user taps the shooting icon, as shown in FIG. 5B(1), FIG. 5B(2), FIG. 5B(3), and FIG. 5B(4). As shown in FIG. 5B(2), in a case in which the capture function is enabled, the user taps the shooting icon 19 to trigger photographing. As shown in FIG. 5B(4), in response to an operation of the user, the terminal device "captures" a magic moment, provides the user with a photo at the magic moment, and displays a thumbnail of the photo, for example, a thumbnail of a picture at a moment shown in FIG. 5B(3). It should be noted that the terminal device selects a frame of picture after the shooting moment based on a frame selection policy provided in this embodiment of this application, and generates a photo.

In this embodiment of this application, the automatic capture function being disabled by default means that after the user purchases a new terminal device or upgrades a system version, in a case in which the user does not perform a setting operation on a camera, the automatic capture function is disabled by default.

5) If the user does not tap the icon 11 of the capture function after the terminal device displays the photographing preview interface shown in FIG. 5A(2), after the card 41 disappears for fourth preset duration, the terminal device displays a bubble 43 shown in FIG. 5A(6), to prompt the user to enable the capture function. As shown in FIG. 5A(6), the bubble 43 prompts the user to enable the capture function. The bubble 43 points to the icon 11 of the capture function, and includes text description content such as "Tap to enable the 'Magic Capture' mode". In this embodiment of this application, the description information included in the bubble 43 may alternatively be adjusted based on actual requirements, provided that the user is prompted to enable the capture function. The bubble 43 may include description information such as "Tap to enable Hawk-Eye Magic Capture".

After the terminal device displays the bubble 43, if the user performs no operation, the bubble disappears after expiration of fifth preset duration. The fourth preset duration and the fifth preset duration may be set based on actual requirements, and the fourth preset duration and the fifth preset duration may be the same or different. For example, both the fourth preset duration and the fifth preset duration are 5 seconds (s). In this embodiment of this application, a simple text is used to prompt the user to enable the capture function, so that the user shoots a high-quality photo, thereby improving user experience.

6) A scene in the photographing preview interface is a motion scene, and a state of a subject in the scene constantly changes. For example, a state of people shown in FIG. 5A(6) is changed to a state of people shown in FIG. 5A(7). In response to an operation of tapping the shooting icon 19 in the photographing preview interface shown in FIG. 5A(7) by the user, the terminal device captures a frame of picture when the user taps the shooting icon, as a captured photo, and saves the photo. After the photo is generated, the terminal device displays a thumbnail of the photo in a gallery preview window 18 in the photographing preview interface, as shown in FIG. 5A(8). A time difference between a time at which the gallery preview window displays the thumbnail of the photo and a time at which the user taps the shooting icon may be ignored. It may be considered that the time at which the user taps the shooting icon is the time at which the gallery preview window displays the thumbnail of the photo.

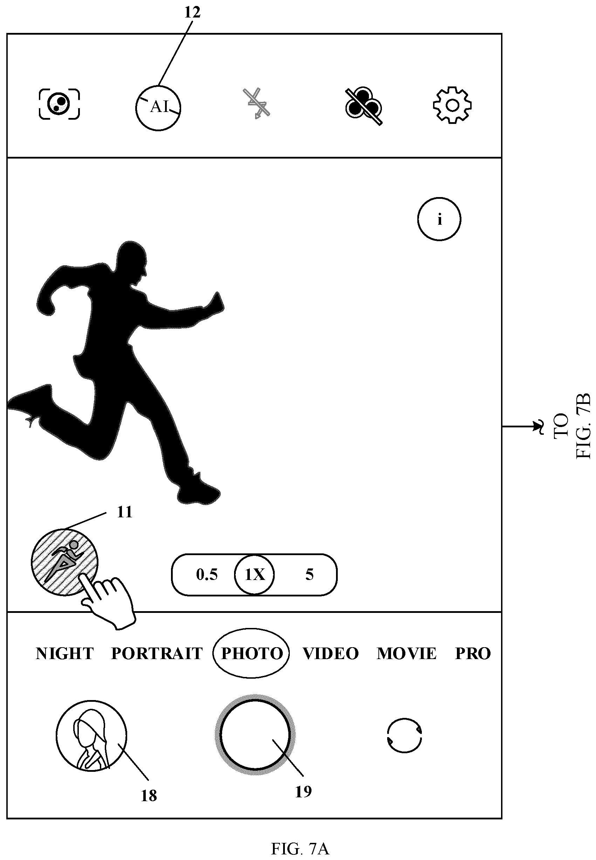

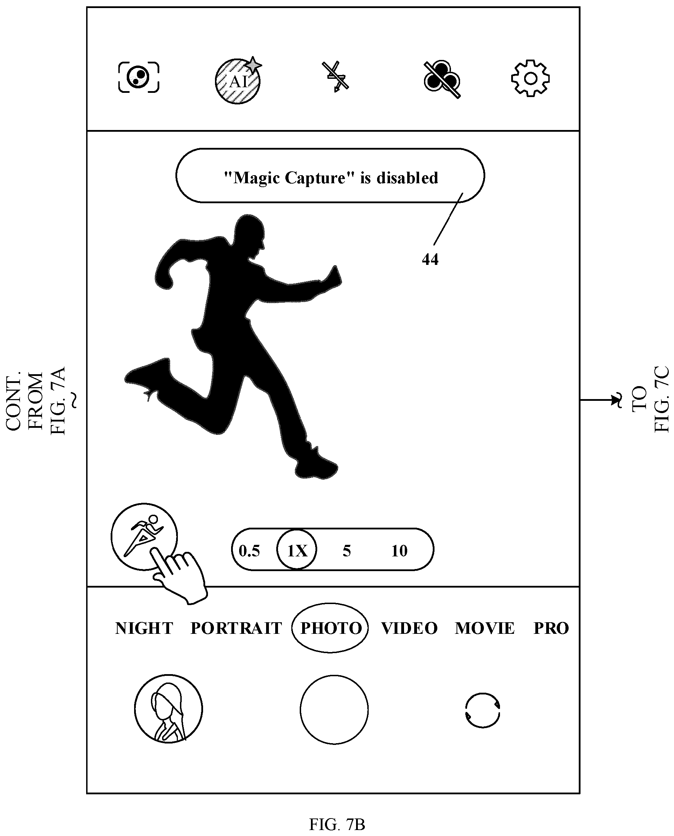

Scene 2: The user is directed to use the automatic capture function for the first time.
1) If the camera is used for the first time, after the user enables the capture function and the message prompt box 42 disappears, the terminal device displays an interface shown in FIG. 7A.
2) In response to that the user taps the icon 11 of the capture function in the interface shown in FIG. 7A to manually disable the capture function, the terminal device displays an interface shown in FIG. 7B. In this case, the icon 12 of the AI photography function is enabled (for example, highlighted), and the icon 11 of the capture function is disabled. The terminal device may display a toast prompt box in a preview window, for example, a message prompt box 44 that includes "'Magic Capture' is disabled", as shown in FIG. 7B, to prompt the user that the capture function is manually disabled.

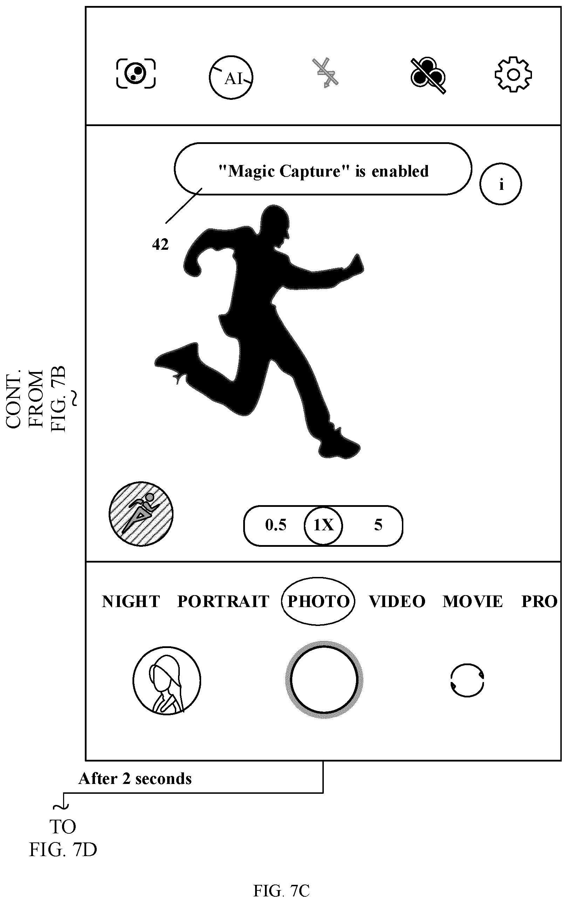

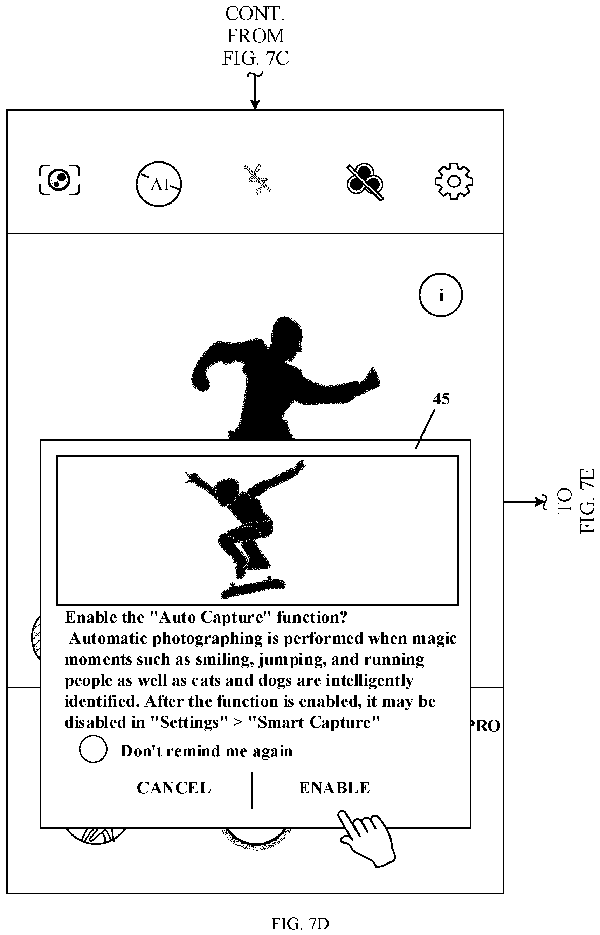

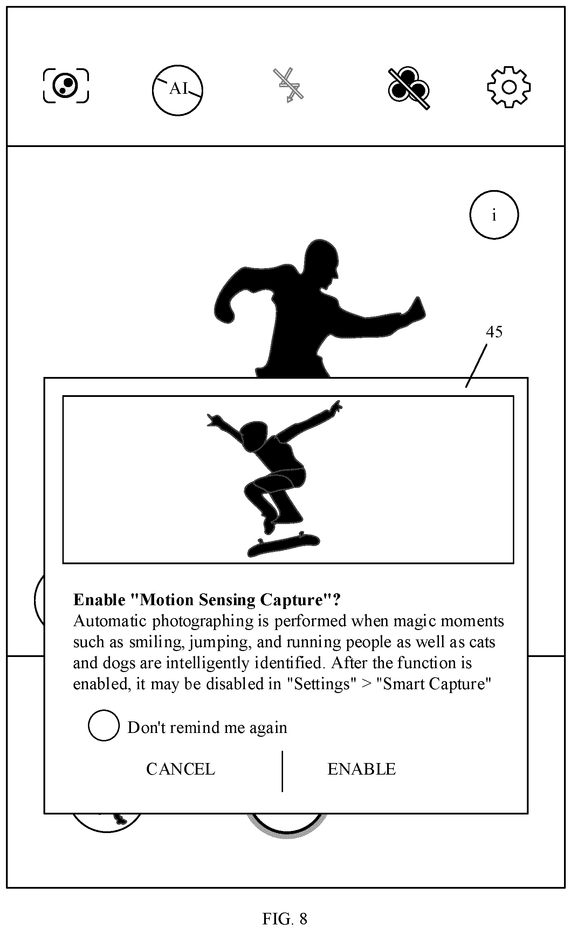

In this embodiment of this application, the message prompt box 44 may disappear after being displayed for specified duration (for example, 3 seconds), or the message prompt box 44 may disappear after the user performs an operation. This is not limited. Description information included in the message prompt box 44 may alternatively be adjusted based on actual requirements. For example, the message prompt box 44 may include description information such as "Hawk-Eye Magic Capture is disabled".
3) In response to an operation of tapping the icon of the capture function by the user for the second time, that is, in response to that the user taps the icon 11 of the capture function in the photographing preview interface shown in FIG. 7B, the terminal device enables the capture function again, displays an interface shown in FIG. 7C, the icon 11 of the capture function is enabled, and the icon 12 of the AI photography function is disabled. In addition, the terminal device may display a toast prompt box, namely, the message prompt box 42, in the preview window. In this case, the terminal device may intelligently identify a scene subject and capture a picture, for example, running people shown in FIG. 7C. The interface shown in FIG. 7C is the same as the interface shown in FIG. 5A(3). Reference may be made to a description of the interface shown in part FIG. 5A(3).
4) Upon expiration of 2 seconds after the terminal device enables the capture function for the second time, the terminal device displays an interface shown in FIG. 7D, and displays a pop-up window 45 in the photographing preview interface to prompt the user whether to enable the automatic capture function. The pop-up window 45 includes a default photo, a text that describes the automatic capture function, and a function option. The pop-up window 45 shown in FIG. 7D includes: a text that describes the automatic capture function such as "Enable the 'Auto Capture' function? Automatic photographing is performed when magic moments such as smiling, jumping, and running people as well as cats and dogs are intelligently identified. After the function is enabled, it may be disabled in 'Settings' > 'Smart Capture'", and options of "Don't remind me again", "CANCEL", and "ENABLE". In this embodiment of this application, the text that describes the automatic capture function may alternatively be other text content. For example, the pop-up window 45 shown in FIG. 8 includes: "Enable the 'Motion Sensing Capture' function? Automatic photographing is performed when magic moments such as smiling, jumping, and running people as well as cats and dogs are intelligently identified. After the function is enabled, it may be disabled in 'Settings' > 'Smart Capture'". This is not limited.

After the user taps "ENABLE" in the pop-up window 45, a switching item of the automatic capture function of the "Smart Capture" setting item in the terminal device is enabled synchronously. The terminal device may use the automatic capture function, generate a photo, and assist in the manual capture function. To be specific, in a photographing preview interface of the camera, the terminal device supports the user in manually tapping the shooting icon to perform capture. In addition, the terminal device may further automatically identify a "magic" moment to complete automatic capture. After the user taps "CANCEL" in the pop-up window 45, the terminal device does not enable automatic capture. To be specific, the user needs to tap the shooting icon, and the terminal device performs capture in response to an operation of tapping the shooting icon by the user. If the user does not tap the shooting icon, the terminal device does not automatically perform capture or save a photo.

In this embodiment of this application, arrangements of the "Smart Capture" setting item and the "Auto Capture" switching item in the terminal device are shown in FIG. 3B and FIG. 3C. When the user performs setting to enable the automatic capture function, and when the capture function is enabled, automatic capture and manual capture are supported. When the user performs setting to disable the automatic capture function, and when the capture function is enabled, only manual capture is supported.

In addition, if, after the camera is used for the first time, the user performs setting in the "Smart Capture" setting item to enable the automatic capture function, the terminal device no longer displays the pop-up window 45 shown in FIG. 7D during or after manual tapping of the icon 11 of the capture function for the second time. If, after the camera is used for the first time, the user does not perform setting in the "Smart Capture" setting item to enable the automatic capture function, the terminal device displays the pop-up window 45 shown in FIG. 7D after manual tapping of the icon 11 of the capture function for the second time, but no longer displays the pop-up window 45 shown in FIG. 7D in a subsequent process. In addition, in a process dimension, within one lifecycle after the camera is started, the pop-up window 45 is prompted only once, to improve user experience.

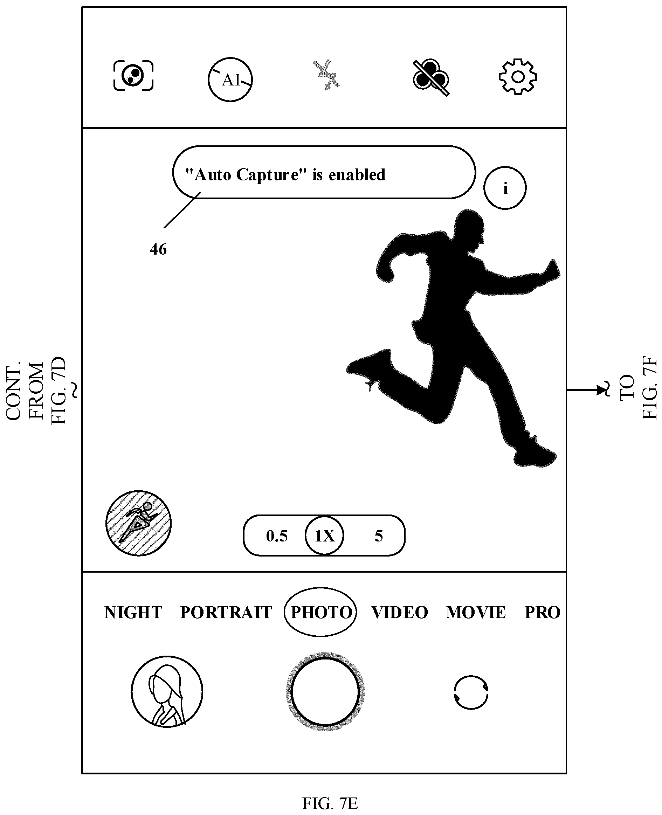

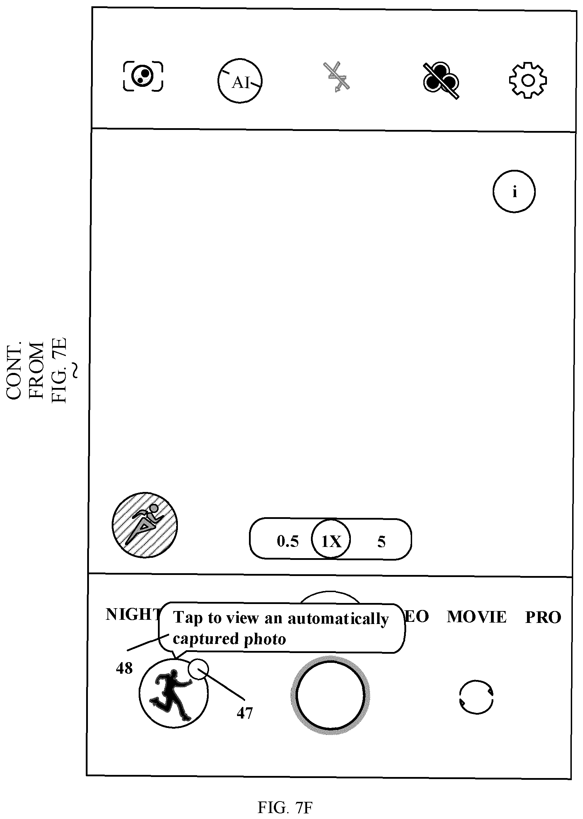

In addition, if the user selects the option "Don't remind me again" in the pop-up window 45, the terminal device no longer prompts the user to enable the capture function, for example, a subsequent bubble 43 is no longer prompted.
5) In response to an operation of tapping the "ENABLE" option in the pop-up window 45 by the user, the terminal device enables the automatic capture function, and the terminal device may display a toast prompt box in a preview window, to prompt that the automatic capture function is enabled, for example, a message prompt box 46 that includes "'Auto Capture' is enabled", as shown in FIG. 7E. Description information included in the message prompt box 46 may alternatively be adjusted based on actual requirements. For example, the message prompt box 46 may include description information such as "Motion Sensing Capture is enabled".
6) After the terminal device enables the automatic capture function, the user does not need to tap the shutter, and the terminal device may intelligently identify a scene subject, capture a picture, and generate a photo. For a specific process, refer to the foregoing description in FIG. 4-3. After a photo is obtained through automatic capture, the gallery preview window displays a thumbnail and a specified symbol of the photo. The specified symbol indicates that the photo displayed in the gallery preview window 18 is a photo obtained through automatic capture. As shown in FIG. 7F, the specified symbol is a small circle 47 on the gallery preview window. During automatic capture, a time at which the gallery preview window 18 displays the thumbnail of the photo is delayed relative to a moment indicated by the captured photo. For example, in FIG. 7F, when the gallery preview window displays the thumbnail of the photo, a scene subject displayed in the preview window already does not exist.

To direct the user to properly use the camera and preview a photo, after a photo is obtained through automatic capture for the first time, the terminal device may display a bubble 48 in the photographing preview interface, to prompt the user to view the photo obtained through automatic capture. For example, the bubble 48 is shown in FIG. 7F. The bubble 48 points to the gallery preview window and includes a description text "Tap to view an automatically captured photo". The description information included in the bubble 48 may alternatively be adjusted based on actual requirements. For example, the bubble 48 may include description information such as "View an automatically captured photo".

After the terminal device displays the bubble 48, if the user performs no operation, the bubble disappears after expiration of sixth preset duration. The sixth preset duration may be set based on actual requirements. For example, the sixth preset duration may be 5 seconds. After the bubble 48 disappears, the terminal device continues to perform automatic capture and generates a photo.

In a process dimension, within one lifecycle after the camera is started, the bubble 48 is prompted only once. A total quantity of times of prompting the bubble 48 is less than or equal to a specified quantity of times, such as one time or three times.

To prompt the user that the terminal device is performing capture, after the terminal device enables the capture function, an optical ring is displayed on an outer side of the shooting icon, and the optical ring has a dynamic effect of color conversion.

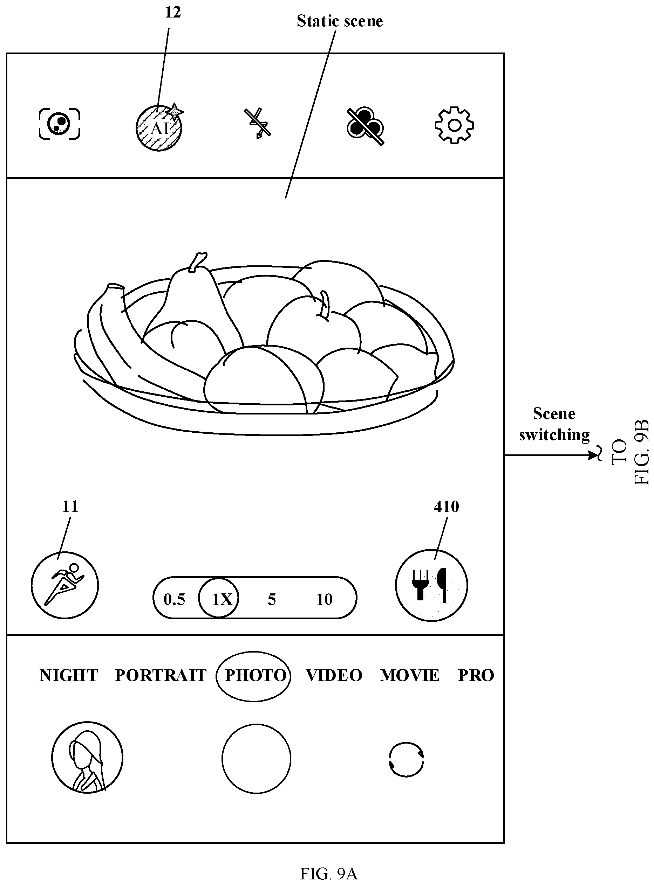

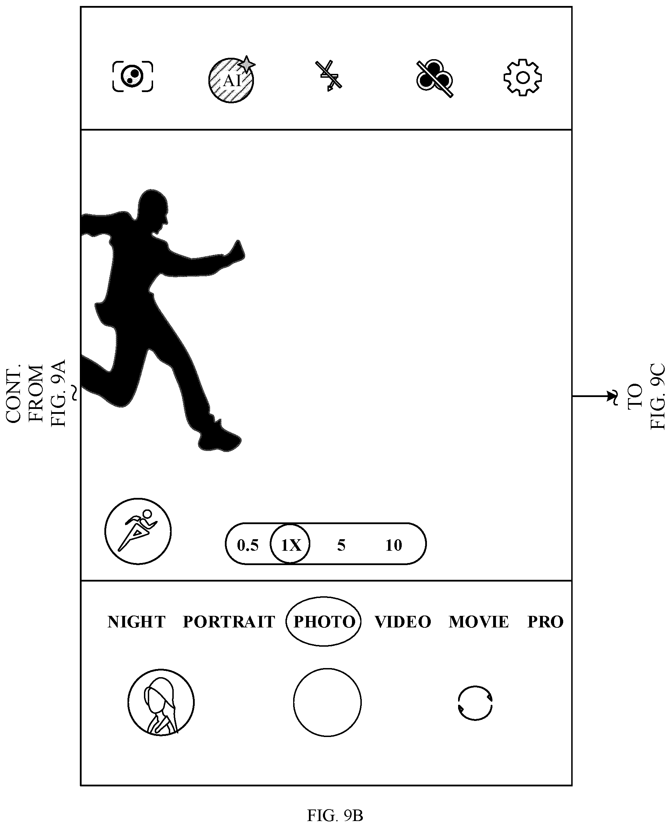

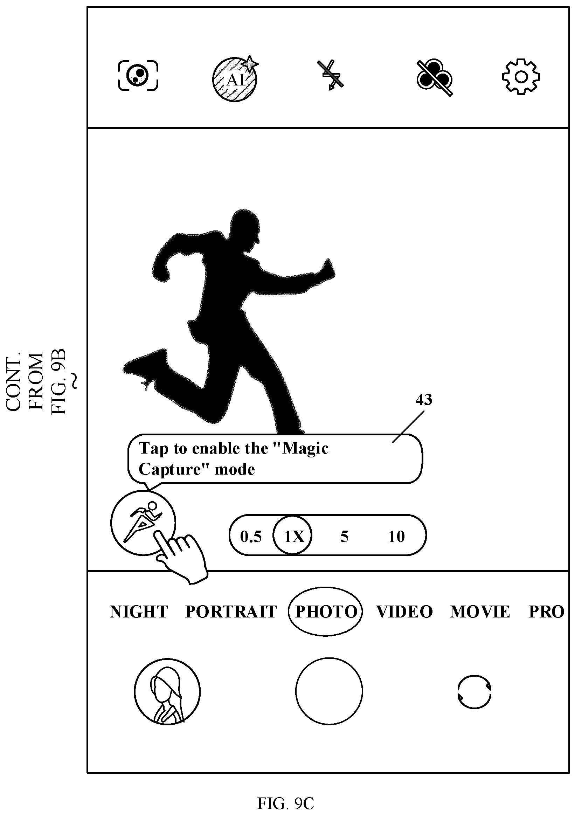

Scene 3: The terminal identifies a scene, and intelligently prompts to enable the capture function.
1) If the user does not enable the capture function when the camera is used for the first time, an AI photography function is used by default to perform photographing. In a photographing preview interface shown in FIG. 9A, an icon 12 of the AI photography function is enabled, the AI photography function is enabled, and the icon 11 of the capture function is disabled. A scene shown in FIG. 9A is a static scene, and is a scene not suitable for the capture function.
2) Later, for example, every other day, when the user uses the camera again to shoot the scene suitable for the capture function, if duration after the last use of the camera reaches specified duration, for example, every other day, the terminal device displays the bubble 43 after identifying a motion scene suitable for the capture function shown in FIG. 9B, to prompt the user to enable the capture function, as shown in FIG. 9C.

In this embodiment of this application, a rule for prompting the bubble 43 may be as follows: In a process dimension, within one lifecycle after the camera is started, the bubble is prompted only once. On a premise that the user does not clear a buffer of the terminal device, if the user never taps the icon of the capture function and the terminal device never enables the capture function, a quantity of times of prompting the bubble 43 is not limited, so as to prompt the user to use the capture function, thereby improving quality of a shot photo. If the user has previously tapped the icon of the capture function and the terminal device has previously enabled the capture function, the bubble 43 is no longer output, so as to reduce impact on the user's use of the camera. A recommended interval of the bubble 43 may be calculated by day or hour, and no bubble prompt is output within the recommended interval, so as to reduce impact on the user's use of the camera.

3) The user taps the icon 11 of the capture function in the photographing preview interface shown in FIG. 9C and the terminal device switches to enable the capture function. The icon 11 of the capture function is enabled, and the icon 12 of the AI photography function is disabled, as shown in FIG. 7C. In addition, the terminal device may display a toast prompt box in a preview window, for example, a message prompt box 42 that includes "'Magic Capture' is enabled", as shown in FIG. 7C.

The terminal device may intelligently identify a scene subject and capture a picture. If the terminal device enables the automatic capture function, the terminal device supports automatic capture and manual capture subsequently. If the terminal device does not enable the automatic capture function, the terminal device supports only manual capture subsequently.

Scene 4: The terminal device memorizes an operation of the user.

In a possible implementation, if the terminal device enables the AI photography function based on a previous operation of the user before the user enables the capture function, as shown in FIG. 5A(2) above, the icon 12 corresponding to the AI photography function is enabled and the AI photography function is in an enabled state. Because the user manually taps to enable the capture function, the AI photography function is disabled, and the icon 12 corresponding to the AI photography function is disabled, that is, the AI photography function is in a disabled state. The terminal device memorizes an operation of the user. When the user disables the capture function, the terminal device automatically enables the AI photography function. To be specific, an icon corresponding to the AI photography function in the photographing preview interface displayed by the terminal device is automatically enabled, and the AI photography function is automatically enabled. On the contrary, if the AI photography function of the terminal device is disabled before the user enables the capture function, the icon 12 corresponding to the AI photography function is disabled, that is, the AI photography function is in a disabled state. When the user disables the capture function, the AI photography function of the terminal device is still disabled.

In another possible implementation, if the terminal device enables the capture function based on a previous operation of the user before the user enables the AI photography function, as shown in FIG. 5A(3) above, the icon 11 corresponding to the capture function is enabled, and the capture function is in an enabled state. Because the user manually taps to enable the AI photography function, the capture function is disabled, and the icon 11 corresponding to the capture function is disabled, that is, the capture function is in a disabled state. The terminal device memorizes an operation of the user. When the user disables the AI photography function, the terminal device automatically enables the capture function. To be specific, an icon corresponding to the capture function in the photographing preview interface displayed by the terminal device is automatically enabled, and the capture function is automatically enabled. On the contrary, if the capture function of the terminal device is disabled before the user enables the AI photography function, the icon 11 corresponding to the capture function is disabled, and the capture function is in a disabled state. When the user disables the AI photography function, the capture function of the terminal device is still disabled.

Based on the foregoing description, scene 4 may be further divided into scene 41 and scene 42.

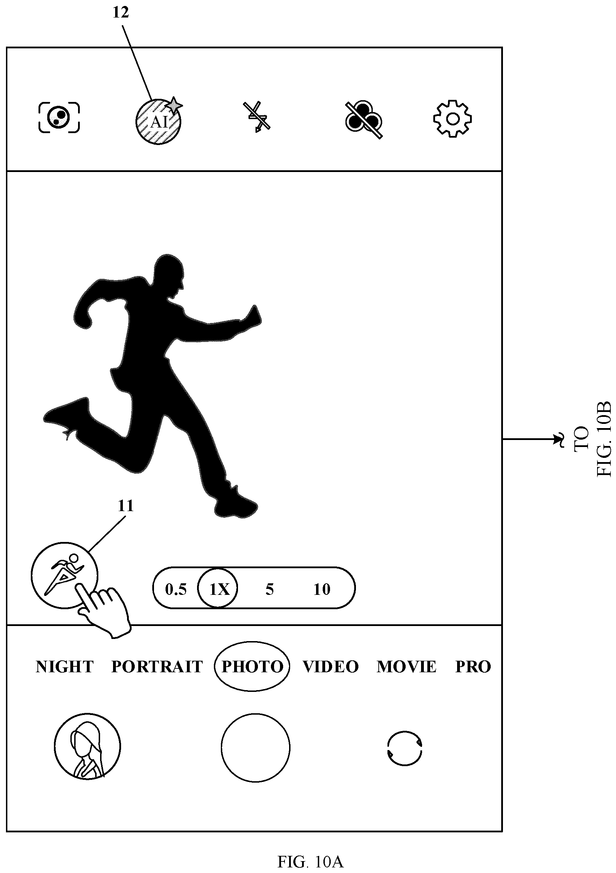

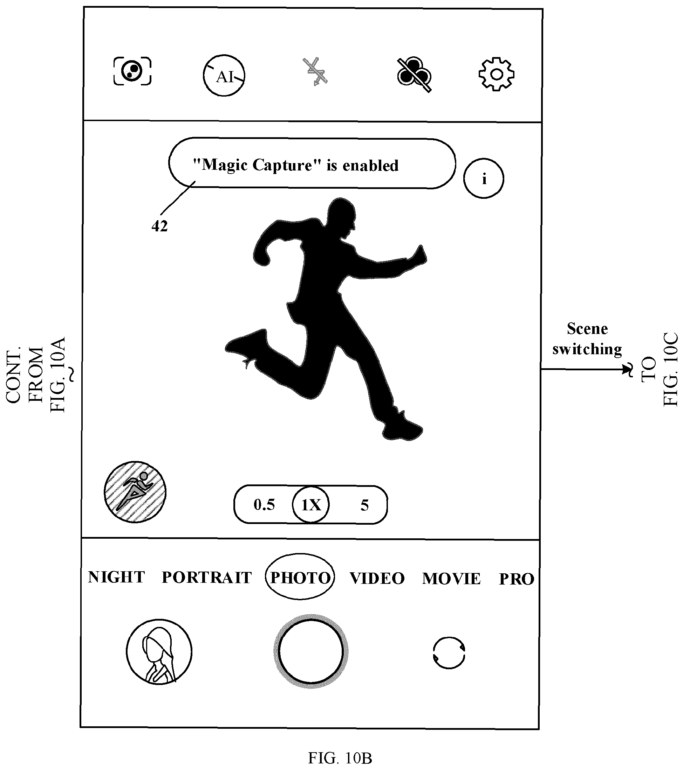

Scene 41: The terminal device memorizes an operation of the user, and automatically enables the AI photography function.
1) A photographing preview interface of the camera is shown in FIG. 10A. The AI photography function is enabled and the capture function is disabled. In response to an operation of manually tapping an icon 11 of the capture function in the photographing preview interface shown in FIG. 10A by the user, the terminal device enables the capture function, and displays a photographing preview interface shown in FIG. 10B.
2) As shown in FIG. 10B, the terminal device enables the capture function and disables the AI photography function, and the terminal device may display a toast prompt box in a preview window, to prompt that the capture function is enabled, for example, a message prompt box 42 shown in FIG. 10B. After the capture function is enabled, the icon 11 of the capture function is enabled, and the icon 12 of the AI photography function is disabled.

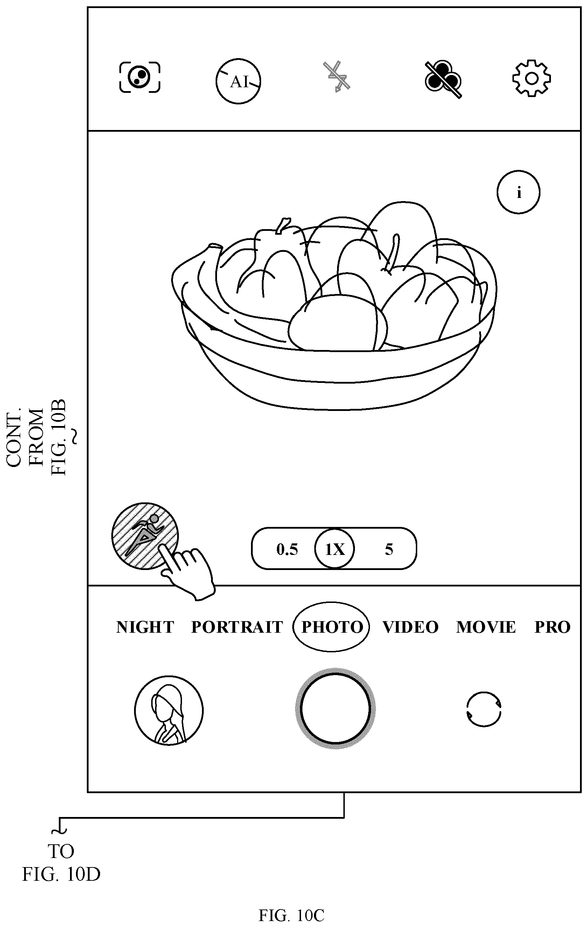

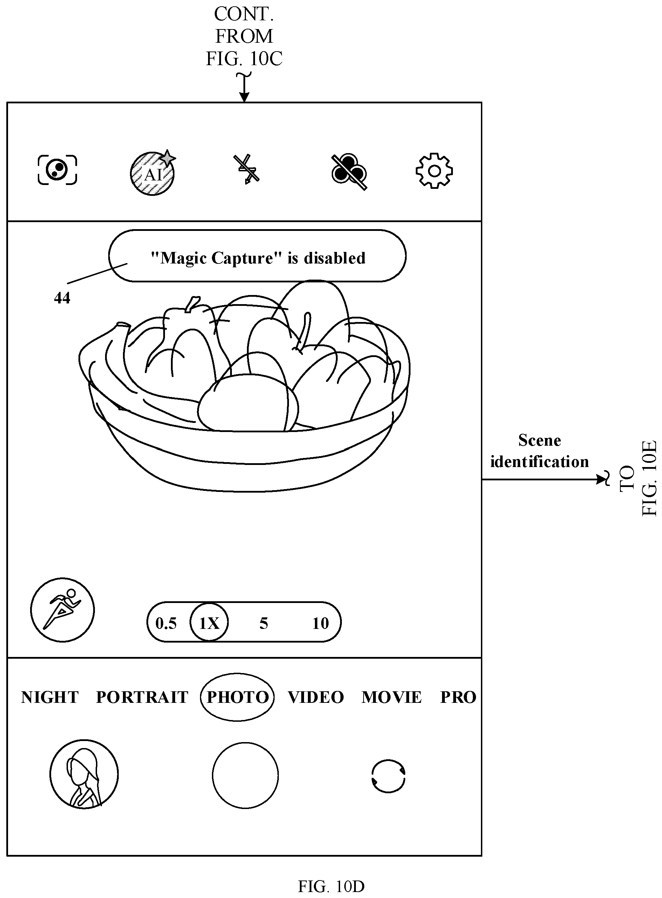

Herein, before the capture function is enabled, the AI photography function is enabled. After the user manually taps the icon of the capture function to enable the capture function, the capture function and the AI photography function are mutually exclusive, and consequently the AI photography function is disabled. In this case, the terminal device memorizes a selection of the user, that is, memorizes a selection of a state of the AI photography function by the user.
3) When the user switches the shooting scene and the switched-to scene is a scene suitable for the AI photography function, for example, a scene shown in FIG. 10B is switched to a scene shown in FIG. 10C. The user manually taps the icon 11 of the capture function in the interface shown in FIG. 10C, and in response to an operation of the user, the terminal device disables the capture function.
4) After disabling the capture function, the terminal device memorizes a previous selection of the user and automatically enables the AI photography function, that is, enables the AI photography function, uses the AI photography function to intelligently identify a scene, and displays a toast prompt box in a preview window, to prompt that the capture function is disabled, for example, a message prompt box 44 that includes "'Magic Capture' is disabled", as shown in FIG. 10D.

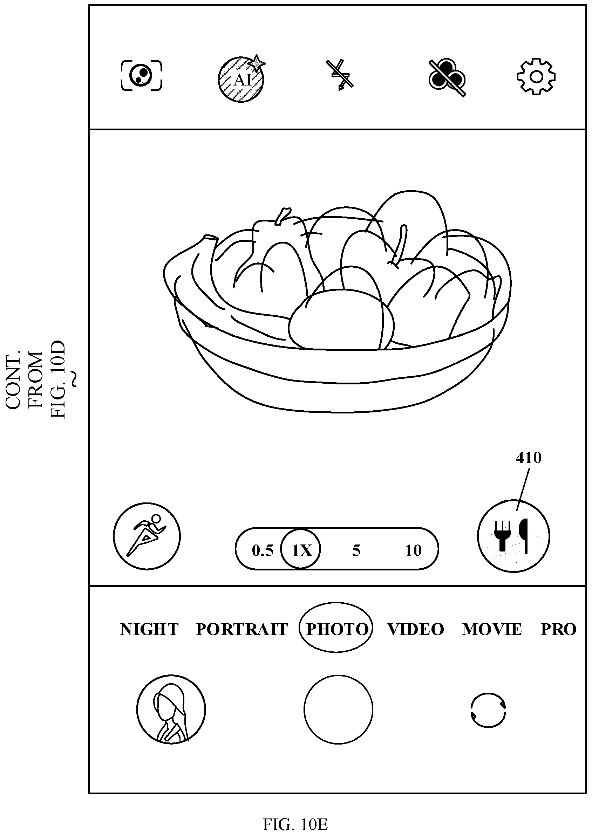

In FIG. 10D, after the AI photography function is enabled, the icon of the AI photography function is enabled, and the icon 11 of the capture function is disabled. In addition, the terminal device identifies a scene shown in FIG. 10D, and displays a corresponding AI scene identifier 410 in the preview window, as shown in FIG. 10E. After the capture function is disabled, the icon 11 of the capture function is disabled, and the icon 12 of the AI photography function is enabled.

Herein, the user manually disables the capture function. Therefore, the terminal device does not memorize a selection of the user, that is, does not memorize a selection of a state of the capture function by the user. In this case, after the user manually disables the AI photography function, the terminal device does not automatically enable the capture function.

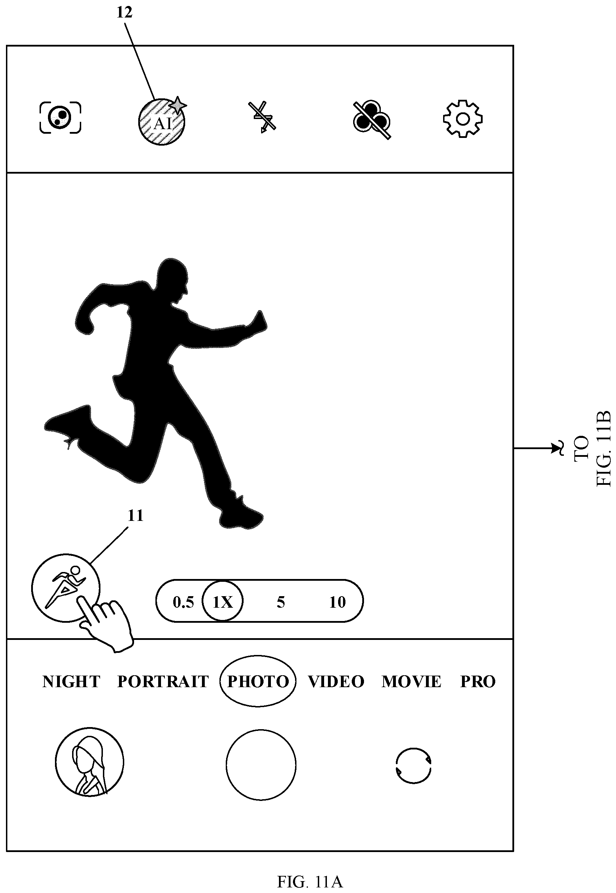

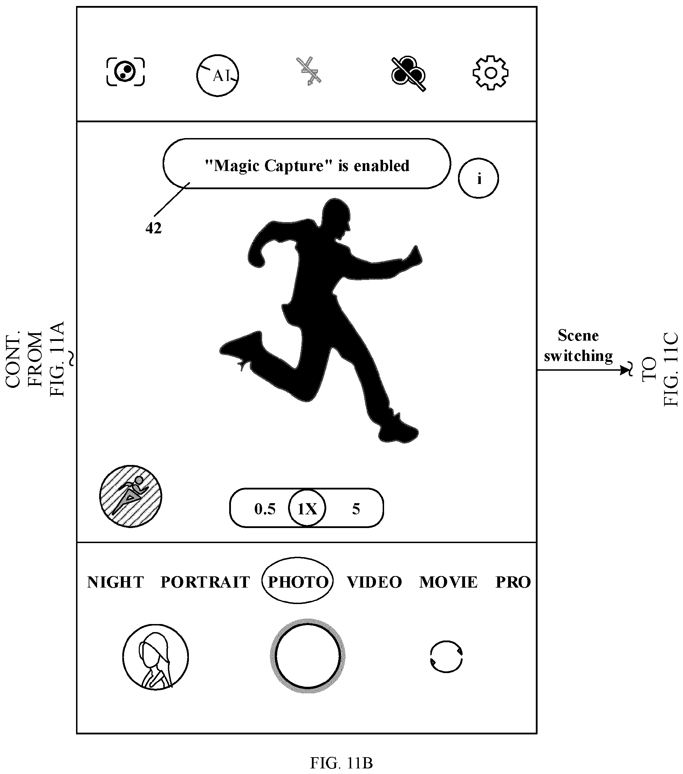

Scene 42: The terminal device memorizes an operation of the user, and automatically enables the capture function.
1) A photographing preview interface of the camera is shown in FIG. 11A. The AI photography function is enabled and the capture function is disabled. In response to an operation of manually tapping an icon 11 of the capture function in the photographing preview interface shown in FIG. 11A by the user, the terminal device enables the capture function, and displays a photographing preview interface shown in FIG. 11B.
2) As shown in FIG. 11B, the terminal device enables the capture function and disables the AI photography function, and the terminal device may display a toast prompt box in a preview window, to prompt that the capture function is enabled, for example, a message prompt box 42 shown in FIG. 11B. After the capture function is enabled, the icon 11 of the capture function is enabled, and the icon 12 of the AI photography function is disabled.

Herein, before the capture function is enabled, the AI photography function is enabled. After the user manually taps the icon of the capture function to enable the capture function, the capture function and the AI photography function are mutually exclusive, and consequently the AI photography function is disabled. In this case, the terminal device memorizes a selection of the user, that is, memorizes a selection of a state of the AI photography function by the user.

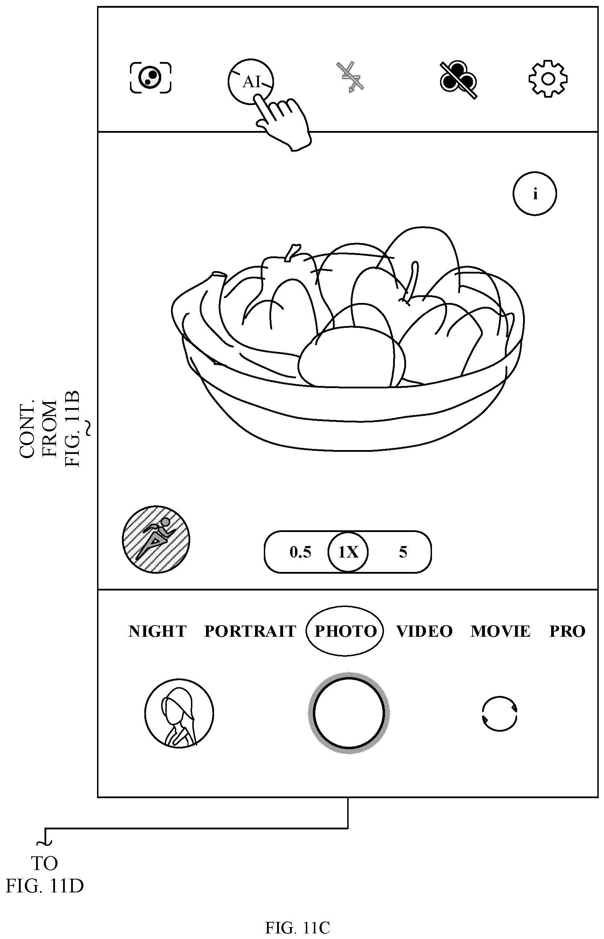

3) When the user switches the shooting scene and the switched-to scene is a scene suitable for the AI photography function, for example, a scene shown in FIG. 11B is switched to a scene shown in FIG. 11C. The user manually taps the icon 12 of the AI photography function to enable the AI photography function.

Herein, before the AI photography function is enabled, the capture function is enabled. After the user manually taps the icon of the AI photography function to enable the AI photography function, the capture function and the AI photography function are mutually exclusive, and consequently the capture function is disabled. In this case, the terminal device memorizes a selection of the user, that is, memorizes a selection of a state of the capture function by the user.

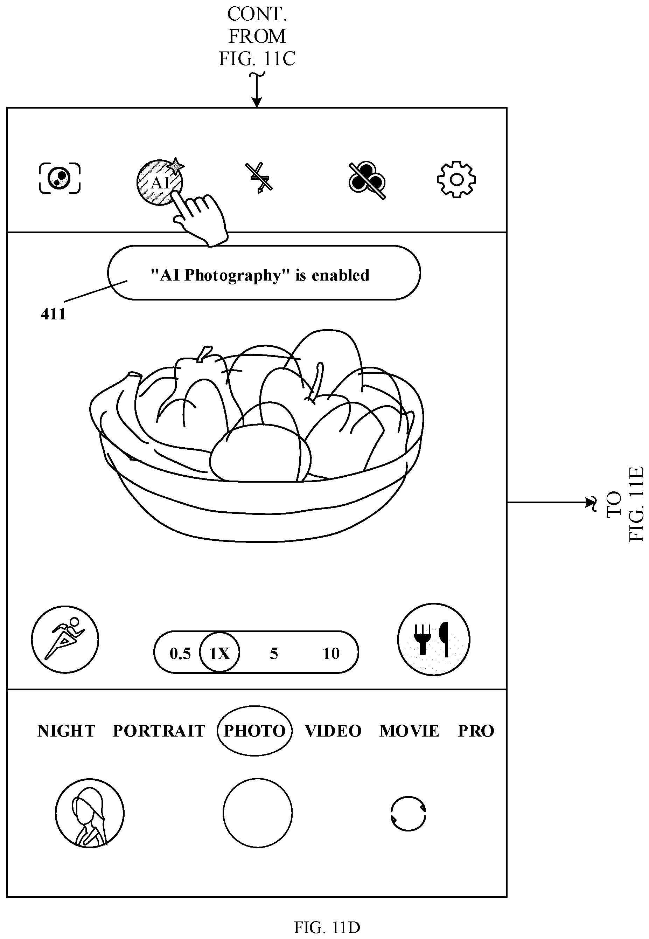

4) Based on the tap operation shown in FIG. 11C, the terminal device enables the AI photography function and disables the capture function, and may further use the AI photography function to intelligently identify a scene and display a corresponding AI scene identifier. After the capture function is disabled, the icon of the capture function is disabled, and the icon of the AI photography function is enabled, as shown in FIG. 11D.

In this embodiment of this application, after the AI photography function is manually enabled, the terminal device may display a toast prompt box in a preview window, for example, a message prompt box 411 that includes "'AI Photography' is enabled", as shown in FIG. 11D. In addition, the terminal device identifies a scene shown in FIG. 11D, and displays a corresponding AI scene identifier in the preview window. Description information included in the message prompt box 411 may alternatively be adjusted based on actual requirements. For example, the message prompt box 411 may include description information such as "The AI photography function is enabled".

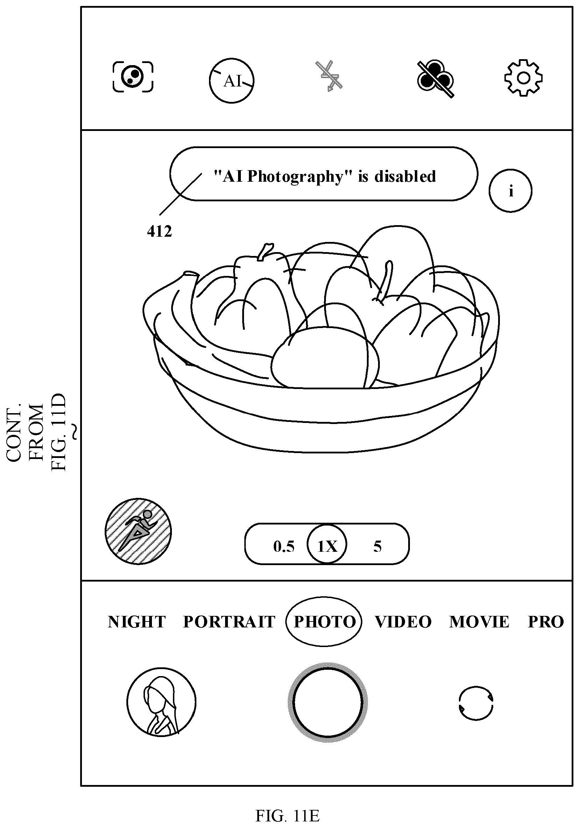

5) When the user wants to use the capture function for photographing, the user may manually tap the icon of the AI photography function in the interface shown in FIG. 11D, and in response to an operation of the user, the terminal device memorizes a previous selection of the user, automatically enables the capture function, and disables the AI photography function, as shown in FIG. 11E.

Herein, the user manually disables the AI photography function. Therefore, the terminal device does not memorize a selection of a state of the AI photography function by the user. In this case, after the user manually disables the capture function, the AI photography function is not enabled automatically.

In this embodiment of this application, after the AI photography function is disabled, the terminal device may display a toast prompt box in a preview window, for example, a message prompt box 412 that includes "'AI Photography' is disabled", as shown in FIG. 11E. Description information included in the message prompt box 412 may alternatively be adjusted based on actual requirements. For example, the message prompt box 412 may include description information such as "The AI photography function is disabled".

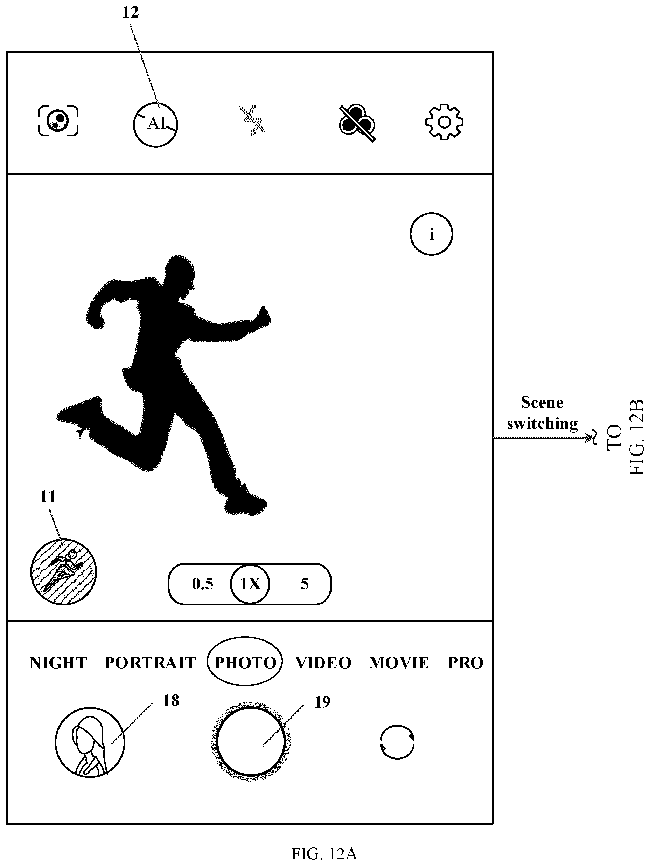

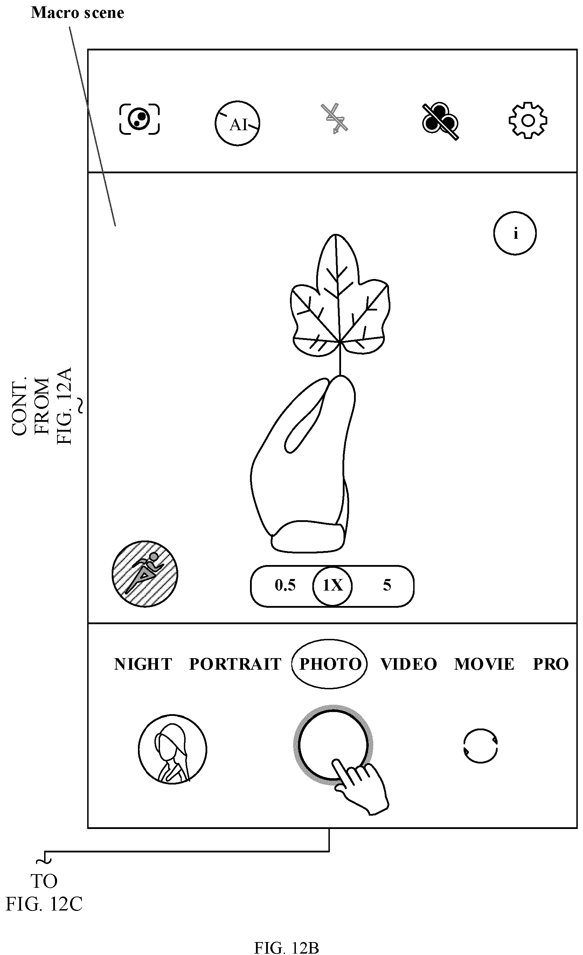

Scene 5: The terminal device identifies a macro scene and enables an AI macro function.
1) A photographing preview interface of the camera is shown in FIG. 12A. The AI photography function is disabled and the capture function is enabled. The terminal device uses the capture function for capture and generates a photo. In FIG. 12A, the icon 11 of the capture function is enabled, and the icon 12 of the AI photography function is disabled.
2) When the user switches the shooting scene, and the terminal device intelligently identifies that the scene is a macro scene, for example, a motion scene shown in FIG. 12A is switched to a macro scene shown in FIG. 12B, the terminal device enables the AI macro function, without requiring the user to manually switch the photographing mode.

In this embodiment of this application, both the capture function and the AI photography function may support identification of a macro scene. In a current photographing mode in which the capture function or the AI photography function is enabled, macro shooting may be implemented, without requiring the user to manually switch the photographing mode. In a case in which the capture function and the AI photography function are enabled, the terminal device may enable a macro capability, but does not display an icon of the macro function, so as to simplify the photographing preview interface.

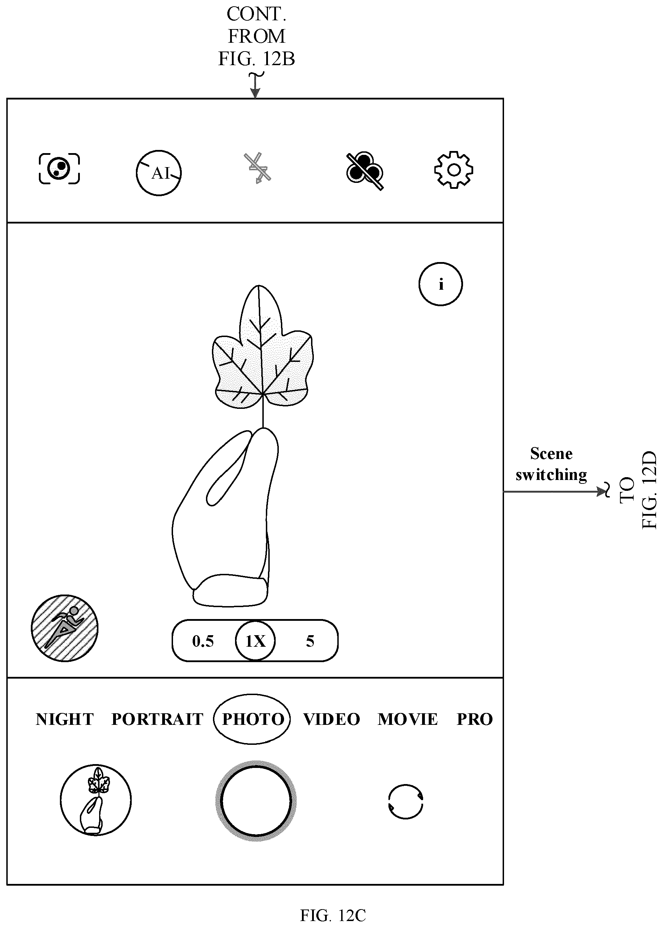

3) The user taps the shooting icon 19 in the interface shown in FIG. 12B to complete photographing. After the photo is generated, the terminal device displays a thumbnail of the photo in a gallery preview window 18, as shown in FIG. 12C.

For a photo shot after the AI macro function is enabled, a time difference between a time at which the gallery preview window displays a thumbnail of the photo and a time at which the user taps the shooting icon may be ignored. It may be considered that the time at which the user taps the shooting icon is the time at which the gallery preview window displays the thumbnail of the photo. In addition, the photo shot after the AI macro function is enabled is not a photo obtained by using the capture function, and does not carry a specified symbol 47.

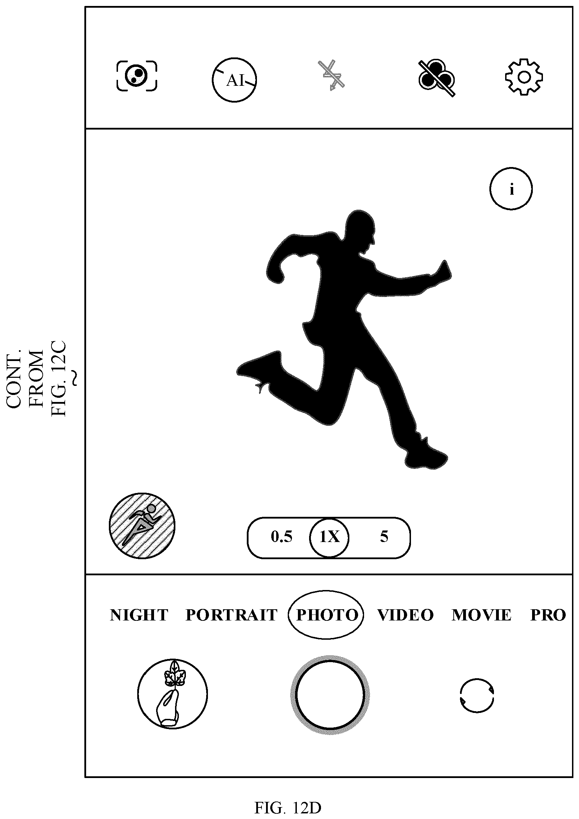

4) When the user switches the shooting scene again and the switched-to scene is a scene suitable for the capture function, for example, a macro scene shown in FIG. 12C is switched to a motion scene shown in FIG. 12D, the terminal device continues to use the capture function, captures a picture through manual capture or automatic capture, and generates a photo.

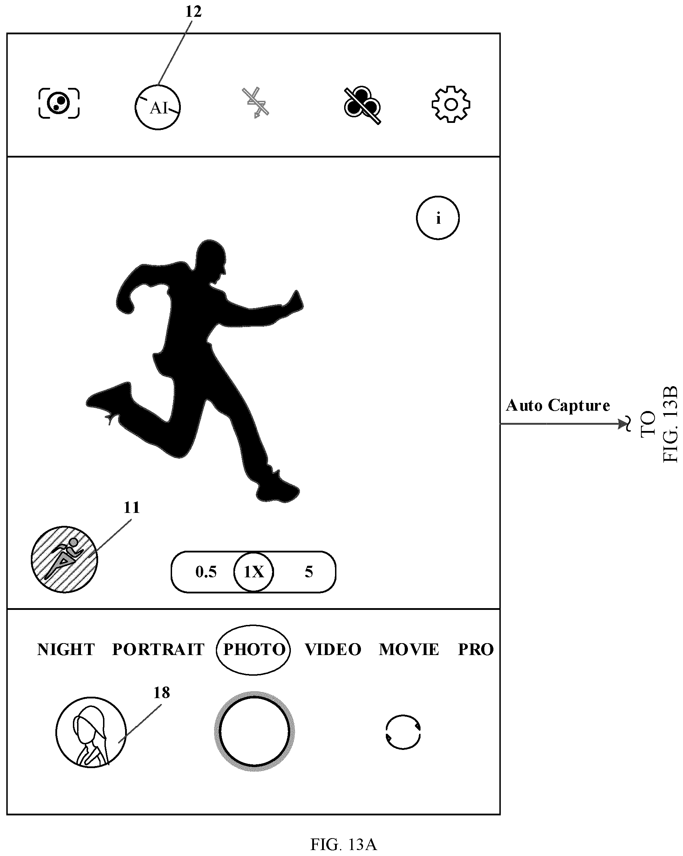

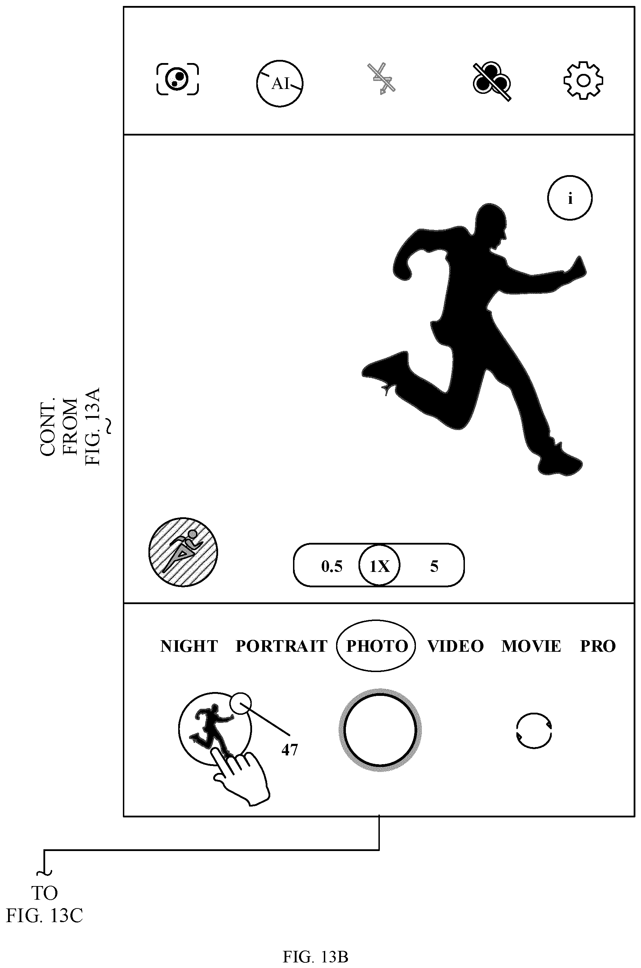

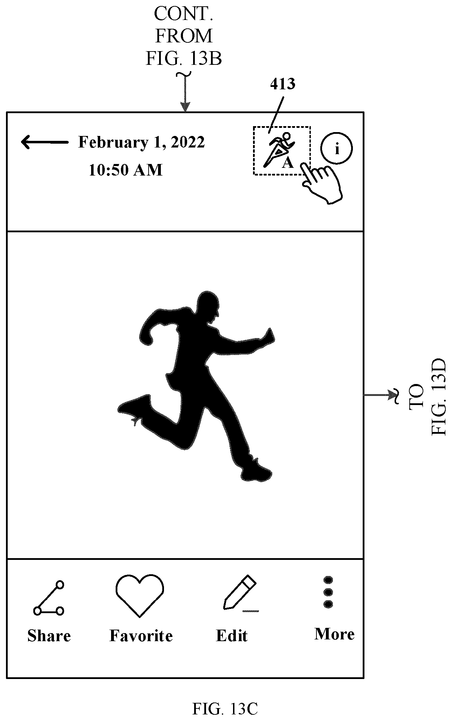

Scene 6: The terminal device views the captured photo.
1) A photographing preview interface of the camera is shown in FIG. 13A. The AI photography function is disabled and the capture function is enabled. If the terminal device enables the automatic capture function, the terminal device uses the capture function for automatic capture, captures a picture, and saves a photo.
2) In a case in which the automatic capture function is enabled, the terminal device uses the camera to perform automatic capture and capture a picture. After generation of a photo is completed, the terminal device saves the photo to an album, displays a thumbnail of the photo in the gallery preview window 18 in the photographing preview interface, as shown in FIG. 13B, and displays a specified symbol 47 in the gallery preview window 18. The specified symbol 47 indicates that the photo displayed in the gallery preview window is a photo obtained through automatic capture.
3) The user may tap the gallery preview window in the interface shown in FIG. 13B to view a large picture preview. To be specific, in response to an operation of tapping the gallery preview window shown in FIG. 13B by the user, the terminal device displays a photo in the gallery preview window in the picture display interface shown in FIG. 13C. For a photo obtained through automatic capture, the picture display interface displays an icon of "Auto Capture", for example, an icon 413 shown in FIG. 13C. The icon 413 indicates that the photo displayed in the picture display interface is a photo obtained through automatic capture.

In a case in which the capture function is enabled and the automatic capture function is enabled, or in a case in which the capture function is enabled and the automatic capture function is disabled, the terminal device uses the camera to perform manual capture, capture a picture, and generate a photo. The terminal device displays a thumbnail of the photo in the gallery preview window 18, but does not display a specified symbol 47 in the gallery preview window. Correspondingly, when the photo is displayed in the picture display interface, the icon 413 is not displayed.

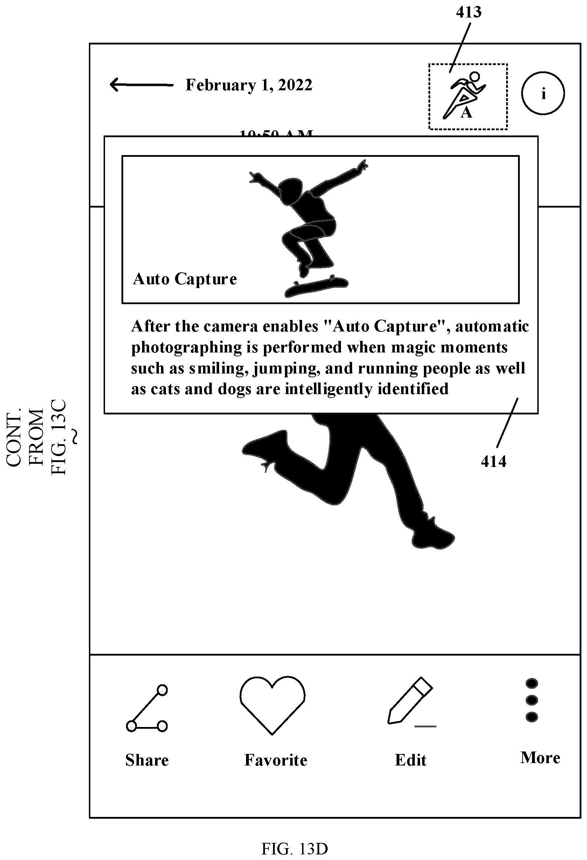

4) The user may tap the icon 413 of "Auto Capture" shown in FIG. 13C to view a pop-up window that describes an automatic capture capability. In other words, in response to that the user taps the icon 413 shown in FIG. 13C, the terminal device displays the pop-up window 414 that describes the automatic capture function. As shown in FIG. 13D, the pop-up window 414 includes text content such as "Auto Capture: After the camera enables 'Auto Capture', automatic photographing is performed when moments such as smiling, jumping, and running people as well as cats and dogs are intelligently identified". The pop-up window 414 may further include a default photo. For the default photo, refer to the default photo in the pop-up window 41 and the pop-up window 45. Description information included in the pop-up window 414 may alternatively be adjusted based on actual requirements. For example, the pop-up window 414 may include description information such as "Motion Sensing Capture: After the camera enables 'Motion Sensing Capture', automatic photographing is performed when moments such as smiling, jumping, and running people as well as cats and dogs are intelligently identified".

In this embodiment of this application, when the user taps a blank area, the pop-up window 414 disappears.

When the capture function is enabled, the user manually taps the shutter, and in response to an operation of the user, the terminal device saves a picture, but does not display the icon 413 in the album.

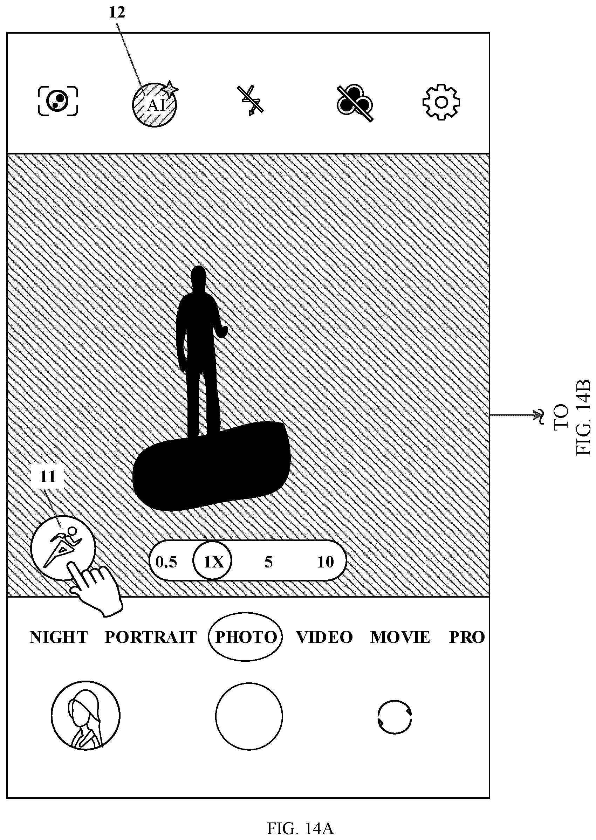

Scene 7: The terminal device displays a prompt for a scene not suitable for capture.
1) When the terminal device exits the camera or disables the camera, the terminal device memorizes a state of the camera, for example, the AI photography function is enabled and the capture function is disabled. Duration within which the terminal device retains the memorization of the camera state is specified duration, for example, 15 minutes. Within the specified duration, the terminal device starts the camera again in response to an operation of tapping the camera icon on the home screen of the terminal device by the user. In this case, the terminal device retains the camera state when the terminal device exits the camera or disables the camera last time. To be specific, the AI photography function is enabled and the capture function is disabled. For example, FIG. 14A shows a photographing preview interface in scenes not suitable for capture, such as a night scene, a dark light environment, and a highly dynamic scene.

After expiration of the specified duration, the terminal device clears the memorization of the camera state. The terminal device starts the camera again in response to an operation of tapping the camera icon on the home screen of the terminal device by the user. In this case, the terminal device uses a default camera state, for example, a state when the camera is started for the first time in the foregoing scene 1. To be specific, the AI photography function is enabled and the capture function is disabled.

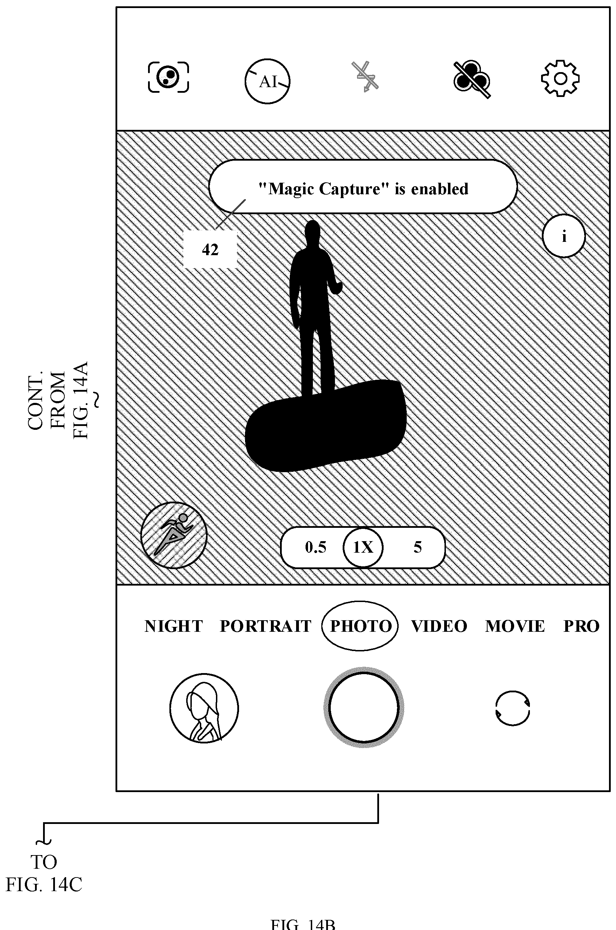

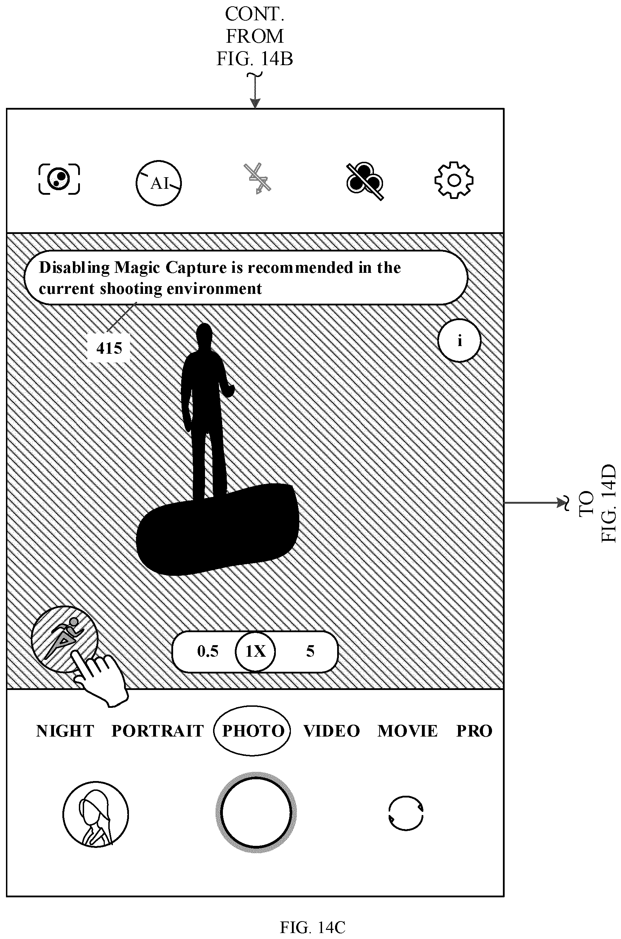

In the case of the capture function, a shutter speed is high and an exposure time is short. Therefore, in the scenes such as a night scene, a dark light environment, and a highly dynamic scene, the camera may be unable to obtain a satisfactory photo through shooting by using the capture function. Therefore, the scenes such as a night scene, a dark light environment, and a highly dynamic scene are scenes not suitable for capture.
2) The user manually taps the icon 11 of the capture function in the interface shown in FIG. 14A. The capture function is enabled and the AI photography function is disabled, that is, the icon 11 of the capture function is enabled and the icon 12 of the AI photography function is disabled. In addition, the terminal device may display a toast prompt box in a preview window, for example, a message prompt box 42 that includes text content such as "'Magic Capture' is enabled", as shown in FIG. 14B. In this case, the terminal device may intelligently identify a scene subject, and generate a photo through automatic capture or manual capture. For a rule for prompting the message prompt box 42, refer to the foregoing related description.
3) When the terminal device detects the scene and determines that the current scene is a scene not suitable for capture, such as a night scene, a dark light environment, or a highly dynamic scene, the terminal device displays a toast prompt box in a preview window, for example, a message prompt box 415 that includes text content such as "Disabling Magic Capture is recommended in the current shooting environment", as shown in FIG. 14C, to prompt the user to disable the capture function and switch the photographing mode to obtain a high-quality photo. Description information included in the message prompt box 415 may alternatively be adjusted based on actual requirements. For example, the message prompt box 415 may include description information such as "The current shooting environment is not suitable for the current photographing mode".

In this embodiment of this application, a rule for displaying the message prompt box 415 may be as follows: In the current scene not suitable for capture, the message prompt box 415 does not disappear until a picture scene displayed in the preview window is a scene suitable for capture.

The rule for displaying the message prompt box 415 may alternatively be implemented in the following two manners:
Manner 1: For identification of the scene, a quantity of times of displaying the message prompt box 415 is less than a preset quantity of times, for example, five times. After the message prompt box 415 is displayed five times, the message prompt box 415 is no longer prompted, preventing repeated reminders from affecting user experience.

Herein, in the process dimension, within one lifecycle after the camera is started, the terminal device may display the message prompt box 415 of specified duration at a specified time interval, and the message prompt box 415 is displayed for a maximum of five times.

Manner 2: For the scene not suitable for capture, the message prompt box 415 is displayed in a resident manner without limitation on the quantity of times, that is, the message prompt box 415 is displayed each time the shooting scene is switched to a scene not suitable for capture. This may improve a shooting effect.

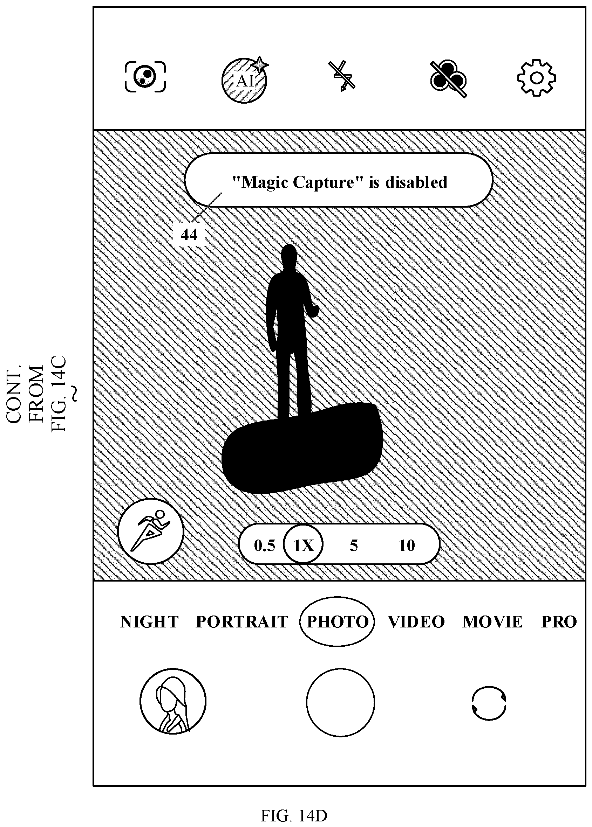

4) Based on the message prompt box 415, the user taps the icon 11 of the capture function in the photographing preview interface shown in FIG. 14C. The terminal device disables the capture function in response to an operation of the user, and enables the AI photography function based on a memorized user selection. In addition, the terminal device may display a toast prompt box in a preview window, for example, a message prompt box 44 that includes "'Magic Capture' is disabled", as shown in FIG. 14D. For a rule for prompting the message prompt box 44, refer to the foregoing related description.

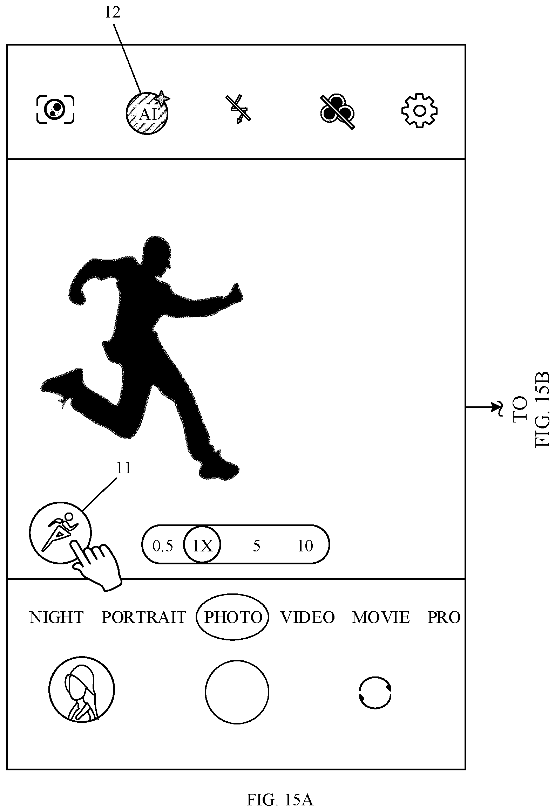

Scene 8: The terminal device automatically disables the capture function when switching from a scene suitable for capture to a scene not suitable for capture. The scene suitable for capture is a scene in which ambient luminance is greater than a preset luminance threshold, and may also be referred to as a normal light environment.
1) When the terminal device exits the camera or disables the camera, the terminal device memorizes a state of the camera, for example, the AI photography function is enabled and the capture function is disabled. Duration within which the terminal device retains the memorization of the camera state is specified duration, for example, 15 minutes. Within the specified duration, the terminal device starts the camera again in response to an operation of tapping the camera icon on the home screen of the terminal device by the user. In this case, the terminal device retains the camera state when the terminal device exits the camera or disables the camera last time. To be specific, the AI photography function is enabled and the capture function is disabled. For example, FIG. 15A shows a photographing preview interface in scenes not suitable for capture, such as a night scene, a dark light environment, and a highly dynamic scene.

After expiration of the specified duration, the terminal device clears the memorization of the camera state. The terminal device starts the camera again in response to an operation of tapping the camera icon on the home screen of the terminal device by the user. In this case, the terminal device uses a default camera state, for example, a state when the camera is started for the first time in the foregoing scene 1. To be specific, the AI photography function is enabled and the capture function is disabled.

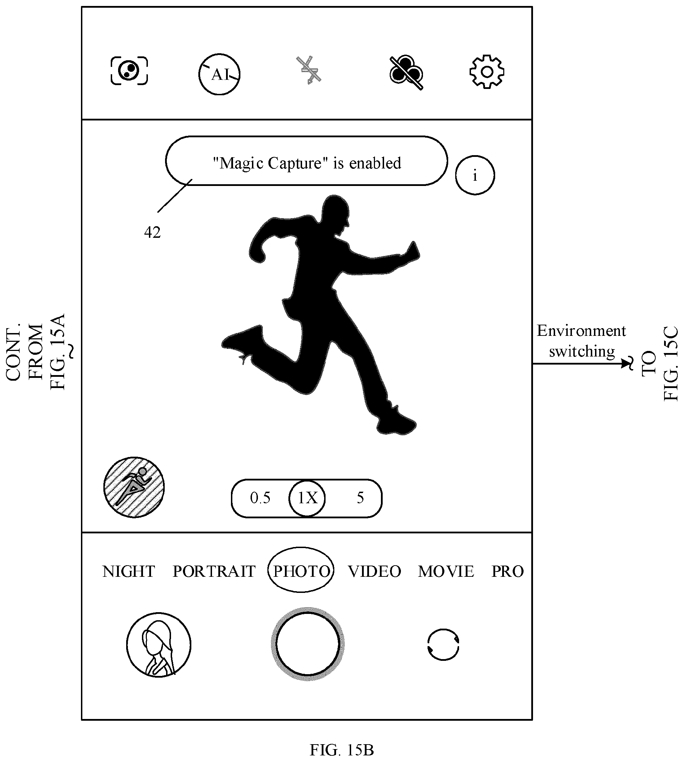

2) The user manually taps the icon 11 of the capture function in the interface shown in FIG. 15A. The terminal device enables the capture function and disables the AI photography function. In addition, the terminal device may display a toast prompt box in a preview window, for example, a message prompt box 42 that includes "'Magic Capture' is enabled", as shown in FIG. 15B. In this case, the terminal device may intelligently identify a scene subject, and generate a photo through automatic capture or manual capture. For a rule for prompting the message prompt box 42, refer to the foregoing related description.

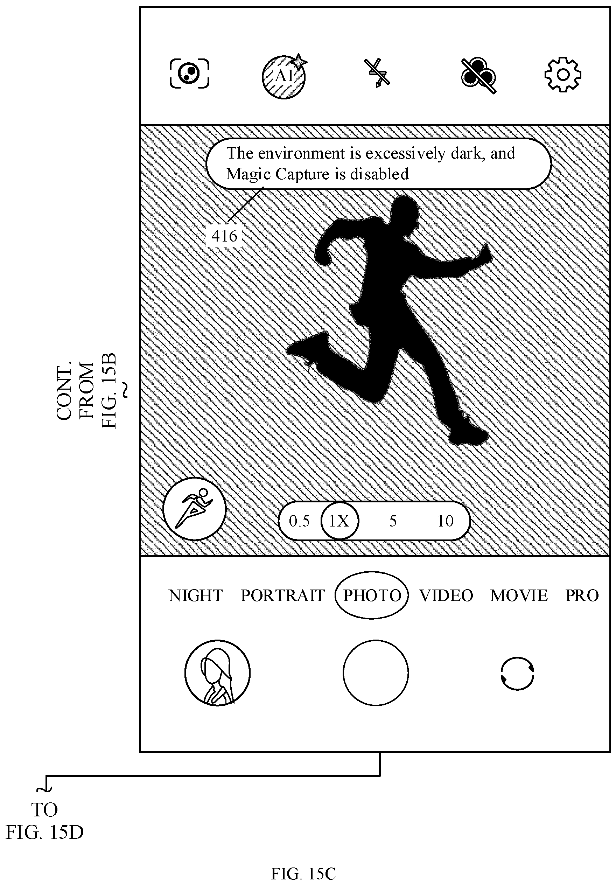

3) When the user environment is switched from the normal light environment shown in FIG. 15B to a scene not suitable for capture, such as a night scene, a dark light environment, or a highly dynamic scene shown in FIG. 15C, the terminal device automatically disables the capture function, enables the AI photography function, and displays a toast prompt box in a preview window, for example, a message prompt box 416 that includes "The environment is excessively dark, and Magic Capture is disabled", as shown in FIG. 15C. This ensures quality of photographing, and ensures security of user information.

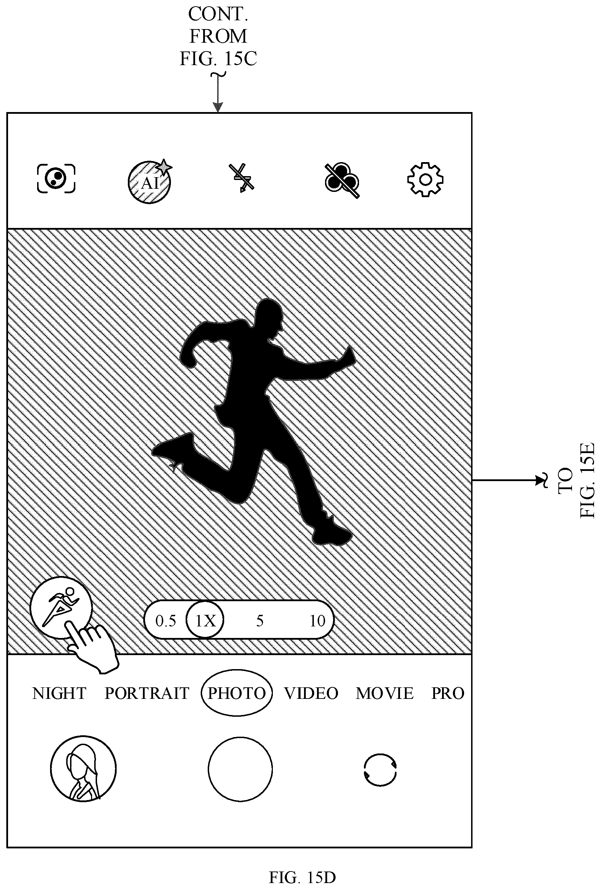

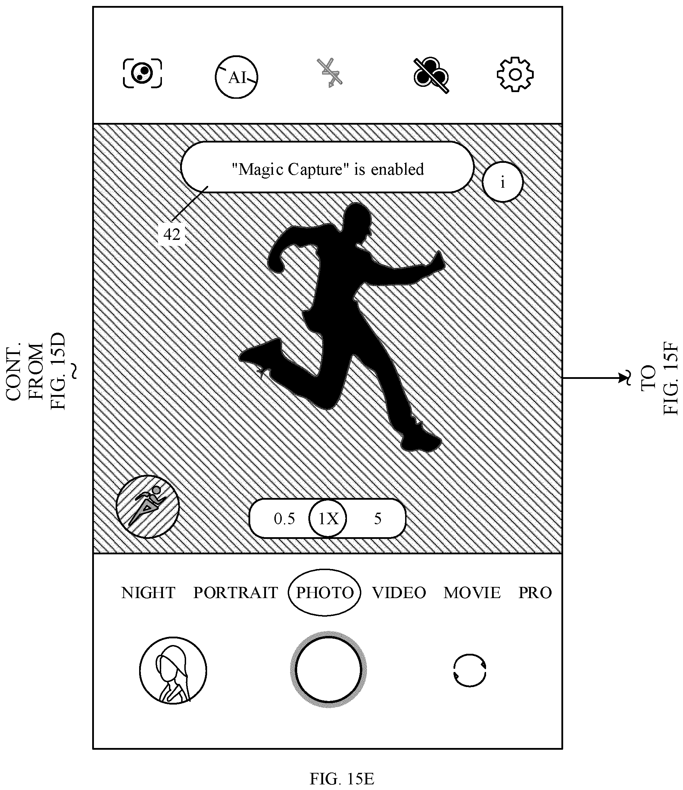

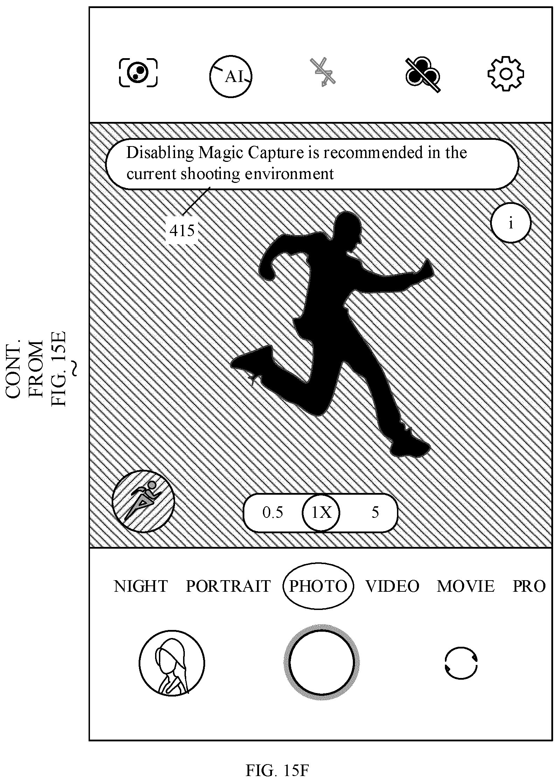

The message prompt box 416 disappears after being displayed for specified duration (for example, 5 seconds). In a process dimension, within one lifecycle after the camera is started, the message prompt box 416 is displayed each time the terminal device is in the environment switching scene described in 3).
4) After exiting the capture function, the terminal device uses the AI photography function for photographing, that is, resumes the normal photographing mode.
5) After switching from the scene shown in FIG. 15B to the scene shown in FIG. 15C, and exiting the capture function, the terminal device is always in a scene not suitable for capture, such as a night scene, a dark light environment, or a highly dynamic scene, as shown in FIG. 15D, but the user may actively enable the capture function again, that is, the user taps the icon 11 of the capture function in the interface shown in FIG. 15D. The terminal device enables the capture function and disables the AI photography function. In addition, the terminal device may display a toast prompt box in a preview window, for example, a message prompt box 42 that includes "'Magic Capture' is enabled", as shown in FIG. 15E. In this case, the terminal device may intelligently identify a scene subject, and generate a photo through automatic capture or manual capture. For a rule for prompting the message prompt box 42, refer to the foregoing related description.
6) When the terminal device detects the scene and determines that the current scene is a scene not suitable for capture, such as a night scene, a dark light environment, or a highly dynamic scene, that is, the terminal device is continuously located in the scene not suitable for capture, the terminal device displays a toast prompt box in a preview window, for example, a message prompt box 415 that includes "Disabling capture is recommended in the current shooting environment", as shown in FIG. 15F, to prompt the user to switch the photographing mode to obtain a high-quality photo.

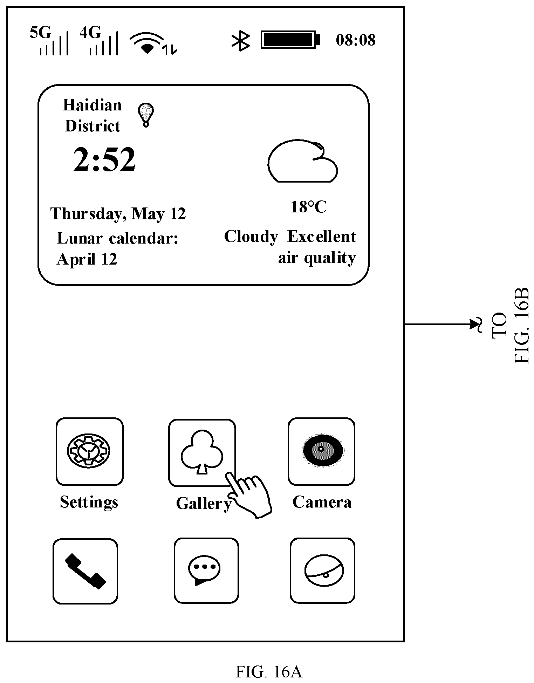

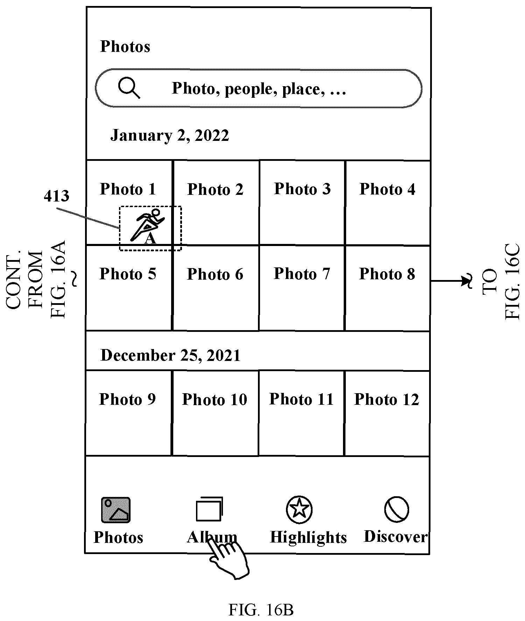

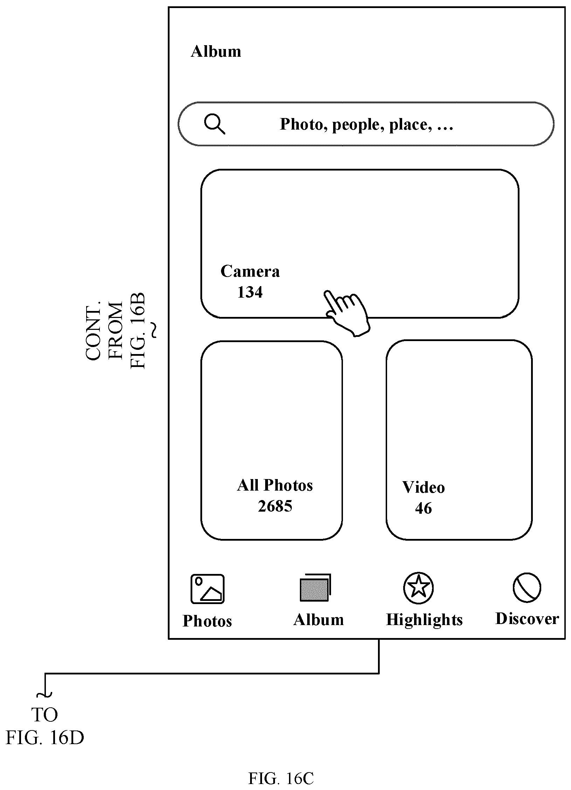

Scene 9: The terminal device displays a photo in a gallery.
1) The user taps a gallery icon on the home screen shown in FIG. 16A, and in response to an operation of the user, the terminal device opens the gallery, as shown in FIG. 16B. The user browses photos in the gallery, where a photo obtained through automatic capture carries an icon 413 of "Auto Capture", and a photo obtained through manual capture and a photo obtained in another photographing mode do not carry the icon 413 of "Auto Capture".
2) The user taps an album icon in FIG. 16B, and in response to an operation of the user, the terminal device opens the album, for example, an album interface shown in FIG. 16C. The photo obtained through automatic capture is stored together with all other photos, and is not separately stored in a single classification folder.

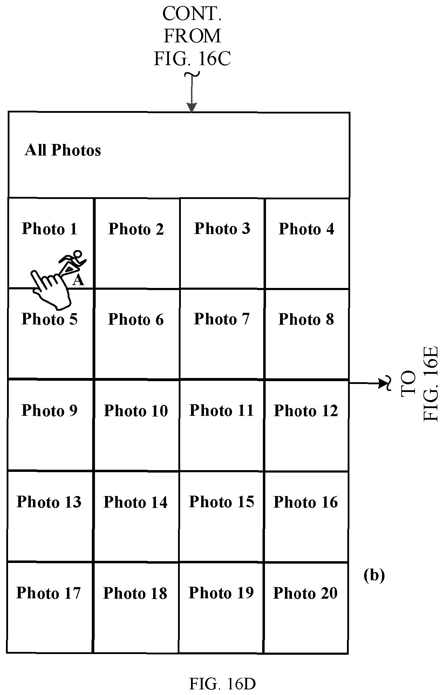

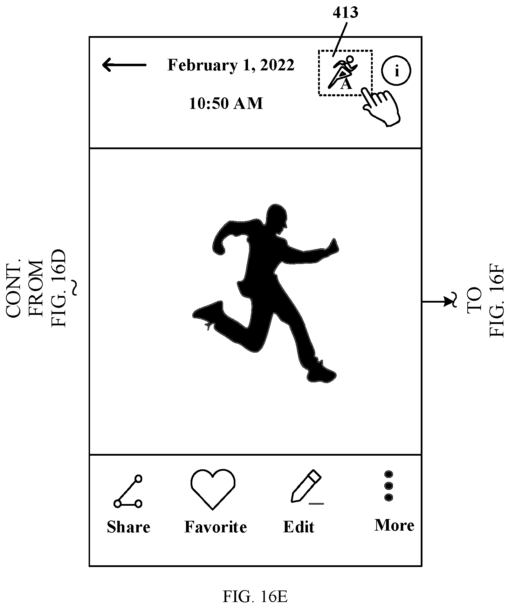

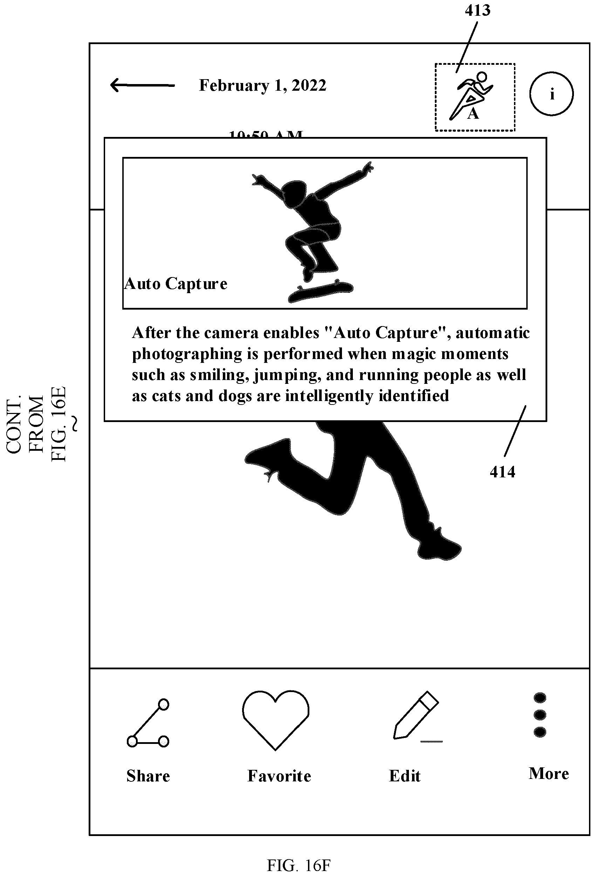

The user may tap an album of "Camera" in the album interface shown in FIG. 16C to view all photos shot by the terminal device. To be specific, in response to an operation of tapping the album of "Camera" shown in FIG. 16C by the user, the terminal device displays the photos corresponding to the album of "Camera", as shown in FIG. 16D.
3) As shown in FIG. 16D, the photo obtained through automatic capture carries the icon 413 of "Auto Capture".
4) The user may tap a photo that carries the icon 413 shown in FIG. 16D to view a large picture preview. In other words, the terminal device displays the photo in the picture display interface, as shown in FIG. 16E. For the photo obtained through automatic capture, the picture display interface displays the icon 413 of "Auto Capture", as shown in FIG. 16E.
5) The user may tap the icon 413 of "Auto Capture" to view a pop-up window that describes an automatic capture capability, for example, a pop-up window 414 that includes "Auto Capture: After the camera enables 'Auto Capture', automatic photographing is performed when moments such as smiling, jumping, and running people as well as cats and dogs are intelligently identified", as shown in FIG. 16F. The pop-up window 414 may further include a default photo. When the user taps a blank area, the pop-up window 414 disappears. In this embodiment of this application, information in the pop-up window that describes the automatic capture capability may be a fixed material, so as to simplify complexity of camera display.

In some embodiments, when the user taps an album of "All Photos" shown in FIG. 16C, in response to the tap operation of the user, the terminal device displays photos corresponding to the album of "All Photos". The icon 413 shown in FIG. 16D is displayed on a photo saved by the terminal device by using the automatic capture function (namely, the photo obtained through automatic capture). Similarly, the user may tap a photo that carries the icon 413 shown in FIG. 16D to view a large picture preview. In other words, the picture display interface displays the photo, as shown in FIG. 16E. For the photo obtained by using the automatic capture function, the picture display interface displays the icon 413 of "Auto Capture", as shown in FIG. 16E.

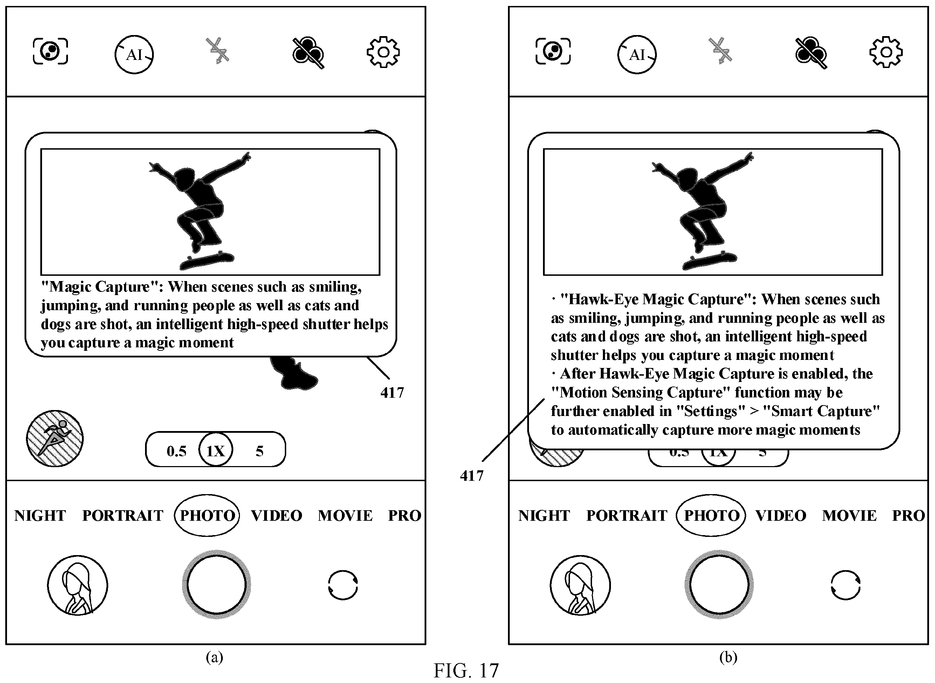

In this embodiment of this application, to help the user understand the capture function in real time, in a case in which the capture function is enabled, a small i description icon 112 is displayed in the upper right corner of the preview window. The user taps the small i description icon to display the pop-up window that describes the capture function, for example, a pop-up window 417 that includes "Magic Capture: When scenes such as smiling, jumping, and running people as well as cats and dogs are shot, an intelligent high-speed shutter helps you capture a magic moment", as shown in (a) in FIG. 17.

When the user taps a blank area, the pop-up window 417 corresponding to the small i description icon disappears. Text content included in the pop-up window 417 may be set based on actual requirements. For example, as shown in (b) in FIG. 17, the pop-up window 417 may include description information such as "'Hawk-Eye Magic Capture': When scenes such as smiling, jumping, and running people as well as cats and dogs are shot, an intelligent high-speed shutter helps you capture a magic moment. After Hawk-Eye Magic Capture is enabled, the 'Motion Sensing Capture' function may be further enabled in 'Settings' > 'Smart Capture' to automatically capture more magic moments". For another example, the text content included in the pop-up window 417 may alternatively be as follows: "Magic Capture: supports an intelligent high-speed shutter and helps you capture a magic moment; enable "Auto Capture": When actions such as cats, dogs, or smiling, jumping, and running people are identified, a photo at a magic moment may be automatically captured".

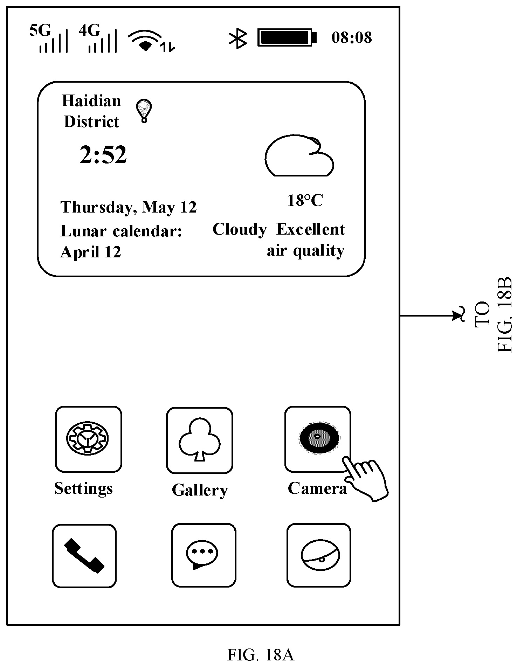

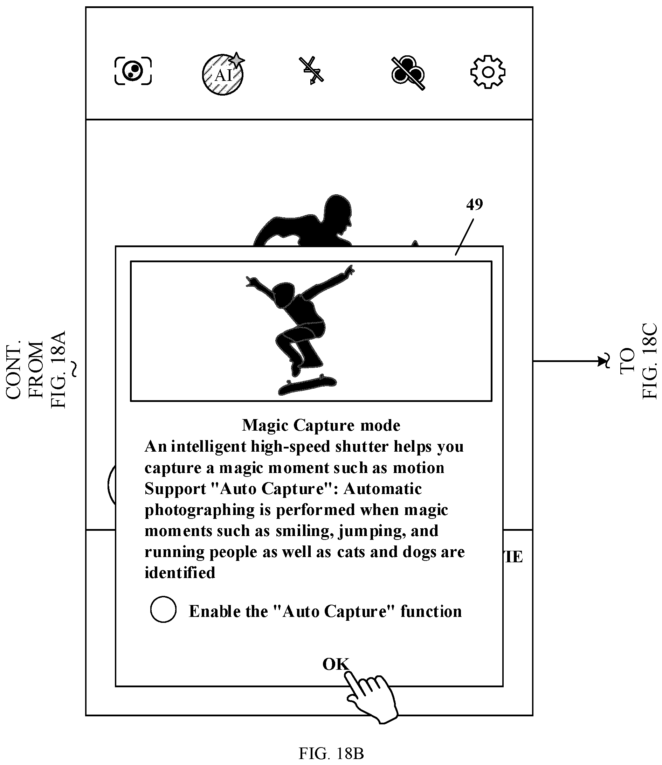

In this embodiment of this application, the terminal device may enable the automatic capture function in the manner shown in scene 2, or may enable the automatic capture function in another manner. In some embodiments, the terminal device may display a pop-up window 49 in the photographing preview interface when the camera is used for the first time, to prompt the user to enable the automatic capture function. Examples are as follows:
1) A display of the terminal device displays the home screen, as shown in FIG. 18A. In response to an operation of tapping a camera icon on the home screen by the user, the terminal device starts the camera and displays a photographing preview interface of the camera.
2) When the camera is used for the first time, the photographing preview interface is shown in FIG. 18B. The photographing preview interface displays a pop-up window 49. The pop-up window 49 includes a default photo, a text that describes the capture function and the automatic capture function, and a function option. The pop-up window 49 shown in FIG. 18B includes the text that describes the capture function and the automatic capture function, such as "Capture function; an intelligent high-speed shutter helps you capture a moment such as motion. Support 'Auto Capture': Automatic photographing is performed when moments such as smiling, jumping, and running people as well as cats and dogs are identified", and an "Enable the 'Auto Capture' function" option and an "OK" option. The user selects the "Enable the 'Auto Capture' function" option or deselects the "Enable the 'Auto Capture' function" option, and then taps the "OK" option in the pop-up window 49. The user selects the "Enable the 'Auto Capture' function" option and then taps the "OK" option in the pop-up window 49. The "Auto Capture" switching item of the "Smart Capture" setting item in the terminal device is enabled synchronously. After enabling the capture function, the terminal device may generate a photo through automatic capture. The user deselects the "Enable the 'Auto Capture' function" option and then taps the "OK" option in the pop-up window 49. The "Auto Capture" switching item of the "Smart Capture" setting item in the terminal device is disabled synchronously. After enabling the capture function, the terminal device may generate a photo only through manual capture.

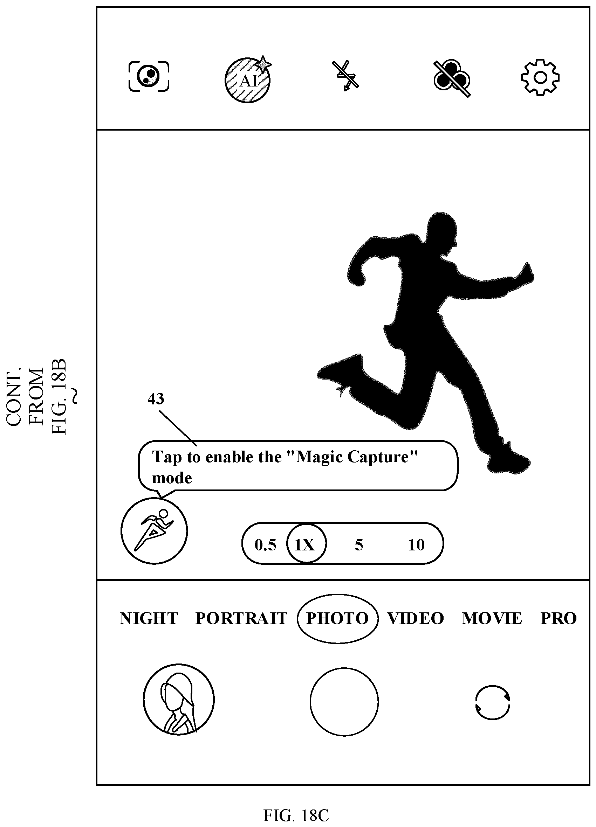

After the user taps the "OK" option in the pop-up window 49, in response to the tap operation of the user, the terminal device displays a bubble 43 that prompts the user to enable the capture function, as shown in FIG. 18C. Based on the bubble 43, after the user taps the icon of the capture function, if the user selects the "Enable the 'Auto Capture' function" option in the pop-up window 49, the terminal device generates a photo through automatic capture. If the user deselects the "Enable the 'Auto Capture' function" option in the pop-up window 49, the terminal device generates a photo through manual capture.

An embodiment of this application further provides a capture apparatus. The apparatus includes a unit configured to perform the foregoing capture method. The apparatus may correspondingly perform the capture method described above. For related description of the unit in the apparatus, refer to the description of the foregoing capture method. For brevity, details are not described herein again.

The foregoing capture method may be implemented by hardware, or may be implemented by executing corresponding software by hardware. The hardware or the software includes one or more modules or units corresponding to the foregoing functions, for example, an image collection module or unit or a processing module or unit.

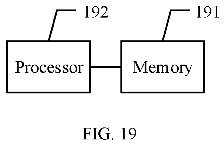

With reference to FIG. 19, an embodiment of this application further provides a terminal device, including:
a memory 191, configured to store instructions to be executed by one or more processors of the device; and
a processor 192, configured to execute the instructions stored in the memory 191, so that the terminal device performs any capture method performed by the terminal device shown in FIG. 3A-FIG. 18.

An embodiment of this application further provides a computer-readable storage medium. The computer-readable storage medium stores a computer program, and the computer program, when run on a terminal device, enables the terminal device to perform any capture method performed by the terminal device shown in FIG. 3A-FIG.18.

An embodiment of this application further provides a computer program product that includes instructions. When the computer program product runs on a terminal device, the terminal device is enabled to perform any capture method performed by the terminal device shown in FIG. 3A-FIG.18.

Embodiments of mechanisms disclosed in this application may be implemented in hardware, software, firmware, or a combination of these implementation methods. The embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to an input instruction to perform various functions described in this application and generate output information. The output information may be applied to one or more output devices in a known manner. For the purpose of this application, the processing system includes any system having a processor such as a digital signal processor (Digital Signal Processor, DSP), a microcontroller, an application specific integrated circuit (Application Specific Integrated Circuit, ASIC), or a microprocessor.

The program code may be implemented by using an advanced programming language or an objectoriented programming language, to communicate with the processing system. When required, the program code may alternatively be implemented by using an assembly language or a machine language. In fact, the mechanisms described in this application are not limited to a scope of any specific programming language. In any case, the language may be a compilation language or an interpretation language.

In some cases, the disclosed embodiments may be implemented by hardware, firmware, software, or any combination thereof. The disclosed embodiments may alternatively be implemented as instructions carried or stored on one or more transitory or non-transitory machine-readable (for example, computer-readable) storage media, and the instructions may be read and executed by one or more processors. For example, the instructions may be distributed by using a network or another computer-readable medium. Therefore, the machine-readable medium may include any mechanism used to store or transmit information in a machine (for example, computer) readable form, including but not limited to a floppy disk, an optical disk, an optical disc, a compact disc read-only memory (Compact Disc Read Only Memory, CD-ROMs), a magneto-optical disk, a read-only memory (Read Only Memory, ROM), a random access memory (RAM), an erasable programmable read-only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory configured to transmit information (such as a carrier, an infrared signal, and a digital signal) via the Internet in electrical, optical, or acoustic form or another form of propagation signal. Therefore, the machine-readable medium includes any type of machine-readable medium suitable for storing or transmitting electronic instructions or information in the machine (for example, computer) readable form.

In the accompanying drawings, some structure or method features may be shown in a particular arrangement and/or order. However, it should be understood that such specific arrangement and/or sorting may not be required. Instead, in some embodiments, these features may be arranged in a manner and/or order different from that shown in the accompanying drawings of the specification. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. A capture method, wherein the method comprises:
displaying a photographing preview interface in a photographing mode of a camera, wherein the photographing preview interface displays a first icon, and the first icon is in a disabled state;
saving, to a gallery in response to an operation performed by a user on a shooting button at a first moment, a first image frame captured at the first moment;
enabling a first function in response to an operation performed by the user on the first icon, and switching the first icon from the disabled state to an enabled state;
displaying, in the photographing preview interface, a second image frame captured in real time at a second moment; and
saving the second image frame to the gallery in response to an operation performed by the user on the shooting button at a third moment, wherein the second moment is earlier than the third moment.

2. The method according to claim 1, wherein the method further comprises:
saving a third image frame to the gallery in response to an operation performed by the user on the shooting button at a fourth moment, wherein a fifth moment at which the third image frame is captured is later than the fourth moment.

3. The method according to claim 1 or 2, wherein a first setting item of the camera is a disabled state.

4. The method according to claim 3, wherein the method further comprises:
when the first setting item of the camera is an enabled state, in a case of detecting that a real-time image frame displayed in the photographing preview interface undergoes a transition, automatically saving a fourth image frame to the gallery, wherein a moment at which the fourth image frame is captured is earlier than a moment at which the transition occurs.

5. The method according to claim 1 or 2, wherein the second image frame is an image with a highest comprehensive score among a plurality of image frames in a first time period before the third moment and a plurality of image frames in a second time period after the third moment; and/or
the third image frame is an image with a highest comprehensive score among a plurality of image frames in a first time period before the fourth moment and a plurality of image frames in a second time period after the fourth moment, wherein
the comprehensive score comprises an image quality score, a portrait score, and an action score.

6. The method according to claim 5, wherein a length of the first time period is 1 second, and a length of the second time period is 0.5 second.

7. The method according to any one of claims 1-6, wherein the photographing preview interface further comprises a fourth icon, and
the method further comprises:
when the fourth icon is in an enabled state and the first icon is in the disabled state, in response to the operation performed by the user on the first icon, switching the first icon from the disabled state to the enabled state and enabling the first function, and switching the fourth icon from the enabled state to a disabled state and disabling a second function; and
in response to the operation performed by the user on the first icon, switching the first icon from the enabled state to the disabled state and disabling the first function, and switching the fourth icon from the disabled state to the enabled state and enabling the second function.

8. The method according to any one of claims 1-6, wherein the photographing preview interface further comprises a fourth icon, and
the method further comprises:
when the first icon is in the enabled state and the fourth icon is in a disabled state, in response to an operation performed by the user on the fourth icon, switching the fourth icon from the disabled state to an enabled state and enabling a second function, and switching the first icon from the enabled state to the disabled state and disabling the first function; and
in response to the operation performed by the user on the fourth icon, switching the fourth icon from the enabled state to the disabled state and disabling the second function, and switching the first icon from the disabled state to the enabled state and enabling the first function.

9. The method according to any one of claims 1-6, wherein the photographing preview interface further comprises a fifth icon; before the first function is enabled, the fifth icon is in a first state; the first state is any one of the following: a flash is enabled, the flash is disabled, the flash is automatic, or the flash is constantly on; and
the method further comprises:
in response to the operation performed by the user on the first icon, switching the first icon from the disabled state to the enabled state and enabling the first function, and displaying the fifth icon as an inoperable state and disabling the flash.

10. The method according to claim 9, wherein the method further comprises:
in response to the operation performed by the user on the first icon, switching the first icon from the enabled state to the disabled state and disabling the first function, and restoring the fifth icon to the first state.

11. The method according to any one of claims 1-10, wherein the method further comprises:
when the first icon is in the enabled state, if a shooting scene of the camera enters a scene of second ambient light luminance from first ambient light luminance, disabling the first function and switching the first icon from the enabled state to the disabled state, wherein the first ambient light luminance is greater than the second ambient light luminance.

12. The method according to any one of claims 1-11, wherein the method further comprises:
when ambient light luminance of the shooting scene of the camera is less than third ambient light luminance, and the first icon is in the disabled state, in response to the operation performed by the user on the first icon, enabling the first function, switching the first icon from the disabled state to the enabled state, and displaying sixth information in a pop-up box, wherein the sixth information is used to prompt that a current shooting scene is not suitable for enabling a capture function.

13. The method according to claim 4, wherein the method further comprises:
displaying a thumbnail of the fourth image frame in a gallery preview window in the photographing preview interface when the fourth image frame is automatically saved to the gallery, wherein the gallery preview window carries a first symbol.

14. The method according to claim 13, wherein the method further comprises:
displaying a first image interface in response to an operation performed by the user on the gallery preview window in the photographing preview interface, wherein the first image interface comprises the fourth image frame and a third icon.

15. The method according to claim 14, wherein the method further comprises:
displaying a third card in the first image interface in response to an operation performed by the user on the third icon.

16. The method according to any one of claims 1-10, wherein the method further comprises:
when the first icon is in the enabled state, if a shooting scene of the camera is a macro scene, enabling a third function; and
in response to an operation performed by the user on the shooting icon at a sixth moment, saving a fifth image frame captured at the sixth moment to the gallery.

17. The method according to claim 4, wherein when the first function is enabled and the first setting item of the camera is the enabled state, an execution priority of a function of manually saving an image frame is higher than an execution priority of a function of automatically saving an image frame, and the function of automatically saving an image frame is stopped during execution of the function of manually saving an image frame.

18. A terminal device, comprising:
a memory, configured to store instructions to be executed by one or more processors of the device; and
a processor, configured to execute the instructions, to enable the terminal device to perform the method according to any one of claims 1-17.

19. A computer-readable storage medium, wherein the computer-readable storage medium stores a computer program, and when the computer program is run by a terminal device, the terminal device is enabled to perform the method according to any one of claims 1-17.
